# EUROPEAN PATENT APPLICATION

(11) **EP 1 681 174 A1**
(43) Date of publication of application: **19.07.2006**
(21) Application number: 04791722.4
(22) Date of filing: 21.10.2004
(51) Int. Cl.: B41M 5/28, B41M 5/30, B41M 5/34

(54) **DISPERSION COMPOSITION AND RECORDING MATERIAL**

(30) Priority: 23.10.2003 JP 2003363579
(71) Applicant: Chemipro Kasei Kaisha, Ltd., Hyogo (JP)
(72) Inventor: NAGASAWA, Toshiaki, Kawasaki-shi Kanagawa 211-0063 (JP); TOMITA, Shinobu, Yokohama-shi Kanagawa 233-0011 (JP); KONO, Tetsushi, Fuji-shi Shizuoka 416-0933 (JP)
(74) Representative: Strehl Schübel-Hopf & Partner
(86) International application number: PCT/IB2004/003437
(87) International publication number: WO 2005/042263

(57) **Abstract**

A dispersion composition containing a urea-urethane (UU) compound as (a) component, and one or more types of coloring inhibitors selected from among a silicate, a carbonate, a sulfate, a phosphate, a metal oxide, a metal hydroxide, a hindered phenol compound, a hindered amine compound and an acetoacetic acid derivative as (b) component, **characterized in that** one of more components selected from (a) component and (b) component is subjected to a heating treatment, or a developer UU dispersion prepared by using a cellulose derivative and a specific anionic surfactant as a dispersant for the developer UU is subjected to a heating treatment. The above dispersion composition containing a urea-urethane compound allows the improvement of the phenomenon of the lowering with time of the whiteness of an application fluid containing a colorless or pale dye precursor and a urea-urethane compound, and also allow the improvement of the discoloration of a white portion, in particular, the discoloration under a high humidity condition (the resistance to wet discoloration of a white portion] of a thermal recording material manufactured by the use of said application fluid.

## Description

### TECHNICAL FIELD

The present invention relates to a dispersion composition comprising a urea-urethane compound which is used in the preparation of a thermal color developing application fluid comprising a colorless or pale dye precursor and an (a) urea-urethane compound.

### BACKGROUND ART

A large number of chemical color development systems which utilize recording energy such as heat, pressure or the like have been conventionally known. Among them, color development systems usually composed of a two-component color development system consisting of a colorless or pale dye precursor and a developer which produces color on contact with the dye precursor have been known since early times. Typical examples include pressure-sensitive recording materials which utilize pressure energy, heat-sensitive recording materials which utilize heat energy, and light-sensitive recording materials which utilize light energy.

In recent years, the use of a heat-sensitive recording method in which recording takes place by means of heat energy has become common in various information machines such as facsimiles, printers, recorders and the like. Heat-sensitive recording materials used in a heat-sensitive recording method possess many excellent characteristics such as a high whiteness, an external appearance and feel similar to that of ordinary paper, and a good aptitude for recording, for example, having a high coloring-development sensitivity. In addition, a heat-sensitive recording method is advantageous, for example, in that its apparatus is small, requires no maintenance and produces no noise. Therefore, uses for the heat-sensitive recording method have expanded to include a broad range of fields, such as, for instance, recording meters used in measuring, facsimiles, printers, computer terminals, labels, and automatic vending machines for railroad tickets or the like. Using a colorless or pale, electron-donating dye precursor (in particular, a leuco dye) and an acidic developer such as a phenolic compound as the color-producing composition means that the electron-donating compound serving as the dye precursor is highly reactive, which allows a color-developed image having high density to be attained instantaneously when contacted with the developer that is an electron acceptor. However, as a consequence, because chemical resistance deteriorates in the recorded potion of the obtained color-developed image, the recording is susceptible to disappearing if brought into contact with a plasticizer contained in plastic sheets or erasers, or with the chemicals contained in foodstuffs or cosmetics. Furthermore, since light resistance is also degraded, there are also drawbacks concerning the poor shelf life of the recording, such as the recording fading or even disappearing from a comparatively short period of sunlight exposure.

To respond to these needs, urea-urethane compound developers (hereinafter referred to as "developer UU") have been proposed (e.g. Patent Document 1). While such a developer UU has excellent image preservability, its sensitivity is inadequate, so that for uses requiring high sensitivity, such a developer UU has been necessarily used in combination with a high sensitivity general-purpose developer such as 2,2-bis(4-hydroxyphenyl)propane (hereinafter referred to as BPA), bis(4-hydroxyphenyl)sulfone (hereinafter referred to as BPS), 4-isopropyloxyphenyl-4'-hydroxyphenylsulfone (hereinafter referred to as D-8), or 2,4'-dihydroxydiphenylsulfone (hereinafter referred to as 2,4'-BPS) and the like.

However, application fluids used for a thermal recording material which comprise a colorless or pale dye precursor and a developer UU suffer from lowering in whiteness as a result of coloring over time (liquid discoloration), coloring of the thermal recording paper white-portions manufactured by applying such an application fluid (discoloration of a white portion), and coloring the white-portions of the thermal recording paper which occurs when storing thermal recording paper under high-humidity conditions (resistance to wet discoloration of a white portion). Further, there is the problem that liquid discoloration and resistance to wet discoloration of a white portion become even more marked if used in combination with D-8 or other such high sensitivity general-purpose developer.
[Patent Document 1] International Publication WO 00/14058 (EP1116713A1)

### DISCLOSURE OF THE INVENTION

It is an object of the present invention to provide a developer UU-containing dispersion composition used for thermal recording materials, which can improve the lowering with time of the whiteness (liquid discoloration) of an application fluid for thermal recording materials containing a colorless or pale dye precursor and the developer UU compound, improve the white-portion coloring (discoloration of a white portion) of a thermal recording paper manufactured by applying the above described application fluid, and improve the white-portion coloring (resistance to wet discoloration of a white portion) of the thermal recording paper that occurs when the thermal recording paper is stored under a high humidity condition, and which has excellent printing sensitivity.

As a result of extensive studies to solve the above-described problems, the present inventors have found that the above-described objects can be achieved by subjecting at least one component dispersion constituting a dispersion composition which comprises an component (a) urea-urethane compound and a component (b) coloring inhibitor (e.g. a silicate, a carbonate, a sulfate, a phosphate, a metal oxide, a metal hydroxide, a hindered phenol compound, a hindered amine compound, an acetoacetic acid derivative and the like) to heat treatment, or, by subjecting a developer UU dispersion prepared by using a cellulose derivative and a specific anionic surfactant as a dispersant for the developer UU to heat treatment. The invention has been completed based on this finding.

Specifically, the present invention provides a composition comprising a component (a) comprising at least one compound having one or more urea groups and one or more urethane groups in the same molecule, the component (a) being dispersed in a liquid medium and subjected to heat treatment.

The present invention also provides a composition wherein the component (a) urea-urethane compound is at least one compound represented by any of the following formulas (I) to (VI): 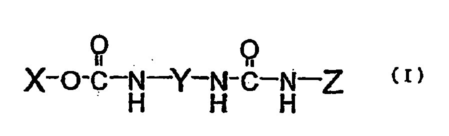 wherein each of X, Y, and Z represents an aromatic compound residue, a heterocyclic compound residue, or an aliphatic compound residue; and each residue may have a substituent; 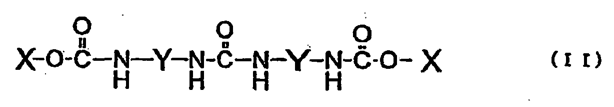 wherein each of X and Y represents an aromatic compound residue, a heterocyclic compound residue, or an aliphatic compound residue; and each residue may have a substituent; 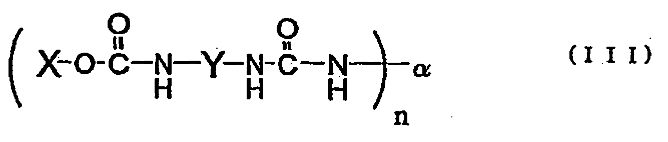 wherein each of X and Y represents an aromatic compound residue, a heterocyclic compound residue, or an aliphatic compound residue, α represents a residue having a valence of 2 or greater, n represents an integer of 2 or greater, and each residue may have a substituent; 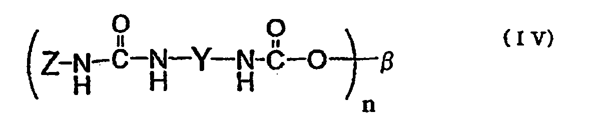 wherein each of Z and Y represents an aromatic compound residue, a heterocyclic compound residue, or an aliphatic compound residue, β represents a residue having a valence of 2 or greater, n represents an integer of 2 or greater, and each residue may have a substituent; 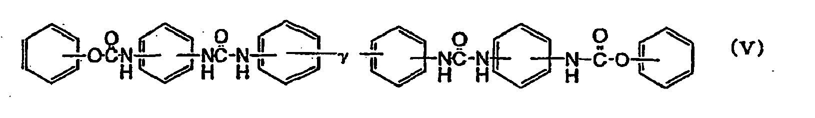 wherein a hydrogen atom a benzene ring may be substituted with an aromatic compound residue, a heterocyclic compound residue, or an aliphatic compound residue, each residue may have a substituent, γ represents any of -SO₂-, -O-, -(S)ₙ-, -(CH₂)ₙ-, -CO-, -CONH-, and below formula (a), or nothing present (i.e. a direct bond), and n is 1 or 2; and 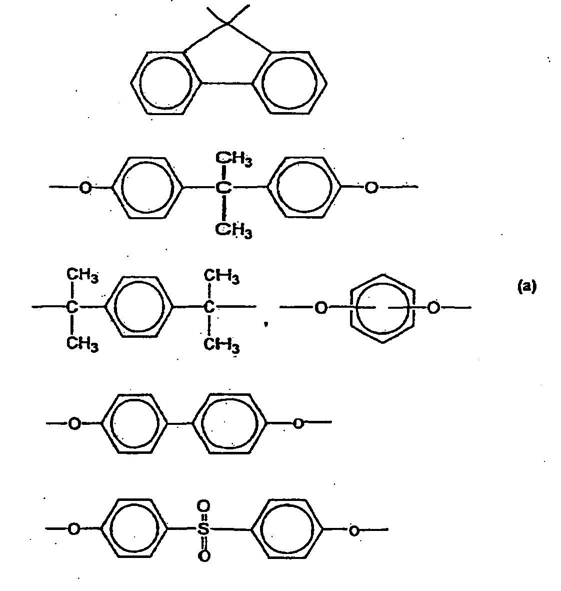 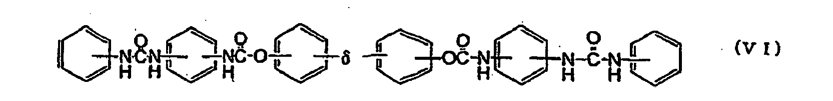 wherein a hydrogen atom on a benzene ring may be substituted with an aromatic compound residue, a heterocyclic compound residue, or an aliphatic compound residue, each residue may have a substituent, δ represents any of -SO₂-, -O-, -(S)ₙ-, -(CH₂)ₙ-, -CO-, -CONH-, -NH-, -CH(COOR₁)-, -C(CF₃)₂-, -CR₂R₃- or a direct bond, R₁, R₂, and R₃ represent an alkyl group having 1 to 20 carbon atoms, and n is 1 or 2.

The present invention also provides a composition comprising a dispersion obtained by dispersing the component (a) urea-urethane compound in a liquid medium and heating the mixture at 40°C or more.

The present invention also provides a composition used for preparation of a color development system comprising a dispersion in which the component (a) urea-urethane compound, and coloring inhibitor component (b), which is at least one compound selected from a silicate, a carbonate, a sulfate, a phosphate, a metal oxide, a metal hydroxide, a hindered phenol compound, a hindered amine compound, and an acetoacetic acid derivative are dispersed in a liquid medium.

The present invention also provides a composition comprising the component (a) and the coloring inhibitor component (b), which is obtained by subjecting at least one of the components (a) and (b) to heat treatment.

The present invention also provides a composition comprising the component (a) and coloring inhibitor component (b), wherein the component (a) urea-urethane compound is at least one member from among compounds represented by the above formulas (I) to (VI).

The present invention also provides a composition comprising the component (a) and coloring inhibitor component (b), wherein the coloring inhibitor component (b) is at least one member selected from magnesium silicate, calcium silicate, magnesium carbonate, calcium carbonate, calcium sulfate, magnesium phosphate, 2,2'-methylenebis(4,6-di-t-butylphenyl)sodium phosphate, magnesium oxide, aluminum oxide, titanium oxide, magnesium hydroxide, 1,1,3-tris(2-methyl-4-hydroxy-5-cyclohexylphenyl)butane, 1,1,3-tris(2-methyl-4-hydroxy-5-t-butylphenyl)butane, tris(2,6-dimethyl-4-t-butyl-3-hydroxybenzyl)isocyanurate, acetoacetic acid anilide, acetoacetic acid m-xylidide, and acetoacetic acid o-toluidide.

The present invention also provides a composition further comprising an acidic developer component (c) which is at least one compound selected from a phenol derivative; and an aromatic carboxylic acid derivative or a metal salt compound thereof; a salicylic acid derivative or a metal salt compound thereof; an N,N-diarylthiourea derivative; and a sulfonylurea derivative.

The present invention also provides a composition wherein the phenol derivative of the component (c) is at least one member selected from 2,2-bis(4-hydroxyphenyl)propane, bis(4-hydroxyphenyl) sulfone, 4-isopropyloxyphenyl-4'-hydroxyphenylsulfone, 2,4'-dihydroxydiphenylsulfone, bis(3-allyl-4-hydroxyphenyl) sulfone, and benzyl 4-hydroxybenzoate.

The present invention also provides a composition comprising the component (a), the component (b), and as necessary the component (c), the composition comprising a dispersion which is obtained by dispersing the component (a) in a liquid medium and heating at 40°C or more.

The present invention also provides a composition comprising the component (a), the component (b), and as necessary the component (c), the composition comprising a dispersion which is obtained by dispersing the component (b) in a liquid medium and heating the mixture at 40°C or more.

The present invention also provides a composition comprising the component (a), the component (b), and as necessary the component (c), the composition comprising a dispersion which is obtained by dispersing the component (a) in a liquid medium and heating the mixture at 40°C or more, and a dispersion which is obtained by dispersing the component (b) in a liquid medium and heating the mixture at 40°C or more.

The present invention also provides a composition comprising the component (a), the component (b), and as necessary the component (c), wherein the content of the component (b) (coloring inhibitor) is 1 part by mass or more and less than 50 parts by mass per 100 parts by mass of the component (a) (urea-urethane compound).

The present invention also provides a composition wherein the component (a) (urea-urethane compound) and/or component (b) (coloring inhibitor) are dispersed using at least one dispersant selected from a nonionic or anionic water-soluble polymer compound and an anionic, nonionic or amphoteric surfactant.

The present invention also provides a composition wherein the component (a) (urea-urethane compound) and/or component (b) (coloring inhibitor) are dispersed using at least one dispersant selected from a nonionic or anionic water-soluble polymer compound selected from a polyvinyl alcohol derivative and a cellulose derivative and an anionic surfactant.

The present invention also provides a composition wherein the component (a) (urea-urethane compound) and/or component (b) (coloring inhibitor) are dispersed using at least one dispersant selected from a sulfonic acid-modified polyvinyl alcohol as a polyvinyl alcohol derivative; hydroxypropylmethylcellulose as a cellulose derivative; and a metal salt of β-naphthalenesulfonic acid formalin condensate and a polycarboxylic acid derivative surfactant as an anionic surfactant.

The present invention also provides a recording material comprising a color development layer containing the above-described composition arranged on a substrate.

The present invention also provides a thermal recording material, wherein the color development layer containing the above-described composition is arranged on the substrate.

Although the coloring inhibiting mechanism of the application fluid from the dispersion composition according to the present application is not clear, it is conjectured that subjecting the dispersion to heat treatment causes: a loss in activity of the component (a) (urea-urethane compound) highly reactive fine particles; inhibition of the color development reaction as a consequence of increased adsorption of the dispersant onto the surface of the dispersion particles; and obstruction of the color development reaction from the component (b) (coloring inhibitor). Further, conventionally, it was known that when the sensitivity was good, liquid discoloration of the application fluid and discoloration of a white portion of the thermal paper were liable to happen. However, the reason why the dispersion composition according to the present application can inhibit liquid discoloration and discoloration of a white portion while maintaining high printing sensitivity is thought as possibly being due to the fact that, while the component (b) (coloring inhibitor) inhibits the color development reaction of the liquid discoloration and wet discoloration of a white portion caused mainly by a component (a) (urea-urethane compound) of the dispersion composition comprising the component (a) (urea-urethane compound) and a component (c) (acidic developer), the component (b) (coloring inhibitor) does not inhibit the color development reaction between the dye and the developer UU as the developer UU particles have been melted by being once subjected to heat. Preferable dispersants which can confer such a function include cellulose derivatives, sulfonic acid-modified polyvinyl alcohols, and among anionic surfactants, metal salts of naphthalenesulfonic acid formalin condensate and polycarboxylic acid derivative surfactants.

More preferably, with respect to a application fluid for a thermal recording material prepared using a dispersion composition comprising an component (a) (urea-urethane compound) and a component (b) (coloring inhibitor), the present invention has the effect of inhibiting the lowering with time of the whiteness (liquid discoloration) of the application fluid, and dramatically improving the white-portion coloring (resistance to wet discoloration of a white portion) of a thermal recording material manufactured by applying the above described application fluid, as well as being capable of expressing excellent printing sensitivity, by subjecting at least one dispersion of the component (a) (urea-urethane compound) and component (b) (coloring inhibitor), which are the constituent components of the dispersion composition, to heat treatment or by subjecting a dispersion of the developer UU, which is obtained by dispersing the developer UU using a cellulose derivative or a specific anionic surfactant as a dispersant of the developer UU, to heat treatment.

In addition, an even more remarkable dramatic improvement in the lowering with time of the whiteness (liquid discoloration) of an application fluid and the white-portion coloring (resistance to wet discoloration of a white portion) of a thermal recording material, as well as being capable of expressing a high printing sensitivity, exists with an application fluid that is prepared by using a dispersion composition in which an component (a) (urea-urethane compound) dispersion is combined with, as a component (c) (acidic developer), a dispersion consisting of a high sensitivity general-purpose developer (at least one compound selected from, for example, phenol derivatives, aromatic carboxylic acid derivatives or their metallic salt compounds, salicylic acid derivatives or their metal salts, N,N-diarylthiourea derivatives, sulfonylurea derivatives) component. As described above, by appropriately selecting the component (a) dispersant, the desired effects of inhibiting whiteness lowering can be obtained. In addition, by using together with an component (a) (urea-urethane compound) and component (b) (coloring inhibitor), the effects of inhibiting the lowering with time of the whiteness of an application fluid in high temperature can also be obtained.

### BEST MODE FOR CARRYING OUT THE INVENTION

Preferable embodiments according to the present invention will now be explained in more detail.

The component (a) (urea-urethane compound) according to the present invention refers to a compound wherein at least one or more of each of a urea group (-NHCONH- group) and a urethane group (-NHCOO- group) are present in a molecule.

Although any kind of compound is acceptable as the urea-urethane compound according to the present invention as long as a urea group and a urethane group are present in the molecule, preferable examples include any of the urea-urethane compounds represented by the following formula (I) to (VI). More preferable are aromatic compounds or heterocyclic compounds, and still more preferable is the case where a sulfone group (-SO₂-) or an anilide group (-NHCO- group) is present in addition to the urea group and urethane group in the molecule without being directly bonded to the urea group. Such urea-urethane compounds are described in detail, for example, in International Publication WO 00/14058, and such compounds can be synthesized in accordance with the methods disclosed therein.

The component (a) urea-urethane compound according to the present invention represented by the following formula (I) to (VI) is a compound which can be, for example, obtained in accordance with the synthesis examples illustrated below.

The component (a) urea-urethane compound represented by formula (I) can be obtained by, for example, reacting the OH group-containing compound of the following general formula (VII) with the isocyanate compound of the following general formula (VIII) and the amine compound of the following general formula (IX) in accordance with, for example, the following reaction formula (A).

X-OH (VII)

OCN-Y-NCO (VIII)

Z-NH₂ (IX)

wherein X, Y, and Z represent an aromatic compound residue, a heterocyclic compound residue, or an aliphatic compound residue; and each residue may have a substituent)

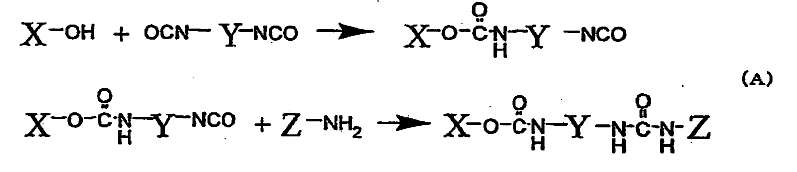

The component (a) urea-urethane compound represented by formula (II) can be obtained by, for example, reacting the OH group-containing compound of the above general formula (VII) with the isocyanate compound of the above general formula (VIII) and water in accordance with, for example, the following reaction formula (B).

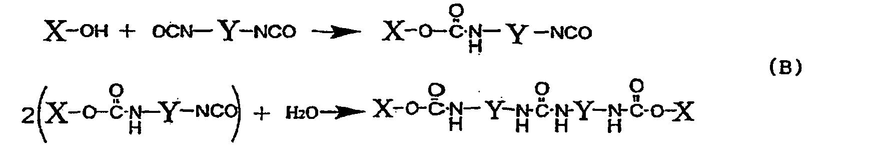

The component (a) urea-urethane compound represented by formula (III) can be obtained by, for example, reacting the OH group-containing compound of the above general formula (VII) with the isocyanate compound of the above general formula (VIII) and the amine compound of the following general formula (X) in accordance with, for example, the following reaction formula (C).

α(̵NH₂)ₙ (X)

wherein α represents a residue having a valence of 2 or greater; and n represents an integer of 2 or greater)

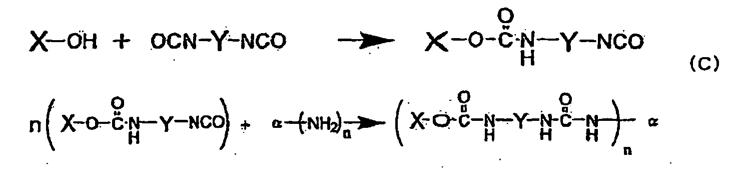

The component (a) urea-urethane compound represented by formula (IV) can be obtained by, for example, reacting the amine compound of the above general formula (IX) with the isocyanate compound of the above general formula (VIII) and the OH group-containing compound of the following general formula (XI) in accordance with, for example, the following reaction formula (D).

β(̵OH)ₙ (XI)

wherein β represents a residue having a valence of 2 or greater; and n represents an integer of 2 or greater)

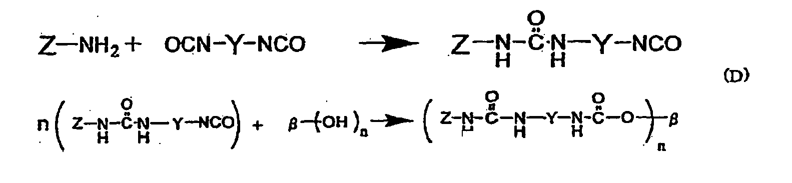

The component (a) urea-urethane compound represented by formula (V) can be obtained by, for example, reacting a monophenol compound with a diisocyanatophenol compound and the diamine compound of the following general formula (XII) in accordance with, for example, the following reaction formula (E). 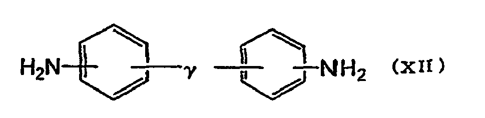 wherein a hydrogen atom on a benzene ring may be substituted with an aromatic compound residue, an aliphatic compound residue; or a heterocyclic compound residue, each residue may have a substituent; γ represents any of -SO₂-, -O-, -(S)ₙ-, -(CH₂)ₙ-, -CO-, -CONH-, or a direct bond; and n is 1 or 2)

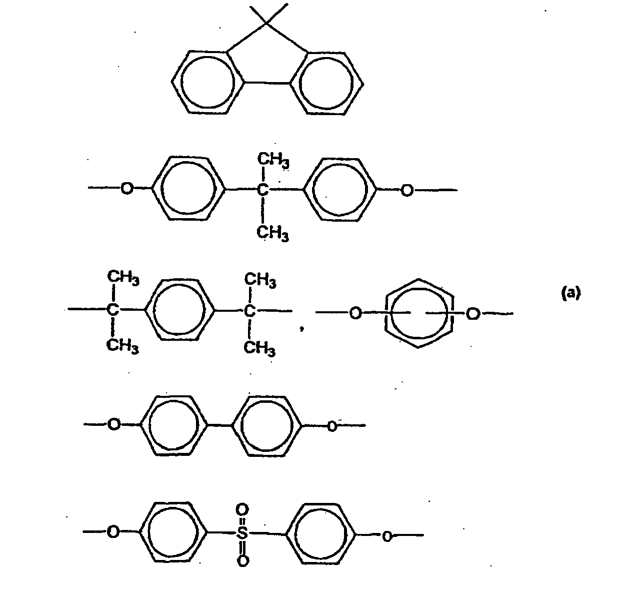

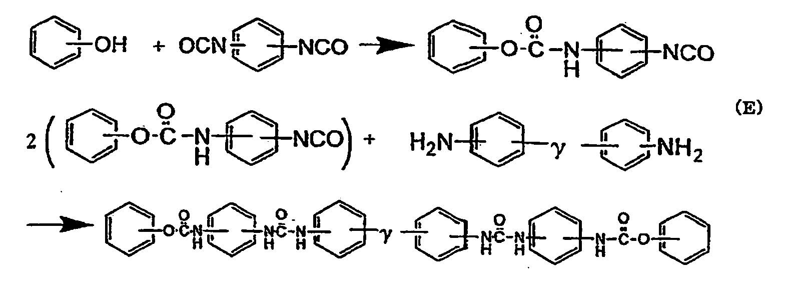

The component (a) urea-urethane compound represented by formula (VI) can be obtained by, for example, reacting an aniline derivative with a diisocyanatophenyl compound and the dihydroxy compound of the following general formula (XIII) in accordance with, for example, the following reaction formula (F). 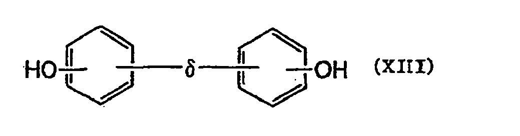 wherein a hydrogen atom on a benzene ring may be substituted with an aromatic compound residue, an aliphatic compound residue, or a heterocyclic compound residue; each residue may have a substituent; δ represents any of -SO₂-, -O-, -(S)ₙ-, -(CH₂)ₙ-, -CO-, -CONH-, -NH-, -CH(COOR₁)-, -(C(CF₃)₂-, -CR₂R₃- or a direct bond; R₁, R₂, and R₃ represent an alkyl group having from 1 to 20 carbons; and n is 1 or 2)

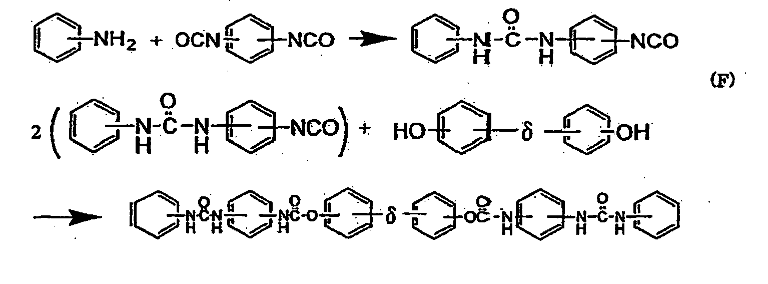

Among the component (a) urea-urethane compounds represented by formulas (I) to (VI), preferable are the compounds of formulas (II) to (IV), and especially preferable are the compounds of formula (V).

The component (a) urea-urethane compound according to the present invention is, usually, a colorless or pale compound which is a solid at ordinary temperatures. The molecular weight is preferably not more than 5,000, and more preferably is not more than 2,000. Moreover, for a thermal recording material, a urea-urethane compound which has a melting point is preferable, wherein the melting point is preferably between 40°C and 500°C, and is especially preferably between 60°C and 300°C. In the present invention, one type of urea-urethane compound can be used, or two types or more can be used in combination together as necessary.

The method for preparing a composition which comprises a component (a) urea-urethane compound dispersion is not particularly limited, and can, for example, be carried out as follows.

A component (a) urea-urethane compound is pre-dispersed in a water-soluble polymer having a dispersing function and/or an anionic surfactant along with an aqueous solution. The component (a) (urea-urethane compound) dispersion is prepared by grinding as necessary the pre-dispersion to a suitable particle size with a grinder such as a paint shaker, ball mill, vibrating ball mill, attritor, sand mill, dyno mill, colloid mill, sand grinder and the like. The thus-prepared component (a) can be used as-is in the dispersion composition.

The component (b) "coloring inhibitor" according to the present invention refers to inorganic compounds such as a silicate, a carbonate, a sulfate, a phosphate, a metal oxide, and a metal hydroxide; and organic compounds such as a hindered phenol compound, a hindered amine compound or other such ultraviolet absorbers, image preservatives, fading suppressants, photostabilizers or an acetoacetic acid derivative. Specific examples of such inorganic compounds include magnesium silicate, aluminum silicate, calcium silicate, magnesium carbonate, calcium carbonate, calcium sulfate, magnesium phosphate, aluminum phosphate, calcium phosphate, zinc phosphate, magnesium oxide, aluminum oxide, zinc oxide, titanium oxide, silicic acid, magnesium hydroxide, aluminum hydroxide, zinc hydroxide and the like. In addition, salts having a plurality of metal species may be used, and examples thereof include aluminum potassium silicate, aluminum calcium silicate, calcium sodium silicate, magnesium calcium silicate and the like. Further examples include aluminosilicates in which some of the silicate silicons are substituted with aluminum, silicic acid ester compounds in which part of the silicate is esterified, phosphoric acid ester compounds in which part of the phosphate is esterified and the like.

Preferable among these are magnesium silicate, calcium silicate, magnesium carbonate, calcium carbonate, calcium sulfate, magnesium phosphate, 2,2'-methylenebis(4,6-di-t-butyl)sodium phosphate, magnesium oxide, aluminum oxide, titanium oxide and magnesium hydroxide. More preferable are magnesium silicate, calcium silicate, magnesium carbonate, calcium carbonate, calcium sulfate, magnesium oxide and magnesium hydroxide.

Specific examples of the above-described organic compounds include 1,1,3-tris(3'-cyclohexyl-4'-hydroxyphenyl)butane, 1,1,3-tris(2-methyl-4-hydroxy-5-cyclohexylphenyl)butane, 1,1,3-tris(2-methyl-4-hydroxy-5-t-butylphenyl)butane, tris(2,6-dimethyl-4-t-butyl-3-hydroxybenzyl)isocyanurate, 4,4'-thiobis(3-methyl-6-t-butylphenol), 4,4'-butylidenebis(3-methyl-6-t-butylphenyl), 1,3,5-trimethyl-2,4,6-tris(3,5-di-t-butyl-4-hydroxybenzyl)benzene, 2,2'-dihydroxy-4,4'-dimethoxybenzophenone, p-octylphenyl salicylate, 2-(2'-hydroxy-5'-methylphenyl)benzotriazole, ethyl-2-cyano-3,3'-diphenylacrylate, tetra(2,2,6,6-tetramethyl-4-piperidyl)1,2,3,4-butane tetracarboxylate, sodium-2,2'-methylenebis(4,6-di-t-butylphenyl)phosphite, bis-[2-(2-hydroxybenzoyl)hydrazide]dodecanoic acid, tetrakis(1,2,2,6,6-pentamethyl-4-piperidyl)-1,2,3,4-butane tetracarboxylate, and as acetoacetic acid derivatives, acetoacetic acid anilide, acetoacetic acid o-toluidide, acetoacetic acid p-toluidide, acetoacetic acid m-xylidide, acetoacetic acid o-anisidide, and acetoacetic acid o-chloroanidide.

Preferable among these are 1,1,3-tris(2-methyl-4-hydroxy-5-cycloheylphenyl)butane, 1,1,3-tris(2-methyl-4-hydroxy-5-t-butylphenyl)butane, tris(2,6-dimethyl-4-t-butyl-3-hydroxybenzyl)isocyanurate, acetoacetic acid anilide, acetoacetic acid m-xylidide, and acetoacetic acid o-toluidide.

Although the method for preparing a composition comprising the component (b) coloring inhibitor dispersion is not particularly limited, this method can, for example, be carried out in the same manner as the component (a) urea-urethane compound. A component (b) coloring inhibitor is pre-dispersed in a water-soluble polymer having a dispersing function and/or an anionic surfactant along with an aqueous solution. The component (b) (coloring inhibitor) dispersion is prepared by grinding as necessary the pre-dispersion to a suitable particle size with a grinder such as a paint shaker, ball mill, vibrating ball mill, attritor, sand mill, dyno mill, colloid mill, sand grinder and the like. The thus-prepared component (b) can be used as-is in the dispersion composition. The component (b) (coloring inhibitor) can also be prepared by mixing a component (b) (coloring inhibitor) pre-dispersion with a pre-dispersion containing a component (a) (urea-urethane compound), and then grinding (hereinafter referred to as "co-grinding") the resulting mixture.

The component (b) coloring inhibitor dispersion particle size is preferably no greater than 100 µm, as the effects of coloring inhibition are higher. More preferable is 50 µm or less, and even more preferable is from 0.1 µm or greater to 10 µm or less.

From the perspective of a lower reduction in whiteness of the application fluid and/or improved resistance to wet discoloration of a white portion of a recording material, the usage amount of the component (b) coloring inhibitor is preferably from 1 part by mass or more to less than 50 parts by mass per 100 parts by mass of the component (a) urea-urethane compound. More preferable is from 1 part by mass or more to 20 parts by mass or more. Even if 50 parts by mass or more is used, there is little extra improvement in inhibition of the lowering in whiteness of the application fluid, and almost no extra improvement in the resistance to wet discoloration of a white portion of a recording material, and a decrease in sensitivity is deemed to occur.

The component (b) (coloring inhibitor) can be used alone, or two types or more can be used in combination together.

Although the component (c) acidic developer according to the present invention is a commonly used electron-accepting substance, preferable examples include phenol derivatives, aromatic carboxylic acid derivatives or their metal salt compounds, salicylic acid derivatives or their metal salts, N,N-diarylthiourea derivatives, sulfonylurea derivatives and the like. Especially preferable are phenol derivatives, specific examples including 2,2-bis(4-hydroxyphenyl)propane (BP(A), 2,2-bis(hydroxyphenyl)butane, 2,2-bis(hydroxyphenyl)pentane, 2,2-bis(4-hydroxyphenyl)-4-methylpentane (AP-5), 2,2-bis(hydroxyphenyl)heptane, 1,1-bis(4-hydroxyphenyl)cyclohexane, bis(4-hydroxyphenyl)butyl acetate, bis(4-hydroxyphenyl)benzyl acetate, bis(4-hydroxyphenyl)sulfone (BPS), 2,4'-dihydroxydiphenylsulfone (2,4'-BPS), bis(3-methyl-4-hydroxyphenyl)sulfone, 4-hydroxyphenyl-4'-methylphenylsulfone, 3-chloro-4-hydroxyphenyl-4'-methylphenylsulfone, 3,4-dihydroxyphenyl-4'-methylphenylsulfone, 4-isopropylphenyl-4'-hydroxypheylsulfone, 4-isopropyloxyphenyl-4'-hydroxyphenylsulfone (D-8), bis(3-aryl-4-hydroxyphenyl)sulfone (TGS(A), 4-hydroxyphenyl-4'-benzyloxyphenylsulfone, 4-isopropylphenyl-4'-hydroxyphenylsulfone, bis(2-methyl-3-tert-butyl-4-hydroxyphenyl)sulfide, methyl 4-hydroxybenzate, benzyl 4-hydroxybenzate, (4'-chlorobenzyl)4-hydroxybenzate, ethyl 1,2-bis(4'-hydroxybenzate), pentyl 1,5-bis(4'-hydroxybenzoate), hexyl 1,6-bis(4'-hydroxybenzoate), dimethyl 3-hydroxyphthate, stearyl gallate, lauryl gallate. Examples of salicylic acid derivatives include methyl salicylate, ethyl salicylate, isoamyl salicylate, isopentyl salicylate, phenyl salicylate, benzyl salicylate, 4-n-octyloxysalicylic acid, 4-n-butyloxysalicylic acid, 4-n-pentyloxysalicylic acid, 3-n-dodecyloxysalicylic acid, 3-n-ococtanoyloxysalicylic acid, 4-n-octyloxycarbonylaminosalicylic acid, 4-n-octanoyloxycarbonylaminosalicylic acid, salicylamide, salicylanilide and the like. Examples of sulfonylurea derivatives include compounds containing one or more arylsulfonylaminoureido groups, such as 4,4-bis(p-toluenesulfonylaminocarbonylamino)diphenylmethane, 4,4-bis(o-toluenesulfonylaminocarbonylamino)diphenylmethane, 4,4-bis(p-toluenesulfonylaminocarbonylamino)diphenyl sulfide, 4,4-bis(p-toluenesulfonylaminocarbonylamino)diphenyl ether, N-(p-toluenesulfonyl)-N'-phenylurea and the like.

Preferable among these are compounds selected from 2,2-bis(4-hydroxyphenyl)propane (BP(A), bis(4-hydroxyphenyl)sulfone (BPS), 2,4'-dihydroxydiphenylsulfone (2,4'-BPS), 4-isopropyloxyphenyl-4'-hydroxyphenylsulfone (D-8), bis(3-allyl-hydroxyphenyl)sulfone (TGS(A), 2,2-bis(4-hydroxyphenyl)-4-methylpentane (AP-5), and benzyl 4-hydroxybenzoate.

Using from 5 to 500 mass% of the above-described acidic developer with respect to the colorless or pale dye precursor is preferable. More preferable is from 20 to 300 mass%. If the acidic developer is 5 mass% or more, the dye precursor coloration is good and coloration density is high. Further, the acidic developer is preferably no greater than 500 mass% as the acidic developer does is less likely to remain, and such an amount is also advantageous in terms of cost.

Although the method for preparing a dispersion composition comprising the component (c) (acidic developer) is not particularly limited, for example, this method can be carried out in the same manner as a dispersion composition of the component (a) urea-urethane compound.

That is, a component (c) (acidic developer) is pre-dispersed in a water-soluble polymer having a dispersing function and/or an anionic surfactant along with an aqueous solution. The component (c) (acidic developer) dispersion is prepared by grinding as necessary the pre-dispersion to a suitable particle size with a grinder such as a paint shaker, ball mill, vibrating ball mill, attritor, sand mill, dyno mill, colloid mill, sand grinder and the like. The thus-prepared component (c) can be used as-is in the dispersion composition.

The heat treatment of the respective single dispersions or mixed dispersion compositions of the component (a) urea-urethane compound and the component (b) coloring inhibitor will now be described.

Although the heat treatment method of the component (a) (urea-urethane compound) dispersion is not particularly limited, examples of such a method include: placing a dispersion composition comprising a component (a) urea-urethane compound in a vessel, and heating while stirring with a stirring blade or the like; heating a composition comprising a urea-urethane compound during the process of grinding with a grinder such as a paint shaker, ball mill, vibrating ball mill, attritor, sand mill, dyno mill, colloid mill, sand grinder and the like; and grinding a composition comprising a urea-urethane compound at an ordinary temperature then subsequently stirring while raising the temperature in the vessel.

As the heat treatment conditions of the component (a) urea-urethane compound dispersion, it is preferable to carry out the treatment at a suitable temperature of 40°C to 90°C for 3 hours or more. More preferable is 50°C to 80°C for 3 hours or more, and still more preferable is 55°C to 75°C for 4 hours or more. The higher the heat treatment temperature is, the more quickly it is that the desired effects can be obtained. If the temperature is not more than 40°C or the heat treatment time is not more than 3 hours, there is little improvement in the lowering with time of whiteness when formed into an application fluid. If the temperature is higher than 90°C, there is the risk of deterioration in the stability of the composition, as well as the possibility of printing sensitivity being adversely affected when formed into a thermal recording material.

Although the heat treatment method of the component (b) (coloring inhibitor) dispersion is not particularly limited, examples of such a method include: placing a dispersion comprising a component (b) coloring inhibitor in a vessel, and heat while stirring with a stirring blade or the like; heating a composition comprising a component (b) coloring inhibitor while grinding with a grinder such as a paint shaker, ball mill, vibrating ball mill, attritor, sand mill, dyno mill, colloid mill, sand grinder or the like; and grinding a composition comprising a component (b) coloring inhibitor at an ordinary temperature then subsequently stirring while raising the temperature in the vessel.

As the heat treatment conditions of the component (b) coloring inhibitor dispersion, it is preferable to carry out the treatment at a suitable temperature of 40°C to 90°C for 3 hours or more. More preferable is 50°C to 80°C for 3 hours or more, and still more preferable is 55°C to 75°C for 4 hours or more. The higher the heat treatment temperature is, the more quickly it is that the desired effects can be obtained. If the temperature is not more than 40°C or the heat treatment time is not more than 3 hours, there is little improvement in the lowering with time of whiteness when formed into an application fluid. If the temperature is higher than 90°C, there is a risk of a deterioration in the stability of the composition, as well as the possibility of printing sensitivity being adversely affected when formed into a thermal recording material.

In the case of conducting the heat treatment on both components of the component (a) urea-urethane compound dispersion and the component (b) coloring inhibitor dispersion, the heat treatment can be conducted by respectively and individually heating the component (a) (urea-urethane compound) dispersion and the component (b) (coloring inhibitor) dispersion. Alternatively, the heat treatment can also be conducted by either mixing the component (a) and component (b) dispersions and heating the prepared dispersion composition (hereinafter referred to as "co-heat treatment"), or by mixing the component (a) (urea-urethane compound) and the component (b) (coloring inhibitor), grinding the resulting mixture, and subjecting the prepared dispersion composition to a co-heat treatment. By subjecting a dispersion composition, in which the component (a) (urea-urethane compound) and the component (b) (coloring inhibitor) have been made to coexist, to a co-heat treatment, the improvement in the lowering with time of whiteness of an application fluid prepared using such an dispersion composition and/or improvement in resistance to wet discoloration of a white portion of the recording material is further enhanced.

When conducting a co-heat treatment on a dispersion composition in which the component (a) (urea-urethane compound) and the component (b) (coloring inhibitor) have been made to coexist, the conditions are also preferably a suitable temperature of from 40°C to 90°C for 3 hours or more. More preferable is 50°C to 80°C for 3 hours or more, and still more preferable is 55°C to 75°C for 4 hours or more. The higher the heat treatment temperature is, the more quickly it is that the desired effects can be obtained. If the temperature is not more than 40°C or the heat treatment time is not more than 3 hours, there is little improvement in the lowering with time of whiteness when formed into an application fluid. If the temperature is higher than 90°C, there is a risk of a deterioration in the stability of the composition, as well as the possibility of printing sensitivity being adversely affected when formed into a thermal recording material.

A dispersion composition according to the present invention which further comprises a component (c) acidic developer in addition to the component (a) urea-urethane compound and component (b) coloring inhibitor, may be mixed by independently grinding each of the component (a), component (b) and component (c) to prepare dispersions, subjecting the dispersions to heat treatment as necessary, and then mixing the respective dispersions together, or, by mixing and grinding the component (a) and the component (b) together, subjecting the resulting dispersion composition to a co-heat treatment, and then mixing the resulting product with a dispersion composition comprising one or more types of the above-described component (c).

Specific examples of the dispersant used when dispersing the component (a) urea-urethane compound, component (b) coloring inhibitor and component (c) acidic developer are cited below.

Specific examples of water-soluble polymers that can be used as the dispersant include: synthetic polymers such as polyvinyl alcohols (hereinafter "PVA"), sulfonic acid-modified PVAs, carboxylic acid-modified PVAs, polyacrylamides, polymethacrylamides, polyacrylic acids, polymethacrylic acids, polyethylene oxides, polypropylene oxides, polyvinylpyrrolidones or copolymers of these compounds; and cellulose polymers such as methyl cellulose, hydroxyethyl cellulose, hydroxypropyl cellulose, hydroxyethylmethyl cellulose, hydroxypropylmethyl cellulose, sodium salts of carboxymethyl cellulose (CMC) and the like.

Specific examples of surfactants that can be used as the dispersant include: anionic surfactants such as fatty acid salts, alkyl sulfate salts, alkyl sulfosuccinate salts, alkyl phosphate salts, polyoxyethylene alkylallyl sulfate salts, polyoxyethylene alkylallyl sulfate salts, aromatic sulfonic acid derivatives (e.g. alkylbenzenesulfonic acid salts, alkyldiphenyl ether disulfonic acid salts, alkylnaphthalene sulfonic acid salts, and naphthalenesulfonic acid formalin condensate salts), polycarboxylic acid derivatives (e.g. polymers or copolymers of various carboxyl group-containing monomers, or mixtures thereof), and polyoxyethylene alkyl phosphates; nonionic surfactants such as polyoxyethylene alkyl ethers, polyoxyethylene alkylallyl ethers, oxyethylene-oxypropylene block copolymers, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylenealkylamines, and alkylalkanolamides; amphoteric surfactants such as alkyl betaines, amine oxides, imidazolium betaines; as well as triethanolamine polyoxyethylene alkyl ether sulfate (e.g. Emal 20T manufactured by Kao Corporation), reactive anionic surfactants (e.g. Latemul S-180 or Latemul S-180A manufactured by Kao Corporation), and special polymer surfactants (e.g. Homogenol L-95 or Homogenol L-100 manufactured by Kao Corporation).

From the perspective of inhibiting liquid discoloration and discoloration of a white portion, preferable examples of dispersants for dispersing the urea-urethane compound and/or coloring inhibitor, among them, include sulfonic acid-modified PVAs, hydroxypropylmethyl cellulose (e.g. Metalose 60SH03 (manufactured by Shin-Etsu Chemical Co. Ltd.) and the like), naphthalene sulfonic acid formalin condensate salts) (e.g. Demol T (manufactured by Kao Corporation) and the like), and polycarboxylic acid derivatives (e.g. Demol EP (manufactured by Kao Corporation) and the like).

These dispersants can be used alone or in a combination of two or more. If necessary, the dispersants may be used in combination with commonly used water-soluble polymers, anionic surfactants, nonionic surfactants, cationic surfactants and amphoteric surfactants other than the specific dispersants described above, for example, ammonium salts, quaternary ammonium salts, and amine oxides.

By forming the color development layer on some kind of substrate using a coating or similar method, an application fluid containing the composition according to the present invention can be made into a recording material. However, in the production of the recording material, any known additives may be effectively employed as necessary. These will now be mentioned below.

Leuco dyes, which are one example of the colorless or pale dye precursor used in the color development layer, are known compounds used in pressure-sensitive recording materials and heat-sensitive recording materials. Examples include, but are not especially limited to, the following compounds.

### (1) Triarylmethane compounds

The specific examples include 3,3-bis(p-dimethylaminophenyl)-6-dimethylaminophthalide(crystal violet lactone), 3,3-bis(p-dimethylaminophenyl)phthalide, 3-(p-dimethylaminophenyl)-3-(1,2-dimethylindol-3-yl)phthalide, 3-(p-dimethylaminophenyl)-3-(2-methylindol-3-yl)phthalide, 3-(p-dimethylaminophenyl)-3-(2-phenylindol-3-yl)phthalide, 3,3-bis(1,2-dimethylindol-3-yl)-5-dimethylaminophthalide, 3,3-bis(1,2-dimethylindol-3-yl)-6-dimethylaminophthalide, 3,3-bis(9-ethylcarbazole-3-yl)-5-dimethylaminophthalide, 3,3-bis(2-phenylindol-3-yl)-5-dimethylaminophthalide, 3-p-dimethylaminophenyl-3-(1-methylpyrrol-2-yl)-6-dimethylaminophthalide, and the like.

### (2) Diphenylmethane compounds

The specific examples include 4,4'-bis-dimethylaminophenylbenzhydryl benzyl ether, N-halophenylleucoauramines, and N-2,4,5-trichlorophenylleucoauramine.

### (3) Xanthene compounds

The specific examples include Rhodamine B anilinolactam, rhodamine B-p-chloroanilinolactam, 3-diethylamino-7-dibenzylaminofluoran, 3-diethylamino-7-octylaminofluoran, 3-diethylamino-7-phenylfluoran, 3-diethylamino-7-chlorofluoran, 3-diethylamino-6-chloro-7-methylfluoran, 3-diethylamino-7-(3,4-dichloroanilino)fluoran, 3-diethylamino-7-(2-chloroanilino)fluoran, 3-diethylamino-6-methyl-7-anilinofluoran, 3-(N-ethyl-N-toryl)amino-6-methyl-7-anilinofluoran, 3-piperidino-6-methyl-7-anilinofluoran, 3-(N-ethyl-N-toryl)amino-6-methyl-7-phenethylfluoran, 3-diethylamino-7-(4-nitroanilino)fluoran, 3-dibutylamino-6-methyl-7-anilinofluoran, 3-(N-methyl-N-propyl)amino-6-methyl-7-anilinofluoran, 3-(N-ethyl-N-isoamyl)amino-6-methyl-7-anilinofluoran, 3-(N-methyl-N-cyclohexyl)amino-6-methyl-7-anilinofluoran, 3-(N-ethyl-N-tetrahydrofuryl)amino-6-methyl-7-anilinofluoran, and the like.

### (4) Thiazine compounds

The specific examples include benzoylleucomethylene blue and p-nitrobenzoylleucomethylene blue.

### (5) Spiro compounds

The specific examples include 3-methylspirodinaphthopyran, 3-ethylspirodinaphthopyran, 3,3-dichlorospirodinaphthopyran, 3-benzylspirodinaphthopyran, 3-methylnaphtho-(3-methoxybenzo)spiropyran, and 3-propylspirobenzopyran.

Further examples include compounds having an absorbing region in the near-infrared, such as 3,6-bis(dimethylamino)fluorene-9-spiro-3'-(6'-dimethylaminophthalide), 3-diethylamino-6-dimethylaminofluorene-9-spiro-3'-(6'-dimethylaminophthalide), 3,6-bis(diethylamino)fluorene-9-spiro-3'-(6'-dimethylaminophthalide), 3-dibutylamino-6-dimethylaminofluorene-9-spiro-3'-(6'-dimethylaminophthalide), 3-dibutylamino-6-diethylaminofluorene-9-spiro-3'-(6'-dimethylaminophthalide), 3,6-bis(dimethylamino)fluorene-9-spiro-3'-(6'-diethylaminophthalide), 3-diethylamino-6-dimethylaminofluorene-9-spiro-3'-(6'-diethylaminophthalide), 3-dibutylamino-6-dimethylaminofluorene-9-spiro-3'-(6'-diethylaminophthalide), 3,6-bis(diethylamino)fluorene-9-spiro-3'-(6'-diethylaminophthalide), 3,6-bis(dimethylamino)fluorene-9-spiro-3'-(6'-dibutylaminophthalide), 3-dibutylamino-6-diethylaminofluorene-9-spiro-3'-(6'-diethylaminophthalide), 3-diethylamino-6-dimethylaminofluorene-9-spiro-3'-(6'-dibutylaminophthalide), 3,3-bis[2-(4-dimethylaminophenyl)-2-(4-methoxyphenyl)ethenyl]-4,5,6,7-tetrachlorophthalide, and the like.

It is preferable to use from 5 to 500 parts by mass of the urea-urethane compound per 100 parts by mass of the colorless or pale dye precursor. More preferable is from 20 to 300 parts by mass. If the urea-urethane compound is 5 parts by mass or more, the dye precursor is sufficient to develop the colors and coloring density is high. Further, the urea-urethane compound is preferably no greater than 500 parts by mass, as excess urea-urethane compound is less likely to remain and there are also advantages in terms of cost.

While the colorless or pale dye precursor dispersion may or may not undergo heat treatment, by conducting heat treatment the improvement in lowering of whiteness of the application fluid and/or improvement in resistance to wet discoloration of a white portion of the recording material are further enhanced.

To improve the color development sensitivity of the recording material, a heat-fusible substance can be incorporated into the composition. The heat-fusible substance preferably has a melting point of between 60°C and 180°C, and substances having a melting point of 80°C to 140°C are particularly preferable. Examples include stearic acid amide, palmitic acid amide, N-methylolstearic acid amide, β-naphthylbenzylether, N-stearylurea, N,N'-distearylurea, β-naphthoic acid phenylester, 1-hydroxy-2-naphthoic acid phenylester, β-naphthol(p-methylbenzyl)ether, 1,4-dimethoxynaphthalene, 1-methoxy-4-benzyloxynaphthalene, N-stearoylurea, p-benzylbiphenyl, 1,2-di(m-methylphenoxy)ethane, 1-phenoxy-2-(4-chlorophenoxy)ethane, 1,4-butanediolphenylether, dimethylterephthalate, metaterphenyl, dibenzyl oxalate, (P-chlorobenzyl)oxalateester, methyl 4-hydroxybenzate, benzyl 4-hydroxybenzoate, (4'-chlorobenzyl)4-hydroxybenzate, ethyl 1,2-bis(4'-hydroxybenzoate), pentyl 1,5-bis(4'-hydroxybenzoate), hexyl 1,6-bis(4'-hydroxybenzoate), and the like. Further examples which may be used include 4,4'-dimethoxybenzophenone, 4,4'-dichlorobenzophenone, 4,4'-difluorobenzophenone, diphenylsulfone, 4,4'-dichlorodiphenylsulfone, 4,4'-difluorodiphenylsulfone, 4,4'-dichlorodiphenyldisulfide, diphenylamine, 2-methyl-4-methoxydiphenylamine, N,N'-diphenyl-p-phenylenediamine, 1-(N-phenylamino)naphthalene, benzyl, and 1,3-diphenyl-1,3-propanedione.

The above-described heat-fusible substances can be used alone or in a combination of two or more. To attain a sufficient heat reactivity, it is preferable to use from 10 to 500 mass% of the heat-fusible compound with respect to the colorless or pale dye precursor, and more preferable to use from 20 to 300 mass%.

The composition according to the present invention has shelf life improved by further incorporating an isocyanate compound thereinto. Examples of isocyanate compounds which can be incorporated into the composition according to the present invention include colorless or pale aromatic isocyanate compounds or heterocyclic isocyanate compounds which are a solid at ordinary temperatures. One or more of the isocyanate compounds disclosed in International Publication WO 00/14058 can be incorporated, for instance. These isocyanates may be used in the form of a so-called block isocyanate, i.e., an addition compound with a phenol, lactam, oxime or the like, they may be used in the form of a diisocyanate dimer such as 1-methylbenzene-2,4-diisocyanate dimer, or a diisocyanurate trimer as an isocyanurate, and they may be used in the form of a polyisocyanate obtained as an adduct by the use of any of various polyols and the like. Water adduct isocyanates of 2,4-toluene diisocyanate, diphenylmethane diisocyanate and the like; phenol adduct isocyanates; amine adduct isocyanates; and the isocyanate compounds and isocyanate adduct compounds described in the specification of Japanese Patent Application No. 8-225445 and the specification of Japanese Patent Application No. 8-250623 may be used.

It is preferable to use from 5 to 500 mass% of the isocyanate compound with respect to the colorless or pale dye precursor. More preferable is from 20 to 200 mass%. If the isocyanate compound is 5 mass% or more, the improvement in shelf life is sufficient and coloring density is high. Further, the isocyanate compound is preferably no greater than 500 mass%, as excess isocyanate compound is less likely to remain and there are also advantages in terms of cost.

The incorporation of an imino compound into the composition according to the present invention further improves shelf stability.

Imino compounds that can be incorporated into the composition according to the present invention are colorless or pale compounds that have at least one imino group and are a solid at ordinary temperatures. Two or more imino compounds may be incorporated in combination, depending on the purpose. Specific examples of the imino compound include those described in International Publication WO 00/14058.

Of these imino compounds, iminoisoindoline derivatives are preferable, and 1,3-diimino-4,5,6,7-tetrachloroisoindoline, 3-imino-4,5,6,7-tetrachloroisoindolin-1-one and 1,3-diimino-4,5,6,7-tetrabromoisoindoline are more preferable.

It is preferable to use from 5 to 500 mass% of the imino compound with respect to the colorless or pale dye precursor. More preferable is from 20 to 200 mass%. If the imino compound is 5 mass% or more, an improvement in shelf life is exhibited. Further, the imino compound is preferably no greater than 500 mass%, as excess imino compound is less likely to remain and there are also advantages in terms of cost.

In addition, the incorporation of an amino compound into the composition according to the present invention improves the shelf life of the background and the print. Amino compounds that can be incorporated are colorless or pale substances having at least one primary, secondary or tertiary amino group. Examples include aniline derivatives, heterocyclic compounds, hindered amine compounds and other compounds such as those described in International Patent Publication WO 00/14058.

The above-described amino compound can be used alone or in a mixture of two or more. To improve its print preservability in connection with plasticizer resistance, the amount of 1 to 500 mass% with respect to the colorless or pale dye precursor is preferable. If the amino compound content is 1 mass% or more, an improvement in print preservability can be attained. Further, if no greater than 500 mass%, there is a sufficient improvement in performance and there are also advantages in terms of cost.

In addition, to improve discoloration of a white portion, heat reactivity and the like, it is also possible to incorporate a phenolic compound such as N-stearyl-N'-(2-hydroxyphenyl)urea, N-stearyl-N'-(3-hydroxyphenyl)urea, N-stearyl-N'-(4-hydroxyphenyl)urea, p-stearoylaminophenol, o-stearoylaminophenol, p-lauroylaminophenol, p-butyrylaminophenol, m-acetylaminophenol, o-acetylaminophenol, p-acetylaminophenol, o-butylaminocarbonylphenol, o-stearylaminocarbonylphenol, p-stearylaminocarbonylphenol, 1,1,3-tris(3-tert-butyl-4-hydroxy-6-methylphenyl)butane, 1,1,3-tris(3-tert-butyl-4-hydroxy-6-ethylphenyl)butane, 1,1,3-tris(3,5-di-tert-butyl-4-hydroxyphenyl)butane, 1,1,3-tris(3-tert-butyl-4-hydroxy-6-methylphenyl)propane, 1,2,3-tris(3-tert-butyl-4-hydroxy-6-methylphenyl)butane, 1,1,3-tris(3-phenyl-4-hydroxyphenyl) butane, 1,1,3-tris(3-cyclohexyl-4-hydroxy-5-methylphenyl)butane, 1,1,3-tris(3-cyclohexyl-4-hydroxy-6-methylphenyl)butane, 1,1,3-tetra(3-phenyl-4-hydroxyphenyl)propane, 1,1,3,3-tetra(3-cyclohexyl-4-hydroxy-6-methylphenyl)propane, 1,1-bis(3-tert-butyl-4-hydroxy-6-methylphenyl)butane, 1,1-bis(3-cyclohexyl-4-hydroxy-6-methylphenyl)butane, and the like.

The composition according to the present invention can be used as various types of thermal recording material, such as a heat-sensitive recording material or a pressure-sensitive recording material, although as a heat-sensitive recording material is especially preferable.

When the recording material is a heat-sensitive recording material, a heat-sensitive recording layer which produces color on heating is formed on a substrate. Specifically, a dispersion composition comprising the above-mentioned component (a) urea-urethane compound, the component (b) coloring inhibitor, the component (c) acidic developer and colorless or light-colored dye precursor such as a leuco dye, and the heat-fusible substance and the like are prepared as a dispersion, and the other components necessary for forming a heat-sensitive recording layer are also prepared as a dispersion. These dispersions are mixed together to prepare an application fluid. The application fluid is applied onto a substrate to form a heat-sensitive recording layer. The respective dispersions are obtained by dispersing and finely grinding, using a disperser such as a sand grinder or the like, one or more of the compounds described above in a dispersant, such as a water-soluble polymer, a surfactant or the like, and water. At this step, the component (a) (urea-urethane compound) and/or component (b) (coloring inhibitor and/or the component (c) (acidic developer) should be used as the dispersion compositions specified by the present invention. Although the particle size of the dispersed matter in the dispersions is not particularly limited, the particle size of the respective dispersions is preferably adjusted as necessary to 0.1 to 10 µm. More preferable is to adjust to about 0.1 to 2 µm.

Examples of the other components in the thermal recording material layer include the following.

Pigments can be incorporated, for instance diatomaceous earth, talc, kaolin, calcined kaolin, calcium carbonate, magnesium carbonate, titanium oxide, zinc oxide, silicon oxide, aluminum hydroxide, urea-formalin resin and the like. Although some components given as examples of the pigment overlap with the coloring inhibitor according to the present invention, even if from 50 to 400 parts by mass of an ordinary pigment are used per 100 parts by mass of the developer, absolutely no inhibiting action is manifested on color production at all. Surprisingly, however, the coloring inhibitor according to the present invention manifests a color-inhibiting effect as a result of the urea-urethane compound and/or coloring inhibitor being subjected to heat treatment. Moreover, from 1 part by mass or more to not more than 50 parts of the coloring inhibitor per 100 parts by mass of the developer is sufficient.

Further examples of other components that can be incorporated as necessary include, for the various purposes such as preventing the head wear and sticking, metal salts of higher fatty acids, such as zinc stearate, calcium stearate and the like; and waxes such as paraffin, oxidized paraffin, polyethylenes, oxidized polyethylenes, stearamide, castor wax and the like. Further examples of other components that can be incorporated as necessary include dispersants such as sodium dioctylsulfosuccinate and the like; ultraviolet absorbers of benzophenone type, benzotriazole type and the like; image preservatives; fading inhibitors; as well as surfactants; fluorescent dyes and the like.

Examples of a binder which can be used in forming the heat-sensitive recording layer include water-soluble binders such as starches, hydroxyethyl cellulose, methyl cellulose, carboxymethyl cellulose, gelatin, casein, polyvinyl alcohols, modified polyvinyl alcohols, sodium polyacrylates, acrylamide-acrylic ester copolymers, acrylamide-acrylic ester-methacrylic acid terpolymers, alkali salts of styrene-maleic anhydride copolymers, alkali salts of ethylene-maleic anhydride copolymers and the like; and latex type water-insoluble binders such as styrene-butadiene copolymers, acrylonitrile-butadiene copolymers, methyl acrylate-butadiene copolymers and the like.

While paper is mainly used as the substrate for the heat-sensitive recording layer, depending on the intended purpose, substrates other than paper which can be used include any of various woven fabrics, nonwoven fabrics, synthetic resin films, laminated papers, synthetic papers, metal foils, and composite sheets obtained by combining two or more thereof. The heat-sensitive recording layer may be composed of either a single layer or two or more layers. The heat-sensitive recording layer may have, for example, a multilayer structure formed by incorporating each color-producing component into one layer. A protective layer composed of a single layer or two or more layers may be formed on the heat-sensitive recording layer, and an intermediate layer composed of a single layer or two or more layers may also be formed between the substrate and the heat-sensitive recording layer. The heat-sensitive recording layer can be obtained by mixing aqueous dispersions each prepared by the fine grinding of respective color-producing components or other components, with a binder and the like, applying the resulting mixture on the substrate, and drying the mixture. The coating amount is preferably 1 to 15 g/m² when the application fluid is in a dried state.

When the recording material is a pressure-sensitive recording material, it can have, for example, the forms disclosed in U.S. Patent Nos. 2,505,470, 2,712,507, 2,730,456, 2,730,457 and 3,418,250 and the like. That is, the following various forms, for example, can be employed: pressure-sensitive recording paper obtained by dissolving a single dye precursor or a mixture of two or more thereof in a solvent consisting of a single alkylated naphthalene, alkylated diphenyl, alkylated diphenylmethane, alkylated diarylethane, synthetic oil (e.g. chlorinated paraffin), vegetable oil, animal oil, mineral oil, or a mixture of two or more thereof, dispersing the resulting solution in a binder or incorporating the solution into microcapsules, applying the dispersion on a substrate or applying the microcapsules on a substrate together with a binder, and placing the upper paper thus obtained and lower paper coated with an application fluid comprising a dispersion of the urea-urethane compound according to the invention (and an amino compound and/or a developer and the like) so that their coated surfaces face each other; a pressure-sensitive recording paper obtained by holding, between the above-mentioned upper paper and lower paper, middle paper coated with an application fluid comprising the dispersion composition according to the present invention which comprises a component (a) urea-urethane compound on one side and the dye precursor on the other side; a self-type pressure-sensitive recording paper obtained by applying an application fluid, as a mixture or in a multilayer form, comprising a dispersion composition according to the present invention comprising an component (a) (urea-urethane compound) (and an amino compound and/or a developer) and a dispersion composition comprising a dye precursor, on the same surface of a substrate; and a self-type pressure-sensitive recording paper coated with a mixture of microcapsules formed from a dispersion composition according to the present invention comprising the dye precursor and the component (a) (urea-urethane compound) (and an amino compound and/or a developer and the like).

When the dispersion composition according to the present invention is used as a pressure-sensitive recording material, the incorporation of a component (c) acidic developer enables a pressure-sensitive recording material to be obtained having improved image density and brilliant color-production. While compounds not specifically mentioned here can be used as this component (c) (acidic developer), examples of compounds which can be used include electron-accepting materials, and specific examples include inorganic compounds such as acid clay, activated clay, attapulgite, bentonite, zeolite, colloidal silica, magnesium silicate, talc, aluminum silicate, and the like; phenol, cresol, butylphenol, octylphenol, phenylphenol, chlorophenol, salicylic acid and the like, or aldehyde condensation novolak resins derived therefrom and their metal salts; and salicylic acid derivatives such as 3-isopropylsalicylic acid, 3-phenylsalicylic acid, 3-cyclohexylsalicylic acid, 3,5-di-t-butylsalicylic acid, 3,5-di(α-methylbenzyl)salicylic acid, 3,5-di-t-octylsalicylic acid, 3-methyl-5-benzylsalicylic acid, 3,5-di(α,α-dimethylbenzyl)salicylic acid, 3-phenyl-5-(α,α-dimethylbenzyl)salicylic and the like, and metal salts thereof. Although some of the inorganic compounds given as the acidic developer used as a pressure-sensitive recording material overlap with the coloring inhibitor according to the present invention, such compounds have conventionally been employed as developers for causing dye precursors to produce color, and thus absolutely no inhibiting action is manifested on coloration. Surprisingly, however, the coloring inhibitor according to the present invention manifests a color-inhibiting action that is the complete opposite of the developer action for causing dye precursors to produce color, as a result of the urea-urethane compound and/or coloring inhibitor being subjected to heat treatment.

The recording layer of the recording material according to the present invention may further comprise ultraviolet absorbers as typified by a hindered phenol compound, image preservatives, fading suppressants, photostabilizers and the like. The specific examples include 1,1,3-tris(3'-cyclohexyl-4'-hydroxyphenyl)butane, 1,1,3-tris(2-methyl-4-hydroxy-5-cyclohexylphenyl)butane, 1,1,3-tris(2-methyl4-hydroxy-5-t-butylphenyl)butane, tris(2,6-dimethyl-4-t-butyl-3-hydroxybenzyl) isocyanurate, 4,4'-thiobis(3-methyl-6-t-butylphenol), 4,4'-butylidenebis(3-methyl-6-t-butylphenyl), 1,3,5-trimethyl-2,4,6-tris(3,5-di-t-butyl-4-hydroxybenzyl)benzene, 2,2'-dihydroxy-4,4'-dimethoxybenzophenone, p-octylphenyl salicylate, 2-(2'-hydroxy-5'-methylphenyl)benzotriazole, ethyl-2-cyano-3,3'-diphenylacrylate, tetra(2,2,6,6-tetramethyl-4-piperidyl) 1,2,3,4-butanetetracarboate, sodium-2,2'-methylenebis(4,6-di-t-butylphenyl)phosphite, and the like.

### EXAMPLES

The present invention will be described more specifically below with reference to the following Examples and Comparative Examples.

The physical properties were evaluated by the following procedure. "Part(s)" and "%" in the description represent "part(s) by weight" and "wt%" respectively, unless otherwise specified.

### <Printing sensitivity>

The color optical density generated by a printing tester manufactured by Ohkura Electric Co., Ltd. using a thermal head KJT-256-8MGF1 manufactured by Kyocera Corporation at an applied voltage of 24 V at a pulse width of 1.5 msec was measured by a Macbeth optical densitometer RD918.

### <Resistance to wet discoloration of a white portion>

A sheet of thermal recording paper was prepared and subjected to a humidity test (in which the sheet was allowed to stand at 40°C for 24 hours in an atmosphere at a relative humidity of 90%). Whiteness (W) of an unprinted portion (a white portion) was measured before and after the test, and the effect of improving resistance to wet discoloration of a white portion by moisture was evaluated from the variation of whiteness (ΔW). Whiteness was measured by a touch-panel type of color computer SM-T manufactured by Suga Test Instruments Co., Ltd. The rating was high when the variation of whiteness was small. The evaluation standards were described in footnotes of each table.

Measurement of whiteness: Instrument: Touch-panel type SM color computer SM-T (manufactured by Suga Test Instruments Co., Ltd.)

Luminous Source: D65 light, 10° scope, 12V 50W halogen lamp

Measuring Condition: Measurement of reflective light (8° light diffusion reception, except for mirror reflection), in accordance with JIS Z8722 (d)
Measuring Hole: φ 30 mm

### <Whiteness of Dispersion Compositions>

A dispersion containing 5% of a colorless or pale dye precursor, 10% of a developer and 1% of a coloring inhibitor was prepared for a sample for coloring evaluation. Using this sample, an accelerating test was carried out at 40°C for 3 hours to accelerate the coloring phenomenon. Whiteness (W) of the sample was measured before and after the accelerating test, and the performance of the coloring inhibitor was evaluated from the variation of whiteness (ΔW). Whiteness (W) was measured by a touch-panel type color computer SM-T manufactured by Suga Test Instruments Co., Ltd. The rating was high when the variation of whiteness (ΔW) was small. The evaluation standards were described in footnotes of each table.

### <Measurement of particle size distribution>

A particle size (D₅₀) of a dispersion composition was measured by a SALD-7000 laser diffraction particle size analyzer manufactured by Shimadzu Corp.

### <Synthesis of urea-urethane compounds>

112.4 g of ethyl acetate as a solvent was added to 105.6 g of 2,4-toluenediisocyanate and 68.4 g of phenol. To this solution, eight sets of 9.41 g each of 4,4'-diaminodiphenylsulfone were added, while stirring the mixture for one hour. The reaction solution resulted in a white slurry. The reaction mixture was diluted with 361.8 g of ethyl acetate, and then the diluted reaction mixture was heated from 30°C to 60°C at a rate of 10°C/hr, while 18.1 g of a 0.375% triethylamine solution in ethyl acetate was added to the mixture for 30 minutes. After the temperature rose to 60°C, the mixture was further reacted at 60°C for 15 hours. The reaction mixture was cooled from 60°C to 30°C, and 15.8 g of 2,4-toluene diisocyanate was added to the mixture, and the mixture was stirred for one hour at 30°C to complete the reaction. Ethyl acetate was removed under vacuum, and the mixture was vacuum dried at approximately 130 torr for 8 hours under nitrogen atmosphere at 65°C to yield 265 g of a white crystalline urea-urethane compound (hereinafter referred to as UU).

### <Dispersion Preparation Example 1: Preparation of dye dispersion>

52.5 g of a dye precursor 3-butylamino-6-methyl-7-anilinofluoran (hereinafter referred to as ODB2), 97.5 g of a 5.38% of aqueous solution of Gohseran L3266 (sulfonic acid-modified PVA manufactured by Nippon Synthetic Chemical Industry Co., Ltd.), and 150 ml (measured by graduated cylinder) of glass beads (φ 0.710 to 0.990 mm) were poured into a 400 ml vessel of sand grinder manufactured by AIMEX Co., Ltd. and ground and dispersed for 3 hours at a rotation frequency of 2000 rpm. After removing glass beads by filtration, the resulting dispersion was put in a 200 ml flask, maintained at an internal temperature of 40°C using a water bath, and stirred at 250 rpm for 24 hours using a three-one motor to heat ODB2. The average particle size of the resulting 35% ODB2 dispersion (nonvolatile content: 38.5%; in which ODB2 content: 35%, dispersant L3266 content: 3.5%), was 0.49 µm.

### <Dispersion Preparation Example 2: Preparation of UU dispersion>

30 g of 20% aqueous solution of Gohseran L3266 (sulfonic acid-modified PVA manufactured by Nippon Synthetic Chemical Industry Co., Ltd.) was poured into a 400 ml vessel of sand grinder manufactured by AIMEX Co., Ltd. and diluted with 60 g of distilled water. 60 g of the developer UU and 150 ml (measured by graduated cylinder) of glass beads (φ 0.710 to 0.990 mm) were put into the diluted solution, and the mixture was ground and dispersed for 3 hours at a rotation frequency of 2000 rpm. After removing glass beads by filtration, 40% UU dispersion (nonvolatile content 44%; in which UU dispersion content: 40%, dispersant L3266 content: 4%) was obtained. The measurement result of average particle size of this 40% UU dispersion was summarized in Table 1.

### <Dispersion Preparation Examples 3 to 8: Preparation of developer dispersions other than UU>

30 g of 20% aqueous solution of Gohseran L3266 (sulfonic acid-modified PVA manufactured by Nippon Synthetic Chemical Industry Co., Ltd.) was poured into a 400 ml vessel of sand grinder manufactured by AIMEX Co., Ltd. and diluted with 60 g of distilled water. Instead of 60 g of developer UU, D-8 (Dispersion Preparation Example 3), BPA (Dispersion Preparation Example 4), BPS (Dispersion Preparation Example 5), 2,4'-BPS (Dispersion Preparation Example 6), TGSA (Dispersion Preparation Example 7), or POB (Dispersion Preparation Example 8) respectively was put into the diluted solution, and also 150 ml (measured by a graduated cylinder) of glass beads (φ 0.710 to 0.990 mm) was put thereinto. The mixture was ground and dispersed for 3 hours at rotation frequency of 2000 rpm. After removing glass beads by filtration, 40% developer dispersion (nonvolatile content: 44%; in which developer dispersion content: 40%, dispersant L3266 content: 4%) was recovered. The measurement results of average particle sizes of 40% developer dispersions recovered were summarized in Table 1.

### <Dispersion Preparation Examples 9-1 and 9-2: Preparation of magnesium silicate dispersion>

2 g of magnesium silicate (Tomita AD-600 manufactured by Tomita Pharmaceutical Co., Ltd.), 8 g of 2.5% aqueous solution of Gohseran L3266 (sulfonic acid-modified PVA manufactured by Nippon Synthetic Chemical Industry Co., Ltd.), 60 g of alumina beads (φ 3 mm) were added to a 50 ml plastic bottle, and the mixture was ground by a paint shaker manufactured by ASADA IRON WORKS Co., Ltd. for one hour. 20% magnesium silicate dispersion of Dispersion Preparation Example 9-1 was thus obtained (average particle size 1.5 µm, nonvolatile content: 22%; in which magnesium silicate content: 20%, dispersant L3266 content: 2%).

In Dispersion Preparation Example 9-2, the same mixture was ground by the paint shaker for 12 hours. 20% magnesium silicate dispersion of Dispersion Preparation Example 9-2 was obtained (average particle size 0.4 µm, nonvolatile content: 22%; in which magnesium silicate content: 20%, dispersant L3266 content: 2%).

### <Dispersion Preparation Examples 10-1 and 10-2: Preparation of heat-treated dispersion of UU with magnesium silicate>

600 g of 40% UU dispersion prepared in Dispersion Preparation Example 2, and 120 g of 20% magnesium silicate dispersion prepared in Dispersion Preparation Example 9-1 were mixed in a 1000 ml flask (UU solid content/magnesium silicate solid content = 100/10). The heat treatment of UU with magnesium silicate was carried out, in which the mixed dispersion was maintained at an internal temperature of 60°C using a water bath, and stirred at 500 rpm by a three-one motor for 48 hours. The heat-treated dispersion of UU with magnesium silicate of Dispersion Preparation Example 10-1 was thus obtained.

In Dispersion Preparation Example 10-2, 120 g of 20% magnesium silicate dispersion prepared in Dispersion Preparation Example 9-2 was used (UU solid content/magnesium silicate solid content = 100/10), and the heat-treatment was carried out for 24 hours. The heat-treated dispersion of UU with magnesium silicate of Dispersion Preparation Example 10-2 was thus obtained.

### <Dispersion Preparation Examples 11-1 and 11-2: Preparation of sensitizer dispersion>

30 g of 20% aqueous solution of Gohseran L3266 (sulfonic acid-modified PVA manufactured by Nippon Synthetic Chemical Industry Co., Ltd.) was poured into a 400 ml vessel of sand grinder manufactured by AIMEX Co., Ltd. and diluted with 60 g of distilled water. 60 g of sensitizer diphenylsulfone (hereinafter referred to as DP) and 150 ml (measured by a graduated cylinder) of glass beads (φ 0.710 to 0.990 mm) were put into the solution, and the mixture was ground and dispersed for 3 hours at a rotation frequency of 2000 rpm. After removing glass beads by filtration, 40% DP dispersion (average particle size 0.60 µm, nonvolatile content: 44%; in which DP content: 40%, dispersant L3266 content: 4%) of Dispersion Preparation Example 11-1 was thus obtained.

40% BON dispersion (average particle size: 0.59 µm, nonvolatile content: 44%; in which BON content: 40%, dispersant L3266 content: 4%) of Dispersion Preparation Example 11-2 was obtained by the same method using sensitizer benzyloxynaphtalene (hereinafter referred to as BON) instead of sensitizer DP.

### <Dispersion Preparation Example 12: Preparation of calcium carbonate dispersion>

10 g of calcium carbonate (Callite KT manufactured by Shiraishi Calcium Kaisha, Ltd.) was mixed with 30 g of water, and the mixture was stirred and dispersed by a magnetic stirrer. 25% calcium carbonate dispersion was thus obtained.

### <Dispersion Preparation Example 13: Preparation of co-ground and heat-treated dispersion of UU with magnesium silicate>

27.5 g of 20% aqueous solution of Gohseran L3266 (sulfonic acid-modified PVA manufactured by Nippon Synthetic Chemical Industry Co., Ltd.) was poured into a 400 ml vessel of sand grinder manufactured by AIMEX Co., Ltd. and diluted with 67.5 g of distilled water. 50 g of developer UU, 5 g of magnesium silicate (Tomita AD-600 manufactured by Tomita Pharmaceutical Co., Ltd.), and 150 ml (measured by a graduated cylinder) of glass beads (φ 0.710 to 0.990 mm) were put into the diluted solution, and the mixture was ground and dispersed for 3 hours at a rotation frequency of 2000 rpm. After removing glass beads by filtration, 33.3% UU dispersion was obtained (nonvolatile content: 40.3%; in which UU content: 33.3%, magnesium silicate content: 3.3%, and dispersant L3266 content: 3.7%). The measurement result of average particle size of this UU dispersion was summarized in Table 1.

The heat treatment was carried out in a 200 ml flask, where 120 g of the co-ground dispersion of UU with magnesium silicate was maintained at an internal temperature of 60°C using a water bath, and stirred at 300 rpm by a three-one motor for 48 hours.

**[Table 1]**

| | Developer | Average particle size [µm] |
|---|---|---|
| Dispersion Preparation Example 2 | UU | 0.34 |
| Dispersion Preparation Example 3 | D-8 | 0.43 |
| Dispersion Preparation Example 4 | BPA | 0.84 |
| Dispersion Preparation Example 5 | BPS | 0.43 |
| Dispersion Preparation Example 6 | 2,4'-BPS | 0.70 |
| Dispersion Preparation Example 7 | TGSA | 0.41 |
| Dispersion Preparation Example 8 | POB | 0.42 |
| Dispersion Preparation Example 13 | Co-ground UU with magnesium silicate | 0.42 |

### [Example 1]

A 35% dispersion of dye precursor 3-dibutylamino-6-methyl-7-anilinofluoran (hereinafter referred to as ODB2) was prepared according to the method of Dispersion Preparation Example 1.

A 40% dispersion of heat-treated UU was prepared by the following method. The dispersion prepared according to the method of Dispersion Preparation Example 2 was put in a 200 ml flask, maintained at an internal temperature of 60°C using a water bath, and stirred at 250 rpm by a three-one motor for 24 hours.

A 40% dispersion of sensitizer diphenylsulfone (hereinafter referred to as DP) was obtained by dispersing DP according to the method of Dispersion Preparation Example 11-1.

A 25% dispersion of calcium carbonate was obtained according to the method of Dispersion Preparation Example 12.

Resistance to wet discoloration of a white portion of thermal recording paper was evaluated by the following procedure.

From the dispersions described above, an application fluid was prepared by mixing and stirring 30 parts (on a solid basis: hereinafter the same) of UU, 15 parts of ODB2, 30 parts of DP, 20 parts of calcium carbonate, 10 parts of zinc stearate (Hidorin Z-7-30 manufactured by CHUKYO YUSHI Co., Ltd.), and 10 parts of polyvinyl alcohol (Poval PVA110 manufactured by Kuraray Co., Ltd., used as 15% aqueous solution).

This application fluid was applied by a bar coater to a sheet of base paper having a basis weight of 50 g/m², and the paper after drying was treated with a super calender to obtain a sheet of thermal recording paper. The amount of the application fluid was 0.40 g/m² based on ODB2.

The sheet of thermal recording paper thus prepared was allowed to stand at 40°C for 24 hours in an atmosphere at a relative humidity of 90%. Whiteness of the sheet before and after this period was measured to evaluate the effect of improving resistance to wet discoloration of a white portion of thermal recording paper. The result is shown in Table 2.

Whiteness of the dispersion composition was evaluated by the following procedure.

A sample for evaluation was prepared to have 10% of heat-treated UU and 5% of heat-treated ODB2. This sample was subjected to a coloring acceleration test (allowed to stand at 40°C for 3 hours). Whiteness of the sample was measured before and after the test. The result is shown in Table 2. The evaluation rated the resistance to wet discoloration of a white portion of the sheet, as Δ, and the whiteness of the dispersion composition, also as Δ, and thus improving effects were shown in both cases.

### [Example 2]

A dispersion was prepared in the same manner as in Example 1, using 12 g of 20% aqueous solution of Metolose 60SH03 (hydroxypropylmethyl cellulose manufactured by Shin-Etsu Chemical Co., Ltd.) and 12 g of 20% aqueous solution of Demol T (sodium β-naphthalenesulfonate formalin condensate manufactured by Kao Corporation) instead of 30 g of 20% aqueous solution of Gohseran L3266 when UU was ground and dispersed, and adding 66 g of water instead of 60 g of water in Dispersion Preparation Example 2. The evaluation of resistance to wet discoloration of a white portion of thermal recording paper, and the measurement of whiteness of the dispersion composition were carried out. The results are shown in Table 2. The evaluation rated the resistance to wet discoloration of a white portion of the sheet, as Δ, and the whiteness of the dispersion composition, also as Δ, and so improving effects were shown in both cases.

### [Example 3]

A dispersion was prepared in the same manner as in Example 1, except for adding to 30 parts of UU, 3 parts of 20% dispersion of magnesium silicate prepared in Dispersion Preparation Example 9-2 based on magnesium silicate as a coloring inhibitor. The evaluation of resistance to wet discoloration of a white portion of thermal recording paper, and the measurement of whiteness of the dispersion composition were carried out. The results are shown in Table 2. 20% dispersion of magnesium silicate as a coloring inhibitor was added after heat-treatment of UU dispersion. The evaluation rated the resistance to wet discoloration of a white portion of the sheet, as ○, and the whiteness of the dispersion composition, also as ○, and thus further improving effects were shown in both cases.

### [Example 4]

A dispersion was prepared in the same manner as in Example 3, except for using sodium 2,2'-methylenebis(4,6-di-tert-butyl)phosphate (ADK Arkls F-85 manufactured by ASAHI DENKA Co., Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 5]

A dispersion was prepared in the same manner as in Example 3, except for using titanium oxide (KA15 manufactured by Titan Kogyo Co., Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 6]

A dispersion was prepared in the same manner as in Example 3, except for using calcium carbonate (Callite KT manufactured by Shiraishi Calcium Kaisha, Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 7]

A dispersion was prepared in the same manner as in Example 3, except for using calcium sulfate (reagent manufactured by Wako Pure Chemical Industries, Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 8]

A dispersion was prepared in the same manner as in Example 3, except that the UU dispersion was not heat-treated and the magnesium silicate dispersion was heat-treated. The evaluation of resistance to wet discoloration of a white portion of thermal recording paper, and the measurement of whiteness of the dispersion composition were carried out. The results are shown in Table 2.

The heat treatment of the coloring inhibitor of magnesium silicate dispersion was carried out in the following method.

A portion of the dispersion prepared in Dispersion Preparation Example 9-2 was put in a 50 ml plastic bottle, maintained at an internal temperature of 60°C using a water bath, and stirred by a magnetic stirrer for 24 hours to heat-treat the coloring inhibitor dispersion.

### [Example 9]

A dispersion was prepared in the same manner as in Example 8, except for using sodium 2,2'-methylenebis(4,6-di-tert-butyl)phosphate (ADK Arkls F-85 manufactured by ASAHI DENKA Co., Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 10]

A dispersion was prepared in the same manner as in Example 8, except for using titanium oxide (KA15 manufactured by Titan Kogyo Co., Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 11]

A dispersion was prepared in the same manner as in Example 8, except for using calcium carbonate (Callite KT manufactured by Shiraishi Calcium Kaisha, Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 12]

A dispersion was prepared in the same manner as in Example 8, except for using calcium sulfate (reagent manufactured by Wako Pure Chemical Industries, Ltd.) instead of magnesium silicate used in Dispersion Preparation Example 9-2. The evaluation of resistance to wet discoloration of a white portion of thermal recording paper, and the measurement of whiteness of the dispersion composition were carried out. The results are shown in Table 2.

### [Example 13]

A dispersion was prepared in the same manner as in Example 3, except that the mixed dispersion of UU with magnesium silicate prepared in Dispersion Preparation Example 10-2 was used. The evaluation of resistance to wet discoloration of a white portion of thermal recording paper, and the measurement of whiteness of the dispersion composition were carried out. The results are shown in Table 2. The evaluation rated the resistance to wet discoloration of a white portion of the sheet, as ○, and the whiteness of the dispersion composition, also as ○, but further improving effect was shown than where magnesium silicate dispersion was added in Example 3.

### [Example 14]

A dispersion was prepared in the same manner as in Example 13, except for using magnesium oxide (reagent manufactured by Wako Pure Chemical Industries, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 15]

A dispersion was prepared in the same manner as in Example 13, except for using magnesium carbonate (Kinbosi manufactured by Konoshima Chemical Co. Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 16]

A dispersion was prepared in the same manner as in Example 13, except for using magnesium phosphate (reagent manufactured by Wako Pure Chemical Industries, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 17]

A dispersion was prepared in the same manner as in Example 13, except for using magnesium hydroxide (reagent manufactured by Wako Pure Chemical Industries, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 18]

A dispersion was prepared in the same manner as in Example 13, except for using aluminum oxide (reagent manufactured by STREM CHEMICALS) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 19]

A dispersion was prepared in the same manner as in Example 13, except for using calcium silicate (reagent manufactured by Wako Pure Chemical Industries, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 20]

A dispersion was prepared in the same manner as in Example 13, except for using calcium carbonate (Callite KT manufactured by Shiraishi Calcium Kaisha, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 21]

A dispersion was prepared in the same manner as in Example 13, except for using calcium sulfate (reagent manufactured by Wako Pure Chemical Industries, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 22]

A dispersion was prepared in the same manner as in Example 13, except for using titanium oxide (KA15 manufactured by Titan Kogyo Co., Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 23]

A dispersion was prepared in the same manner as in Example 13, except for using 12 g of 20% aqueous solution of Metolose 60SH03 and 12 g of 20% aqueous solution of Demol T, instead of 30 g of 20% aqueous solution of Gohseran L3266, when UU was ground and dispersed and adding 66 g of water instead of 60 g of water in Dispersion Preparation Example 10-2. The evaluation of resistance to wet discoloration of a white portion of thermal recording paper, and the measurement of whiteness of the dispersion composition were carried out. The results are shown in Table 2.

### [Example 24]

A dispersion was prepared in the same manner as in Example 23, except for using sodium phosphate 2,2'-methylenebis(4,6-di-tert-butyl) (ADK Arkls F-85 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 2.

### [Example 25]

A dispersion was prepared in the same manner as in Example 23, except for using calcium carbonate (Callite KT manufactured by Shiraishi Calcium Kaisha, Ltd.) instead of magnesium silicate. The evaluation of resistance to wet discoloration of a white portion of thermal recording paper, and the measurement of whiteness of the dispersion composition were carried out. The results are shown in Table 2.

### [Example 26]

A dispersion was prepared in the same manner as in Example 23, except for using calcium sulfate (reagent manufactured by Wako Pure Chemical Industries, Ltd.) instead of magnesium silicate. The evaluation of resistance to wet discoloration of a white portion of thermal recording paper, and the measurement of whiteness of the dispersion composition were carried out. The results are shown in Table 2.

### [Example 27]

A dispersion was prepared in the same manner as in Example 23, except for using titanium oxide (KA15 manufactured by Titan Kogyo Co., Ltd.) instead of magnesium silicate. The evaluation of resistance to wet discoloration of a white portion of thermal recording paper, and the measurement of whiteness of the dispersion composition were carried out. The results are shown in Table 2.

### [Example 28]

A dispersion was prepared in the same manner as in Example 13, except for using silicone dioxide (reagent manufactured by Wako Pure Chemical Industries, Ltd.) instead of magnesium silicate prepared in Dispersion Preparation Example 10-2. The evaluation of resistance to wet discoloration of a white portion of thermal recording paper, and the measurement of whiteness of the dispersion composition were carried out. The results are shown in Table 2.

### [Example 29]

A dispersion was prepared in the same manner as in Example 23, except for using silicone dioxide (reagent manufactured by Wako Pure Chemical Industries, Ltd.) instead of magnesium silicate. The evaluation of resistance to wet discoloration of a white portion of thermal recording paper, and the measurement of whiteness of the dispersion composition were carried out. The results are shown in Table 2.

### [Example 30]

A dispersion was prepared in the same manner as in Example 13, except that of UU and magnesium silicate dispersion were not heat-treated. The evaluation of resistance to wet discoloration of a white portion of thermal recording paper, and the measurement of whiteness of the dispersion composition were carried out. The results are shown in Table 2.

### [Example 31]

A dispersion was prepared in the same manner as in Example 14, except that UU and magnesium oxide dispersion were not heat-treated. The evaluation of resistance to wet discoloration of a white portion of thermal recording paper, and the measurement of whiteness of the dispersion composition were carried out. The results are shown in Table 2.

### [Example 32]

A dispersion was prepared in the same manner as in Example 15, except that UU and magnesium carbonate dispersion were not heat-treated. The evaluation of resistance to wet discoloration of a white portion of thermal recording paper, and the measurement of whiteness of the dispersion composition were carried out. The results are shown in Table 2.

### [Example 33]

A dispersion was prepared in the same manner as in Example 16, except that UU and magnesium phosphate dispersion were not heat-treated. The evaluation of resistance to wet discoloration of a white portion of thermal recording paper, and the measurement of whiteness of the dispersion composition were carried out. The results are shown in Table 2.

### [Example 34]

A dispersion was prepared in the same manner as in Example 17, except that UU and magnesium hydroxide dispersion were not heat-treated. The evaluation of resistance to wet discoloration of a white portion of thermal recording paper, and the measurement of whiteness of the dispersion composition were carried out. The results are shown in Table 2.

### [Example 35]

A dispersion was prepared in the same manner as in Example 18, except that UU and aluminum oxide dispersion were not heat-treated. The evaluation of resistance to wet discoloration of a white portion of thermal recording paper, and the measurement of whiteness of the dispersion composition were carried out. The results are shown in Table 2.

### [Example 36]

A dispersion was prepared in the same manner as in Example 19, except that UU and calcium silicate dispersion were not heat-treated. The evaluation of resistance to wet discoloration of a white portion of thermal recording paper, and the measurement of whiteness of the dispersion composition were carried out. The results are shown in Table 2.

### [Example 37]

A dispersion was prepared in the same manner as in Example 20, except that UU and calcium carbonate dispersion were not heat-treated. The evaluation of resistance to wet discoloration of a white portion of thermal recording paper, and the measurement of whiteness of the dispersion composition were carried out. The results are shown in Table 2.

### [Example 38]

A dispersion was prepared in the same manner as in Example 21, except that UU and calcium sulfate dispersion were not heat-treated. The evaluation of resistance to wet discoloration of a white portion of thermal recording paper, and the measurement of whiteness of the dispersion composition were carried out. The results are shown in Table 2.

### [Example 39]

A dispersion was prepared in the same manner as in Example 22, except that UU and titanium oxide dispersion were not heat-treated. The evaluation of resistance to wet discoloration of a white portion of thermal recording paper, and the measurement of whiteness of the dispersion composition were carried out. The results are shown in Table 2.

### [Example 40]

A dispersion was prepared in the same manner as in Example 28, except that UU and silicon dioxide dispersion were not heat-treated. The evaluation of resistance to wet discoloration of a white portion of thermal recording paper, and the measurement of whiteness of the dispersion composition were carried out. The results are shown in Table 2.

### [Example 41]

A dispersion was prepared in the same manner as in Example 29, except that UU and silica dispersion were not heat-treated. The evaluation of resistance to wet discoloration of a white portion of thermal recording paper, and the measurement of whiteness of the dispersion composition were carried out. The results are shown in Table 2.

### [Comparative Example 1]

A dispersion was prepared in the same manner as in Example 1, except that UU dispersion was not heat-treated. The evaluation of resistance to wet discoloration of a white portion of thermal recording paper, and the measurement of whiteness of the dispersion composition were carried out. The results are shown in Table 2.

### [Comparative Example 2]

A dispersion was prepared in the same manner as in Example 2, except that UU dispersion was not heat-treated. The evaluation of resistance to wet discoloration of a white portion of thermal recording paper, and the measurement of whiteness of the dispersion composition were carried out. The results are shown in Table 2.

**[Table 2]**

| | Dispersion of component (a) | | Dispersion of component (b) | | | Resistance to wet discoloration of a white portion | Whiteness of dispersion composition |
|---|---|---|---|---|---|---|---|
| | Dispersant | Heat treatment | Compound | Dispersant | Heat treatment | Rating¹⁾ | Rating²⁾ |
| Example 1 | L3266 | 60°C × 24h | - | - | - | Δ | Δ |
| Example 2 | 60SH03/T⁴⁾ | 60°C × 24h | - | - | - | Δ | Δ |
| Example 3 | L3266 | 60°C × 24h | magnesium silicate | L3266 | None | ○ | ○ |
| Example 4 | L3266 | 60°C × 24h | F-85 | L3266 | None | Δ | Δ |
| Example 5 | L3266 | 60°C × 24h | titanium dioxide | L3266 | None | Δ | Δ |
| Example 6 | L3266 | 60°C × 24h | calcium carbonate | L3266 | None | Δ | Δ |
| Example 7 | L3266 | 60°C × 24h | calcium sulfate | L3266 | None | Δ | Δ |
| Example 8 | L3266 | None | magnesium silicate | L3266 | 60°C × 24h | Δ | Δ |
| Example 9 | L3266 | None | F-85 | L3266 | 60°C × 24h | Δ | Δ |
| Example 10 | L3266 | None | titanium dioxide | L3266 | 60°C × 24h | Δ | Δ |
| Example 11 | L3266 | None | calcium carbonate | L3266 | 60°C × 24h | Δ | Δ |
| Example 12 | L3266 | None | calcium sulfate | L3266 | 60°C × 24h | Δ | Δ |
| Example 13 | L3266 | 60°C × 24h | magnesium silicate | L3266 | 60°C × 24h | ○ | ○ |
| Example 14 | L3266 | 60°C × 24h | magnesium oxide | L3266 | 60°C × 24h | ○ | ○ |
| Example 15 | L3266 | 60°C × 24h | magnesium carbonate | L3266 | 60°C × 24h | ○ | ○ |
| Example 16 | L3266 | 60°C × 24h | magnesium phosphate | L3266 | 60°C × 24h | Δ | ○ |
| Example 17 | L3266 | 60°C × 24h | magnesium hydroxide | L3266 | 60°C × 24h | ○ | ○ |
| Example 18 | L3266 | 60°C × 24h | aluminum oxide | L3266 | 60°C × 24h | Δ | ○ |
| Example 19 | L3266 | 60°C × 24h | calcium silicate | L3266 | 60°C × 24h | ○ | ○ |
| Example 20 | L3266 | 60°C × 24h | calcium carbonate | L3266 | 60°C × 24h | ○ | ○ |
| Example 21 | L3266 | 60°C × 24h | calcium sulfate | L3266 | 60°C × 24h | Δ | ○ |
| Example 22 | L3266 | 60°C × 24h | titanium dioxide | L3266 | 60°C × 24h | Δ | ○ |
| Example 23 | 60SH03/T⁴⁾ | 60°C × 24h | magnesium silicate | 13266 | 60°C × 24h | ○ | ○ |
| Example 24 | 60SH03/T⁴⁾ | 60°C × 24h | F-85 | L3266 | 60°C × 24h | ○ | ○ |
| Example 25 | 60SH03/T⁴⁾ | 60°C × 24h | calcium carbonate | L3266 | 60°C × 24h | ○ | ○ |
| Example 26 | 60SH03/T⁴⁾ | 60°C × 24h | calcium sulfate | L3266 | 60°C × 24h | ○ | ○ |
| Example 27 | 60SH03/T⁴⁾ | 60°C × 24h | titanium dioxide | L3266 | 60°C × 24h | ○ | ○ |
| Example 28 | L3266 | 60°C × 24h | silicone dioxide | L3266 | 60°C × 24h | Δ | Δ |
| Example 29 | 60SH03/T⁴⁾ | 60°C × 24h | silicone dioxide | L3266 | 60°C × 24h | Δ | Δ |
| Example 30 | L3266 | None | magnesium silicate | L3266 | None | × | × |
| Example 31 | L3266 | None | magnesium oxide | L3266 | None | × | × |
| Example 32 | L3266 | None | magnesium carbonate | L3266 | None | × | × |
| Example 33 | L3266 | None | magnesium phosphate | L3266 | None | × | × |
| Example 34 | L3266 | None | magnesium hydroxide | L3266 | None | × | × |
| Example 35 | L3266 | None | aluminum oxide | L3266 | None | × | × |
| Example 36 | L3266 | None | calcium silicate | L3266 | None | × | × |
| Example 37 | L3266 | None | calcium carbonate | L3266 | None | × | × |
| Example 38 | L3266 | None | calcium sulfate | L3266 | None | × | × |
| Example 39 | L3266 | None | titanium dioxide | L3266 | None | × | × |
| Example 40 | L3266 | None | silicone dioxide | L3266 | None | × | × |
| Example 41 | 60SH03/T⁴⁾ | None | magnesium silicate | L3266 | None | × | × |
| Comparative Example 1 | L3266³⁾ | None | - | - | - | ×× | ×× |
| Comparative Example 2 | 60SH03/T⁴⁾ | None | - | - | - | ×× | ×× |

### Evaluation standards and rating

1) The effect of improving resistance to wet discoloration of a white portion was evaluated from the variation of whiteness (ΔW), obtained by measuring whiteness (W) of an unprinted portion (a white portion) of a sheet of thermal recording paper before and after the humidity test (in which the sheet was allowed to stand at 40°C for 24 hours in an atmosphere at a relative humidity of 90%).
   ○: excellent effect for resistance to wet discoloration of a white portion (ΔW is 3 or less)
   Δ: fair effect for resistance to wet discoloration of a white portion (ΔW is greater than 3 and 10 or less)
   ×: poor effect for resistance to wet discoloration of a white portion (ΔW is greater than 10 and 15 or less)
   ××: no effect for resistance to wet discoloration of a white portion (ΔW is greater than 15)
2) Performance of a coloring inhibitor was evaluated from the variation of whiteness (ΔW), obtained by measuring whiteness (W) of the dispersion before and after the acceleration test.
   ○: excellent effect of inhibiting reduction of whiteness (ΔW is 5 or less)
   Δ: fair effect of inhibiting reduction of whiteness (ΔW is greater than 5 and 10 or less)
   ×: poor effect of inhibiting reduction of whiteness (ΔW is greater than 10 and 15 or less)
   ××: no effect of inhibiting reduction of whiteness (ΔW is greater than 15)
3) L3266: Gohseran L3266 (sulfonic acid-modified PVA manufactured by Nippon Synthetic Chemical Industry Co., Ltd.)
4) 60SH03/T: Metolose 60SH03 (hyroxylpropylmethyl cellulose manufactured by Shin-Etsu Chemical Co., Ltd.) and Demol T (sodium β-naphthalenesulfonate formalin condensate manufactured by Kao Corporation) were used in combination.

### [Example 42]

A dispersion was prepared in the same manner as in Example 13, except for using 1,1,3-tris(2-methyl-4-hydroxy-5-t-butylphenyl)butane (ADK Arkls DH-37 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 43]

A dispersion was prepared in the same manner as in Example 13, except for using 1,1,3-tris(2-methyl-4-hydroxy-5-cyclohexylphenyl)butane (ADK Arkls DH-43 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 44]

A dispersion was prepared in the same manner as in Example 13, except for using 1,1,3-tris(2,6-dimethyl-4-t-butyl-3-hydroxybenzyl) isocyanurate (ADK Arkls DH-48 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 45]

A dispersion was prepared in the same manner as in Example 23, except for using 1,1,3-tris(2-methyl-4-hydroxy-5-t-butylphenyl)butane (ADK Ark1s DH-37 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 46]

A dispersion was prepared in the same manner as in Example 23, except for using 1,1,3-tris(2-methyl-4-hydroxy-5-cyclohexylphenyl)butane (ADK Arkls DH-43 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 47]

A dispersion was prepared in the same manner as in Example 23, except for using 1,1,3-tris(2,6-dimethyl-4-t-butyl-3-hydroxybenzyl) isocyanurate (ADK Arkls DH-48 manufactured by ASAHI DENKA Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 48]

A dispersion was prepared in the same manner as in Example 13, except for using acetoacetic anilide (manufactured by Mitsuboshi Chemical Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 49]

A dispersion was prepared in the same manner as in Example 13, except for using acetoacetic-m-xylidide (manufactured by Mitsuboshi Chemical Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 50]

A dispersion was prepared in the same manner as in Example 13, except for using acetoacetic-o-toluidide (manufactured by Mitsuboshi Chemical Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 51]

A dispersion was prepared in the same manner as in Example 23, except for using acetoacetic anilide (manufactured by Mitsuboshi Chemical Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 52]

A dispersion was prepared in the same manner as in Example 23, except for using acetoacetic-m-xylidide (manufactured by Mitsuboshi Chemical Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 53]

A dispersion was prepared in the same manner as in Example 23, except for using acetoacetic-o-toluidide (manufactured by Mitsuboshi Chemical Co., Ltd.) instead of magnesium silicate. The evaluation of resistance to wet discoloration of a white portion of thermal recording paper, and the measurement of whiteness of the dispersion composition were carried out. The results are shown in Table 3.

### [Example 54]

A dispersion was prepared in the same manner as in Example 3, except that the UU dispersion was not heat-treated, 1,1,3-tris(2-methyl-4-hydroxy-5-t-butylphenyl)butane (ADK Arkls DH-37 manufactured by ASAHI DENKA Co., Ltd.) dispersion was used in place of magnesium silicate dispersion in Example 3 and not heat-treated, and the ratio UU/DH37 was made to be 10/5 (on a solid basis). The evaluation of resistance to wet discoloration of a white portion of thermal recording paper, and the measurement of whiteness of the dispersion composition were carried out. The results are shown in Table 3.

### [Example 55]

A dispersion was prepared in the same manner as in Example 3, except that the UU dispersion was not heat-treated, 1,1,3-tris(2-methyl-4-hydroxy-5-cyclohexylphenyl)butane (ADK Arkls DH-43 manufactured by ASAHI DENKA Co., Ltd.) dispersion was used in place of magnesium silicate dispersion in Example 3 and not heat-treated, and the ratio UU/DH37 was made to be 10/5 (on a solid basis). The evaluation of resistance to wet discoloration of a white portion of thermal recording paper, and the measurement of whiteness of the dispersion composition were carried out. The results are shown in Table 3.

### [Example 56]

A dispersion was prepared in the same manner as in Example 3, except that the heat-treatment of UU dispersion was not carried out, tris(2,6-dimethyl-4-t-butyl-3-hydroxybenzyl) isocyanurate (ADK Arkls DH-48 manufactured by ASAHI DENKA Co., Ltd.) dispersion was used in place of magnesium silicate dispersion in Example 3 and not heat-treated, and the ratio UU/DH37 was made to be 10/5 (on a solid basis). The evaluation of resistance to wet discoloration of a white portion of thermal recording paper, and the measurement of whiteness of the dispersion composition were carried out. The results are shown in Table 3.

### [Example 57]

A dispersion was prepared in the same manner as in Example 3, except that the UU dispersion was not heat-treated, acetoacetic anilide (manufactured by Mitsuboshi Chemical Co., Ltd.) dispersion was used in place of magnesium silicate dispersion in Example 3 and not heat-treated, and the ratio UU/DH37 was made to be 10/5 (on a solid basis). The evaluation of resistance to wet discoloration of a white portion of thermal recording paper, and the measurement of whiteness of the dispersion composition were carried out. The results are shown in Table 3.

### [Example 58]

A dispersion was prepared in the same manner as in Example 3, except that the UU dispersion was not heat-treated, acetoacetic-m-xylidide (manufactured by Mitsuboshi Chemical Co., Ltd.) dispersion was used in place of magnesium silicate dispersion in Example 3 and not heat-treated, and the ratio UU/DH37 was made to be 10/5 (on a solid basis). The evaluation of resistance to wet discoloration of a white portion of thermal recording paper, and the measurement of whiteness of the dispersion composition were carried out. The results are shown in Table 3.

### [Example 59]

A dispersion was prepared in the same manner as in Example 3, except that the UU dispersion was not heat-treated, acetoacetic-o-toluidide (manufactured by Mitsuboshi Chemical Co., Ltd.) dispersion was used in place of magnesium silicate dispersion in Example 3 and not heat-treated, and the ratio UU/DH37 was made to be 10/5 (on a solid basis).

The evaluation of resistance to wet discoloration of a white portion of thermal recording paper, and the measurement of whiteness of the dispersion composition were carried out. The results are shown in Table 3.

**[Table 3]**

| | Dispersion of component (a) | | Dispersion of component (b) | | | Resistance to wet discoloration of a white portion | Whiteness of dispersion composition |
|---|---|---|---|---|---|---|---|
| | Dispersant | Heat treatment | Compound | Dispersant | Heat treatment | Rating¹⁾ | Rating²⁾ |
| Example 42 | L3266 | 60°C × 24h | DH-37 | L3266 | 60°C × 24h | Δ | Δ |
| Example 43 | 13266 | 60°C × 24h | DH-43 | L3266 | 60°C × 24h | Δ | Δ |
| Example 44 | L3266 | 60°C × 24h | DH-48 | L3266 | 60°C × 24h | Δ | Δ |
| Example 45 | 60SH03/T⁴⁾ | 60°C × 24h | DH-37 | L3266 | 60°C × 24h | Δ | Δ |
| Example 46 | 60SH03/T⁴⁾ | 60°C × 24h | DH-43 | L3266 | 60°C × 24h | Δ | Δ |
| Example 47 | 60SH03/T⁴⁾ | 60°C × 24h | DH-48 | L3266 | 60°C × 24h | Δ | Δ |
| Example 48 | L3266 | 60°C × 24h | acetoacetic anilide | L3266 | 60°C × 24h | Δ | Δ |
| Example 49 | L3266 | 60°C × 24h | acetoacetic- m-xylidide | L3266 | 60°C × 24h | Δ | Δ |
| Example 50 | L3266 | 60°C × 24h | acetoacetic- o-toluidide | L3266 | 60°C × 24h | Δ | Δ |
| Example 51 | 60SH03/T⁴⁾ | 60°C × 24h | acetoacetic anilide | L3266 | 60°C × 24h | Δ | Δ |
| Example 52 | 60SH03/T⁴⁾ | 60°C × 24h | acetoacetic- m-xylidide | L3266 | 60°C × 24h | Δ | Δ |
| Example 53 | 60SH03/T⁴⁾ | 60°C × 24h | acetoacetic- o-toluidide | L3266 | 60°C × 24h | Δ | Δ |
| Example 54 | L3266 | None | DH-37 | L3266 | None | Δ | Δ |
| Example 55 | L3266 | None | DH-43 | L3266 | None | Δ | Δ |
| Example 56 | L3266 | None | DH-48 | L3266 | None | Δ | Δ |
| Example 57 | L3266 | None | acetoacetic anilide | L3266 | None | Δ | Δ |
| Example 58 | L3266 | None | acetoacetic- m-xylidide | L3266 | None | Δ | Δ |
| Example 59 | L3266 | None | acetoacetic- o-toluidide | L3266 | None | Δ | Δ |

### Evaluation standards and rating

1) The effect of improving resistance to wet discoloration of a white portion was evaluated from the variation of whiteness (ΔW), obtain by measuring whiteness (W) of an unprinted portion (a white portion) of a sheet of thermal recording paper before and after the test (in which the sheet was allowed to stand at 40°C for 24 hours in an atmosphere at a relative humidity of 90%).
   ○: excellent effect for resistance to wet discoloration of a white portion (ΔW is 3 or less)
   Δ: fair effect for resistance to wet discoloration of a white portion (ΔW is greater than 3 and 10 or less)
   ×: poor effect for resistance to wet discoloration of a white portion (ΔW is greater than 10 and 15 or less)
   ××: no effect for resistance to wet discoloration of a white portion (ΔW is greater than 15)
2) Performance of a coloring inhibitor was evaluated from the variation of whiteness (ΔW), obtained by measuring whiteness (W) of the dispersion before and after the acceleration test.
   ○: excellent effect of inhibiting reduction of whiteness (ΔW is 5 or less)
   Δ: fair effect of inhibiting reduction of whiteness (ΔW is greater than 5 and 10 or less)
   ×: poor effect of inhibiting reduction of whiteness (ΔW is greater than 10 and 15 or less)
   ××: no effect of inhibiting reduction of whiteness (ΔW is greater than 15)
3) L3266: Gohseran L3266 (sulfonic acid-modified PVA manufactured by Nippon Synthetic Chemical Industry Co., Ltd.)
4) 60SH03/T: Metolose 60SH03 (hyroxylpropylmethyl cellulose manufactured by Shin-Etsu Chemical Co., Ltd.) and Demol T (sodium β-naphthalenesulfonate formalin condensate manufactured by Kao Corporation) were used in combination.

### [Example 60]

An application fluid was prepared by stirring and mixing 15 parts (on a solid basis, hereinafter the same) of ODB2 prepared in Dispersion Preparation Example 1, 15 parts of UU and 1.5 parts of magnesium silicate from the co-heat-treated dispersion of UU with magnesium silicate prepared in Dispersion Preparation Example 10-1, 15 parts of D-8 prepared in Dispersion Preparation Example 3, 30 parts of BON prepared in Dispersion Preparation Example 11-2, 20 parts of calcium carbonate prepared in Dispersion Preparation Example 12, 10 parts of zinc stearate (Hidorin Z-7-30 manufactured by CHUKYO YUSHI Co., Ltd.), and 10 parts of polyvinyl alcohol (used as 15% aqueous solution of Poval PVA110 manufactured by Kuraray Co., Ltd.).

This application fluid was applied by a bar coater to a sheet of base paper having a basis weight of 50 g/m². A sheet of thermal recording paper was obtained by drying the paper and treating it by a super calender. The amount of the application fluid was 0.40 g/m² based on ODB2.

The evaluation of resistance to wet discoloration of a white portion of thermal recording paper was carried out by the following procedure.

A sheet of the resulting thermal recording paper was allowed to stand at 40°C for 24 hours in an atmosphere at a relative humidity of 90%. Whiteness of an unprinted portion (a white portion) was measured before and after the test and the resistance to wet discoloration of a white portion was evaluated. The result is shown in Table 4 (Tables 4-1 and 4-2).

Whiteness of a dispersion composition was evaluated by the following procedure.

A 10% dispersion of ODB2 was prepared by diluting the 35% dispersion of ODB2 prepared in Dispersion Preparation Example 1 with distilled water. A 20% dispersion of UU and a 20% dispersion of D-8 were prepared by diluting the 40% dispersion of UU and the dispersion of D-8 prepared in Dispersion Preparation Examples 2 and 3 with distilled water, respectively. A dispersion composition as an evaluation sample was prepared by mixing 5 g of 10% dispersion of ODB2, 2.5 g of 20% dispersion of UU and 2.5 g of 20% dispersion of D-8. This evaluation sample was subjected to the coloring acceleration test, in which the sample was allowed to stand at 40°C for 3 hours. Whiteness before and after the test was measured by a touch-panel type of color computer SM-T manufactured by Suga Test Instruments Co., Ltd. Heat treatment conditions of temperature and time of the UU containing dispersion composition, and the evaluation results are shown in Table 4.

### [Example 61]

An application fluid was prepared in the same manner as in Example 60, except for using the 40% dispersion of BPA prepared in Dispersion Preparation Example 4 in place of the 40% dispersion of D-8 prepared in Dispersion Preparation Example 3 used in Example 60. The evaluation of resistance to wet discoloration of a white portion of thermal recording paper was carried out in the same way. Whiteness of a dispersion composition was also estimated in the same manner as in Example 60, with a dispersion composition as an evaluation sample prepared in the same manner as in Example 60, except for using the 40% dispersion of BPA prepared in Dispersion Preparation Example 4 in place of the 40% dispersion of D-8 prepared in Dispersion Preparation Example 3. Heat treatment conditions of temperature and time of the UU containing dispersion composition, and the evaluation results are summarized in Table 4.

### [Example 62]

An application fluid was prepared in the same manner as in Example 60, except for using the 40% dispersion of BPS prepared in Dispersion Preparation Example 5 in place of the 40% dispersion of D-8 prepared in Dispersion Preparation Example 3 used in Example 60. The evaluation of resistance to wet discoloration of a white portion of thermal recording paper was carried out in the same way. Whiteness of a dispersion composition was also estimated in the same manner as in Example 60, with a dispersion composition as an evaluation sample prepared in the same manner as in Example 60, except for using the 40% dispersion of BPS prepared in Dispersion Preparation Example 5 in place of the 40% dispersion of D-8 prepared in Dispersion Preparation Example 3. Heat treatment conditions of temperature and time of the UU containing dispersion composition, and the evaluation results are summarized in Table 4.

### [Example 63]

An application fluid was prepared in the same manner as Example 60, except for using the 40% dispersion of 2,4'-BPS prepared in Dispersion Preparation Example 6 in place of the 40% dispersion of D-8 prepared in Dispersion Preparation Example 3 used in Example 60. The evaluation of resistance to wet discoloration of a white portion of thermal recording paper was carried out in the same way. Whiteness of a dispersion composition was also estimated in the same manner as in Example 60, with a dispersion composition as an evaluation sample prepared in the same manner as in Example 60, except for using the 40% dispersion of 2,4'-BPS prepared in Dispersion Preparation Example 6 in place of the 40% dispersion of D-8 prepared in Dispersion Preparation Example 3. Heat treatment conditions of temperature and time of the UU containing dispersion composition, and the evaluation results are summarized in Table 4.

### [Example 64]

An application fluid was prepared in the same manner as in Example 60, except for using the 40% dispersion of TGSA prepared in Dispersion Preparation Example 7 in place of the 40% dispersion of D-8 prepared in Dispersion Preparation Example 3 used in Example 60. The evaluation of resistance to wet discoloration of a white portion of thermal recording paper was carried out in the same way. Whiteness of a dispersion composition was also estimated in the same manner as in Example 60, with a dispersion composition as an evaluation sample prepared in the same manner as in Example 60, except for using the 40% dispersion of TGSA prepared in Dispersion Preparation Example 7 in place of the 40% dispersion of D-8 prepared in Dispersion Preparation Example 3. Heat treatment conditions of temperature and time of the UU containing dispersion composition, and the evaluation results are shown in Table 4. Heat treatment conditions of temperature and time of the UU containing dispersion composition, and the evaluation results are shown in Table 4.

### [Example 65]

An application fluid was prepared in the same manner as in Example 60, except that a co-heat-treatment in Dispersion Preparation Example 10-1 used in Example 60 was carried out at 70°C for 6 hours. The evaluation of resistance to wet discoloration of a white portion of thermal recording paper was carried out in the same way. Whiteness of a dispersion composition was also estimated in the same manner as in Example 60, with a dispersion composition as an evaluation sample prepared in the same manner as in Example 60. Heat treatment conditions of temperature and time of the UU containing dispersion composition, and the evaluation results are summarized in Table 4.

### [Example 66]

An application fluid was prepared in the same manner as in Example 60, except for using a co-heat-treated 40% dispersion of UU in Dispersion Preparation Example 10-1 prepared in a different way, where 12 g of a 20% aqueous solution of Metolose 60SH03 (hydroxypropylmethyl cellulose manufactured by Shin-Etsu Chemical Co., Ltd.), 12 g of a 20% aqueous solution of Demol T (sodium β-naphthalenesulfonate formalin condensate manufactured by Kao Corporation) and 66 g of distilled water were used and dispersed (nonvolatile content: 43.2%; in which UU content: 40%, dispersant 60SH03 content: 1.6% and dispersant Demol T content: 1.6%), in place of the dispersant of Dispersion Preparation Example 2 that was used in Dispersion Preparation Example 10-1. The evaluation of resistance to wet discoloration of a white portion of thermal recording paper was carried out in the same way. Whiteness of a dispersion composition was also estimated by in the same manner as in Example 60, with a dispersion composition as an evaluation sample prepared in the same manner as in Example 60. Heat treatment conditions of temperature and time of the UU containing dispersion composition, and the evaluation results are summarized in Table 4.

### [Example 67]

An application fluid was prepared in the same manner as in Example 60, except for using a co-heat-treated 40% dispersion of UU in Dispersion Preparation Example 10-1 prepared in a different way, where 12 g of a 20% aqueous solution of Metolose 60SH03, 12 g of a 20% aqueous solution of Demol EP (polycarboxylic acid type polymer surfactant manufactured by Kao Corporation) and 66 g of distilled water were used and dispersed (nonvolatile content: 43.2%; in which UU content: 40%, dispersant 60SH03 content: 1.6% and dispersant Demol T content: 1.6%), in place of the dispersant of Dispersion Preparation Example 2 that was used in Dispersion Preparation Example 10-1.

The evaluation of resistance to wet discoloration of a white portion of thermal recording paper was carried out in the same way. Whiteness of the dispersion composition was also estimated by in the same manner as in Example 60, with a dispersion composition as an evaluation sample prepared in the same manner as in Example 60. Heat treatment conditions of temperature and time of the UU containing dispersion composition, and the evaluation results are summarized in Table 4.

### [Example 68]

An application fluid was prepared in the same manner as in Example 60, except that 9 parts of UU and 0.9 parts of magnesium silicate from the co-heat-treated dispersion of UU with magnesium silicate prepared in Dispersion Preparation Example 10-1 and 21 parts of D-8 prepared in Dispersion Preparation Example 3 were used at a blending ratio of the developers as component (a)/component (c) = 3/7 on a solid basis. The evaluation of resistance to wet discoloration of a white portion of thermal recording paper was carried out in the same way. Whiteness of the dispersion composition was also estimated by in the same manner as in Example 60 with a dispersion composition as an evaluation sample prepared in the same manner as in Example 60. Heat treatment conditions of temperature and time of the UU containing dispersion composition, and the evaluation results are summarized in Table 4.

### [Example 69]

An application fluid was prepared in the same manner as in Example 60, except that 21 parts of UU and 2.1 parts of magnesium silicate from the co-heat-treated dispersion of UU with magnesium silicate prepared in Dispersion Preparation Example 10-1 and 9 parts of D-8 prepared in Dispersion Preparation Example 3 were used at a blending ratio of the developers as component (a)/component (c) = 7/3 on a solid basis. The evaluation of resistance to wet discoloration of a white portion of thermal recording paper was carried out in the same way. Whiteness of the dispersion composition was also estimated by in the same manner as in Example 60 with a dispersion composition as an evaluation sample prepared in the same manner as in Example 60. Heat treatment conditions of temperature and time of the UU containing dispersion composition, and the evaluation results are summarized in Table 4.

### [Example 70]

An application fluid was prepared in the same manner as in Example 61, except that 9 parts of UU and 0.9 parts of magnesium silicate from the co-heat-treated dispersion of UU with magnesium silicate prepared in Dispersion Preparation Example 10-1 and 21 parts of BPA prepared in Dispersion Preparation Example 4 were used at the blending ratio of the developers as component (a)/component (c) = 3/7 on a solid basis. The evaluation of resistance to wet discoloration of a white portion of thermal recording paper was carried out in the same way. Whiteness of the dispersion composition was also estimated by in the same manner as in Example 61 with a dispersion composition as an evaluation sample prepared in the same manner as in Example 61. Heat treatment conditions of temperature and time of the UU containing dispersion composition, and the evaluation results are summarized in Table 4.

### [Example 71]

An application fluid was prepared by stirring and mixing 15 parts of ODB2 prepared in Dispersion Preparation Example 1, 30 parts of UU and 3 parts of magnesium silicate from the co-heat-treated dispersion of UU with magnesium silicate prepared in Dispersion Preparation Example 10-1, 30 parts of POB prepared in Dispersion Preparation Example 8, 20 parts of calcium carbonate prepared in Dispersion Preparation Example 12, 10 parts of zinc stearate (Hidorin Z-7-30 manufactured by CHUKYO YUSHI Co., Ltd.), and 10 parts of polyvinyl alcohol (used as 15% aqueous solution of Poval PVA110 manufactured by Kuraray Co., Ltd.).

This application fluid was applied by a bar coater to a sheet of base paper having a basis weight of 50 g/m². A sheet of thermal recording paper was obtained by drying the paper and treating it by a super calender. The amount of the application fluid applied was 0.40 g/m² based on ODB2.

The evaluation of resistance to wet discoloration of a white portion of thermal recording paper was carried out by the same procedure as in Example 60. The evaluation results are shown in Table 4.

Preparation of a dispersion composition and measurement of whiteness were carried out in the following procedure.

A 10% dispersion of ODB2 was prepared by diluting the 35% dispersion of ODB2 prepared in Dispersion Preparation Example 1 with distilled water. A 20% dispersion of UU and a 20% dispersion of POB were prepared by diluting the 40% dispersion of UU and the dispersion of POB prepared in Dispersion Preparation Examples 2 and 8 with distilled water, respectively. A dispersion composition as an evaluation sample was further prepared by mixing 3 g of 10% dispersion of ODB2, 3 g of 20% dispersion of UU, 3 g of 20% dispersion of POB and 1 g of additional distilled water. This evaluation sample was subjected to the coloring acceleration test. Whiteness before and after the test was measured by a touch-panel type of color computer SM-T manufactured by Suga Test Instruments Co., Ltd. Heat treatment conditions of temperature and time of the UU containing dispersion composition, and the evaluation results are summarized in Table 4.

### [Example 72]

A dispersion was prepared in the same manner as in Example 60, except for using sodium 2,2'-methylenebis(4,6-di-tert-butyl) phosphate (ADK Arkls F-85 manufactured by ASAHI DENKA Co., Ltd.) in Dispersion Preparation Example 10-1 in place of magnesium silicate in Dispersion Preparation Example 9-1. Resistance to wet discoloration of a white portion of the thermal recording paper was evaluated and whiteness of the dispersion composition was measured. Heat treatment conditions of temperature and time of the UU containing dispersion composition, and the evaluation results are shown in Table 4.

### [Example 73]

A dispersion was prepared in the same manner as in Example 60, except for using tris(2,6-dimethyl-4-t-butyl-3-hydroxybenzyl) isocyanurate (ADK Arkls DH-48 manufactured by ASAHI DENKA Co., Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 74]

A dispersion was prepared in the same manner as in Example 60, except for using titanium oxide (KA15 manufactured by Titan Kogyo Co., Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 75]

A dispersion was prepared in the same manner as in Example 60, except for using calcium carbonate (Callite KT manufactured by Shiraishi Calcium Kaisha, Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 76]

A dispersion was prepared in the same manner as in Example 60, except for using calcium sulfate (reagent manufactured by Wako Pure Chemical Industries, Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 77]

A dispersion was prepared in the same manner as in Example 60, except for using magnesium oxide (reagent manufactured by Wako Pure Chemical Industries, Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 78]

A dispersion was prepared in the same manner as in Example 60, except for using magnesium carbonate (Kinboshi manufactured by Konoshima Chemical Co. Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 79]

A dispersion was prepared in the same manner as in Example 60, except for using magnesium phosphate (reagent manufactured by Wako Pure Chemical Industries, Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 80]

A dispersion was prepared in the same manner as in Example 60, except for using magnesium hydroxide (reagent manufactured by Wako Pure Chemical Industries, Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 81]

A dispersion was prepared in the same manner as in Example 60, except for using aluminum oxide (reagent manufactured by STREM CHEMICALS) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 82]

A dispersion was prepared in the same manner as in Example 60, except for using calcium silicate (reagent manufactured by Wako Pure Chemical Industries, Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 83]

A dispersion was prepared in the same manner as in Example 60, except for using talc Micro Ace P-4 (manufactured by NIPPON TALC Co., Ltd.) in Dispersion Preparation Example 10-1 in place of magnesium silicate in Dispersion Preparation Example 9-1. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 84]

An application fluid was prepared by stirring and mixing 15 parts (on a solid basis, hereinafter the same) of ODB2 prepared in Dispersion Preparation Example 1, 15 parts of UU and 1.5 parts of magnesium silicate from the co-heat-treated dispersion of UU with magnesium silicate prepared in Dispersion Preparation Example 13, 15 parts of D-8 prepared in Dispersion Preparation Example 3, 30 parts of BON prepared in Dispersion Preparation Example 11-2, 20 parts of calcium carbonate prepared in Dispersion Preparation Example 12, 10 parts of zinc stearate (Hidorin Z-7-30 manufactured by CHUKYO YUSHI Co., Ltd.), and 10 parts of polyvinyl alcohol (used as 15% aqueous solution of Poval PVA110 manufactured by Kuraray Co., Ltd.).

The evaluation of resistance to wet discoloration of a white portion of the sheet of thermal recording paper and measurement of whiteness of the dispersion composition were carried out in the same manner as in Example 60. Heat treatment conditions of temperature and time of the UU containing dispersion composition, and the evaluation results are summarized in Table 4.

### [Example 85]

An application fluid was prepared in the same manner as in Example 60, except that 60 g of the 20% dispersion of magnesium silicate was mixed to 600 g of the 40% dispersion of UU (UU solid content/magnesium silicate solid content = 100/5) in the preparation of a dispersion in Dispersion Preparation Example 10-1 of Example 60. A sheet sample of thermal recording paper thus prepared was evaluated for resistance to wet discoloration of a white portion. Whiteness of a dispersion composition was also measured in the same manner as in Example 60 except for using the co-heat-treated dispersion prepared above in Dispersion Preparation Example 10-1 at UU solid content/magnesium silicate solid content = 100/5. Heat treatment conditions of temperature and time of the UU containing dispersion composition, and the evaluation results are summarized in Table 4. Printing sensitivity of the sheet of thermal recording paper was rated as ○, and resistance to wet discoloration of a white portion of the sheet of thermal recording paper and whiteness of the dispersion composition were both rated as Δ.

### [Example 86]

An application fluid was prepared in the same manner as in Example 60, except that 540 g of the 20% dispersion of magnesium silicate was mixed to 600 g of the 40% dispersion of UU (UU solid content/magnesium silicate solid content = 100/45) in the preparation of a dispersion in Dispersion Preparation Example 10-1 of Example 60. A sheet sample of thermal recording paper thus prepared was evaluated for resistance to wet discoloration of a white portion. Whiteness of a dispersion composition was also measured in the same manner as in Example 60 except for using the co-heat-treated dispersion prepared above in Dispersion Preparation Example 10-1 at UU solid content/magnesium silicate solid content = 100/45. Heat treatment conditions of temperature and time of the UU containing dispersion composition, and the evaluation results are summarized in Table 4.

Printing sensitivity of the sheet of thermal recording paper was rated as Δ, resistance to wet discoloration of a white portion of the sheet of thermal recording paper as Δ, and whiteness of the dispersion composition as ○.

### [Example 87]

A dispersion was prepared in the same manner as in Example 60, except for omitting the heat treatment step of a dispersion of magnesium silicate. Resistance to wet discoloration of a white portion of the sheet of thermal recording paper was evaluated and whiteness of the dispersion composition was measured. Heat treatment conditions of temperature and time of the UU containing dispersion composition, and the evaluation results are summarized in Table 4.

### [Example 88]

An application fluid was prepared in the same manner as in Example 60, except for not carrying out co-heat treatment in Dispersion Preparation Example 10-1 used in Example 60. A sheet sample of thermal recording paper thus prepared was evaluated for resistance to wet discoloration of a white portion. Whiteness of dispersion composition was measured in the same manner as in Example 60 for a dispersion composition prepared as an evaluation sample without co-heat treatment in Dispersion Preparation Example 10-1. The evaluation of resistance to wet discoloration of a white portion of the thermal recording paper and measurement of whiteness of the dispersion composition were carried out in the same manner as in Example 60. Heat treatment conditions of temperature and time for the UU containing dispersion composition, and the evaluation results are summarized in Table 4.

### [Example 89]

An application fluid was prepared in the same manner as in Example 61, except for not carrying out co-heat treatment in Dispersion Preparation Example 10-1. A sheet sample of thermal recording paper thus prepared was evaluated for resistance to wet discoloration of a white portion. Whiteness of dispersion composition was measured in the same manner as in Example 61 for a dispersion composition prepared as an evaluation sample without co-heat treatment in Dispersion Preparation Example 10-1. The evaluation of resistance to wet discoloration of a white portion of the thermal recording paper and measurement of whiteness of the dispersion composition were carried out in the same manner as in Example 60. Heat treatment conditions of temperature and time for the UU containing dispersion composition, and the evaluation results are summarized in Table 4.

### [Example 90]

An application fluid was prepared in the same manner as in Example 62, except for not carrying out co-heat treatment in Dispersion Preparation Example 10-1 used in Example 62. A sheet sample of thermal recording paper thus prepared was evaluated for resistance to wet discoloration of a white portion. Whiteness of dispersion composition was measured in the same manner as in Example 62 for a dispersion composition prepared as an evaluation sample without co-heat treatment in Dispersion Preparation Example 10-1. The evaluation of resistance to wet discoloration of a white portion of the thermal recording paper and measurement of whiteness of the dispersion composition were carried out in the same manner as in Example 60. Heat treatment conditions of temperature and time for the UU containing dispersion composition, and the evaluation results are summarized in Table 4.

### [Example 91]

An application fluid was prepared in the same manner as in Example 63, except for not carrying out co-heat treatment in Dispersion Preparation Example 10-1 used in Example 63. A sheet sample of thermal recording paper thus prepared was evaluated for resistance to wet discoloration of a white portion. Whiteness of dispersion composition was measured in the same manner as in Example 63 for a dispersion composition prepared as an evaluation sample without co-heat treatment in Dispersion Preparation Example 10-1. The evaluation of resistance to wet discoloration of a white portion of the thermal recording paper and measurement of whiteness of the dispersion composition were carried out in the same manner as in Example 60. Heat treatment conditions of temperature and time for the UU containing dispersion composition, and the evaluation results are summarized in Table 4.

### [Example 92]

An application fluid was prepared in the same manner as in Example 64, except for using not carrying out co-heat treatment in Dispersion Preparation Example 10-1 used in Example 64. A sheet sample of thermal recording paper thus prepared was evaluated for resistance to wet discoloration of a white portion. Whiteness of dispersion composition was measured in the same manner as in Example 64 for a dispersion composition prepared as an evaluation sample without co-heat treatment in Dispersion Preparation Example 10-1. The evaluation of resistance to wet discoloration of a white portion of the thermal recording paper and measurement of whiteness of the dispersion composition were carried out in the same manner as in Example 60. Heat treatment conditions of temperature and time for the UU containing dispersion composition, and the evaluation results are summarized in Table 4.

### [Example 93]

An application fluid was prepared in the same manner as in Example 66 except for preparing a dispersion without co-heat treatment after mixing the dispersions of magnesium silicate and UU dispersed with the mixed dispersants of Metolose 60SH03 (hydroxypropylmethyl cellulose manufactured by Shin-Etsu Chemical Co., Ltd.) and Demol T (sodium β-naphthalenesulfonate formalin condensate manufactured by Kao Corporation) in Example 66. A sheet sample of thermal recording paper was prepared and evaluated for resistance to wet discoloration of a white portion. Whiteness of a dispersion composition was also measured in the same manner as in Example 66 for a dispersion composition prepared as an evaluation sample except for using a dispersion prepared without co-heat treatment after mixing the dispersions of magnesium silicate and UU dispersed with the mixed dispersants of Metolose 60SH03 and Demol T. Heat treatment conditions of temperature and time of the UU containing dispersion composition, and the evaluation results are summarized in Table 4.

### [Example 94]

An application fluid was prepared in the same manner as in Example 67 except for preparing a dispersion without co-heat treatment after mixing the dispersions of magnesium silicate and UU dispersed with the mixed dispersants of Metolose 60SH03 (hydroxypropylmethyl cellulose manufactured by Shin-Etsu Chemical Co., Ltd.) and Demol EP (polycarboxylic acid type polymer surfactant manufactured by Kao Corporation) in Example 67. A sheet sample of thermal recording paper was prepared and evaluated for resistance to wet discoloration of a white portion.

Whiteness of a dispersion composition was measured in the same manner as in Example 67 for a dispersion composition prepared as an evaluation sample except for using a dispersion prepared without co-heat treatment after mixing the dispersions of magnesium silicate and UU dispersed with the mixed dispersant of Metolose 60SH03 and Demol EP. Heat treatment conditions of temperature and time of the UU containing dispersion composition, and the evaluation results are summarized in Table 4.

### [Example 95]

A dispersion was prepared in the same manner as in Example 71, except for using a mixed dispersion of UU with magnesium silicate (Tomita AD-600 manufactured by Tomita Pharmaceutical Co., Ltd.) without co-heat treatment in Example 71. A sheet sample of thermal recording paper was evaluated for resistance to wet discoloration of a white portion.

Whiteness of a dispersion composition was measured in the same manner as in Example 71 except for preparing a mixed dispersion of UU with magnesium silicate without co-heat treatment. Heat treatment conditions of temperature and time of the UU containing dispersion composition, and the evaluation results are summarized in Table 4.

### [Example 96]

A dispersion was prepared in the same manner as in Example 74 except for using a mixed dispersion of UU with titanium oxide (KA15 manufactured by Titan Kogyo Co., Ltd.) without co-heat treatment in Example 74. A sheet sample of thermal recording paper was evaluated for resistance to wet discoloration of a white portion.

Whiteness of a dispersion composition was also measured in the same manner as in Example 74 except for preparing a mixed dispersion of UU with titanium oxide without co-heat treatment. Heat treatment conditions of temperature and time of the UU containing dispersion composition, and the evaluation results are summarized in Table 4.

### [Example 97]

A dispersion was prepared in the same manner as in Example 75 except for using a mixed dispersion of UU with calcium carbonate (Callite KT manufactured by Shiraishi Calcium Kaisha, Ltd.) without co-heat treatment in Example 75. A sheet sample of thermal recording paper was evaluated for resistance to wet discoloration of a white portion.

Whiteness of dispersion composition was also measured in the same manner as in Example 75 except for preparing a mixed dispersion of UU with calcium carbonate without co-heat treatment. Heat treatment conditions of temperature and time of the UU containing dispersion composition, and the evaluation results are summarized in Table 4.

### [Example 98]

A dispersion was prepared in the same manner as in Example 76 except for using a mixed dispersion of UU with calcium sulfate (reagent manufactured by Wako Pure Chemical Industries, Ltd.) without co-heat treatment in Example 76. A sheet sample of thermal recording paper was evaluated for resistance to wet discoloration of a white portion.

Whiteness of dispersion composition was also measured in the same manner as in Example 76 except for preparing a mixed dispersion of UU with calcium sulfate without co-heat treatment. Heat treatment conditions of temperature and time of the UU containing dispersion composition, and the evaluation results are summarized in Table 4.

### [Example 99]

A dispersion was prepared in the same manner as in Example 77 except for using a mixed dispersion of UU with magnesium oxide (reagent manufactured by Wako Pure Chemical Industries, Ltd.) without co-heat treatment in Example 77. A sheet sample of thermal recording paper was evaluated for resistance to wet discoloration of a white portion.

Whiteness of a dispersion composition was also measured in the same manner as in Example 77 except for preparing a mixed dispersion of UU with magnesium oxide without co-heat treatment. Heat treatment conditions of temperature and time of the UU containing dispersion composition, and the evaluation results are summarized in Table 4.

### [Example 100]

A dispersion was prepared in the same manner as in Example 78 except for using a mixed dispersion of UU with magnesium carbonate (Kinboshi manufactured by Konoshima Chemical Co. Ltd.) without co-heat treatment in Example 78. A sheet sample of thermal recording paper was evaluated for resistance to wet discoloration of a white portion.

Whiteness of a dispersion composition was also measured in the same manner as in Example 78 except for preparing a mixed dispersion of UU with magnesium carbonate without co-heat treatment. Heat treatment conditions of temperature and time of the UU containing dispersion composition, and the evaluation results are summarized in Table 4.

### [Example 101]

A dispersion was prepared in the same manner as in Example 79 except for using a mixed dispersion of UU with magnesium phosphate (reagent manufactured by Wako Pure Chemical Industries, Ltd.) without co-heat treatment in Example 79. A sheet sample of thermal recording paper was evaluated for resistance to wet discoloration of a white portion.

Whiteness of a dispersion composition was also measured in the same manner as in Example 79 except for preparing a mixed dispersion of UU with magnesium phosphate without co-heat treatment. Heat treatment conditions of temperature and time of the UU containing dispersion composition, and the evaluation results are summarized in Table 4.

### [Example 102]

A dispersion was prepared in the same manner as in Example 80 except for using a mixed dispersion of UU with magnesium hydroxide (reagent manufactured by Wako Pure Chemical Industries, Ltd.) without co-heat treatment in Example 80. A sheet sample of thermal recording paper was evaluated for resistance to wet discoloration of a white portion.

Whiteness of a dispersion composition was also measured in the same manner as in Example 80 except for preparing a mixed dispersion of UU with magnesium hydroxide without co-heat treatment. Heat treatment conditions of temperature and time of the UU containing dispersion composition, and the evaluation results are summarized in Table 4.

### [Example 103]

A dispersion was prepared in the same manner as in Example 81 except for using a mixed dispersion of UU with aluminum oxide (reagent manufactured by STREM CHEMICALS) without co-heat treatment in Example 81. A sheet sample of thermal recording paper was evaluated for resistance to wet discoloration of a white portion.

Whiteness of a dispersion composition was also measured in the same manner as in Example 81 except for preparing a mixed dispersion of UU with aluminum oxide without co-heat treatment. Heat treatment conditions of temperature and time of the UU containing dispersion composition, and the evaluation results are summarized in Table 4.

### [Example 104]

A dispersion was prepared in the same manner as in Example 82 except for using a mixed dispersion of UU with calcium silicate (reagent manufactured by Wako Pure Chemical Industries, Ltd.) without co-heat treatment in Example 82. A sheet sample of thermal recording paper was evaluated for resistance to wet discoloration of a white portion.

Whiteness of a dispersion composition was also measured in the same manner as in Example 82 except for preparing a mixed dispersion of UU with calcium silicate without co-heat treatment. Heat treatment conditions of temperature and time of the UU containing dispersion composition, and the evaluation results are summarized in Table 4.

### [Example 105]

A dispersion was prepared in the same manner as in Example 83 except for using a mixed dispersion of UU with talc Micro Ace P-4 (manufactured by NIPPON TALC Co., Ltd.) without co-heat treatment in Example 83. A sheet sample of thermal recording paper was evaluated for resistance to wet discoloration of a white portion.

Whiteness of a dispersion composition was also measured in the same manner as in Example 83 except for preparing a mixed dispersion of UU with talc Micro Ace P-4 without co-heat treatment. Heat treatment conditions of temperature and time of the UU containing dispersion composition, and the evaluation results are summarized in Table 4.

### [Example 106]

A dispersion was prepared in the same manner as in Example 84 except for using a co-ground dispersion of UU with magnesium silicate prepared in Dispersion Preparation Example 13 used in Example 84 without co-heat treatment. A sheet sample of thermal recording paper was evaluated for resistance to wet discoloration of a white portion.

Whiteness of a dispersion composition was also measured in the same manner as in Example 84 except for using a co-ground dispersion of UU with magnesium silicate prepared in Dispersion Preparation Example 13 without co-heat treatment. Heat treatment conditions of temperature and time of the UU containing dispersion composition, and the evaluation results are summarized in Table 4.

### [Comparative Example 3]

An application fluid was prepared by stirring and mixing 15 parts of ODB2 prepared in Dispersion Preparation Example 1, 15 parts of UU dispersion prepared in Dispersion Preparation Example 2, 15 parts of D-8 prepared in Dispersion Preparation Example 3, 30 parts of BON prepared in Dispersion Preparation Example 11-2, 20 parts of calcium carbonate prepared in Dispersion Preparation Example 12, 10 parts of zinc stearate (Hidorin Z-7-30 manufactured by CHUKYO YUSHI Co., Ltd.), and 10 parts of polyvinyl alcohol (used as 15% aqueous solution of Poval PVA110 manufactured by Kuraray Co., Ltd.).

This application fluid was applied by a bar coater to a sheet of base paper having a basis weight of 50 g/m². A sheet of thermal recording paper was obtained by drying the paper and treating it by a super calender. The amount of application fluid applied was 0.40 g/m² based on ODB2.

The evaluation of resistance to wet discoloration of a white portion of the sheet of thermal recording paper and measurement of whiteness of the dispersion composition were carried out in the same manner as in Example 60, except for using no-heated UU dispersion in Dispersion Preparation Example 2 in place of UU dispersion in Dispersion Preparation Example 10-1. The evaluation results are summarized in Table 4.

### [Comparative Example 4]

An application fluid was prepared by compounding in the same manner as in Comparative Example 3 except for using 40% dispersion of BPA in Dispersion Preparation Example 4 in place of 40% dispersion of D-8 in Dispersion Preparation Example 3 used in Comparative Example 3. A sheet sample of thermal recording paper was prepared from the application fluid, and evaluated for resistance to wet discoloration of a white portion. Whiteness of the dispersion composition was also measured for a dispersion composition prepared as an evaluation sample in the same manner as in Comparative Example 3 except for using 40% dispersion of BPA in Dispersion Preparation Example 4 in place of 40% dispersion of D-8 in Dispersion Preparation Example 3. The evaluation of resistance to wet discoloration of a white portion of the thermal recording paper and measurement of whiteness of the dispersion composition were carried out in the same manner as in Example 60. The evaluation results are summarized in Table 4.

### [Comparative Example 5]

An application fluid was prepared by compounding in the same manner as in Comparative Example 3 except for using 40% dispersion of BPS in Dispersion Preparation Example 5 in place of 40% dispersion of D-8 in Dispersion Preparation Example 3 used in Comparative Example 3. A sheet sample of thermal recording paper was prepared from the application fluid, and evaluated for resistance to wet discoloration of a white portion. Whiteness of the dispersion composition was also measured for a dispersion composition prepared as an evaluation sample in the same manner as in Comparative Example 3 except for using 40% dispersion of BPS in Dispersion Preparation Example 5 in place of 40% dispersion of D-8 in Dispersion Preparation Example 3. The evaluation of resistance to wet discoloration of a white portion of the thermal recording paper and measurement of whiteness of the dispersion composition were carried out in the same manner as in Example 60. The evaluation results are summarized in Table 4.

### [Comparative Example 6]

An application fluid was prepared by compounding in the same manner as in Comparative Example 3 except for using 40% dispersion of 2,4'-BPS in Dispersion Preparation Example 6 in place of 40% dispersion of D-8 in Dispersion Preparation Example 3 used in Comparative Example 3. A sheet sample of thermal recording paper was prepared from the application fluid, and evaluated for resistance to wet discoloration of a white portion. Whiteness of the dispersion composition was also measured for a dispersion composition prepared as an evaluation sample in the same manner as in Comparative Example 3 except for using 40% dispersion of 2,4'-BPS in Dispersion Preparation Example 6 in place of 40% dispersion of D-8 in Dispersion Preparation Example 3. The evaluation of resistance to wet discoloration of a white portion of the thermal recording paper and measurement of whiteness of the dispersion composition were carried out in the same manner as in Example 60. The evaluation results are summarized in Table 4.

### [Comparative Example 7]

An application fluid was prepared by compounding in the same manner as in Comparative Example 3 except for using 40% dispersion of TGSA in Dispersion Preparation Example 7 in place of 40% dispersion of D-8 in Dispersion Preparation Example 3 used in Comparative Example 3. A sheet sample of thermal recording paper was prepared from the application fluid, and evaluated for resistance to wet discoloration of a white portion. Whiteness of the dispersion composition was also measured for a dispersion composition prepared as an evaluation sample in the same manner as in Comparative Example 3 except for using 40% dispersion of TGSA in Dispersion Preparation Example 7 in place of 40% dispersion of D-8 in Dispersion Preparation Example 3. The evaluation of resistance to wet discoloration of a white portion of the thermal recording paper and measurement of whiteness of the dispersion composition were carried out in the same manner as in Example 60. The evaluation results are summarized in Table 4.

### [Comparative Example 8]

A dispersion of UU was prepared in the same manner as in Example 66 except for using a UU dispersion prepared with only mixed dispersants of Metolose 60SH03 (hydroxypropylmethyl cellulose manufactured by Shin-Etsu Chemical Co., Ltd.) and Demol T (sodium β-naphthalenesulfonate formalin condensate manufactured by Kao Corporation) without blending a magnesium silicate dispersion with the UU dispersion, and without conducting heat treatment. An application fluid was prepared by compounding this non-heated dispersion of UU in the same manner as in Example 60. A sheet sample of thermal recording paper was prepared from the application fluid, and evaluated for resistance to wet discoloration of a white portion. Whiteness of the dispersion composition was measured in the same manner as in Example 60 for a dispersion composition prepared as an evaluation sample in the same manner as in Example 60 except for using a dispersion of UU prepared with only the mixed dispersants of Metolose 60SH03 and Demol T without blending a magnesium silicate dispersion with the UU dispersion, and without conducting heat treatment. The evaluation of resistance to wet discoloration of a white portion of the thermal recording paper and measurement of whiteness of the dispersion composition were carried out in the same manner as in Example 60. The evaluation results are summarized in Table 4. [Comparative Example 9]

A dispersion of UU was prepared in the same manner as in Example 67 except for using a UU dispersion prepared with only mixed dispersants of Metolose 60SH03 (hydroxypropylmethyl cellulose manufactured by Shin-Etsu Chemical Co., Ltd.) and Demol EP (polycarboxylic acid type polymer surfactant manufactured by Kao Corporation) without blending a magnesium silicate dispersion with the UU dispersion, and without conducting heat treatment. An application fluid was prepared by compounding this non-heated dispersion of UU in the same manner as in Example 60. A sheet sample of thermal recording paper was prepared from the application fluid, and evaluated for resistance to wet discoloration of a white portion. Whiteness of the dispersion composition was measured in the same manner as in Example 60 for a dispersion composition prepared as an evaluation sample in the same manner as in Example 60 except for using a dispersion of UU prepared with only the mixed dispersants of Metolose 60SH03 and Demol EP without blending a magnesium silicate dispersion with the UU dispersion, and without conducting heat-treatment. The evaluation of resistance to wet discoloration of a white portion of the thermal recording paper and measurement of whiteness of the dispersion composition were carried out in the same manner as in Example 60. The evaluation results are summarized in Table 4.

### [Comparative Example 10]

An application fluid was prepared in the same manner as in Example 71 except for using a non heat-treated dispersion of UU prepared in Dispersion Preparation Example 2 without using magnesium silicate as a UU dispersion. A sheet sample of thermal recording paper was prepared from the application fluid, and evaluated for resistance to wet discoloration of a white portion.

Preparation of a dispersion composition and measurement of its whiteness was carried out in the same manner as in Example 71 except for using a non heat-treated dispersion of UU prepared in Dispersion Preparation Example 2 as a UU dispersion.

The evaluation results for the thermal recording paper and the measurement results for whiteness are shown in Table 4.

### [Comparative Example 11]

An application fluid was prepared in the same manner as in Example 60 except for using a dispersion prepared in Dispersion Preparation Example 10-1 of Example 60 where 600 g of 40% dispersion of UU was mixed with 840 g of 20% dispersion of magnesium silicate (UU solid content/magnesium silicate solid content = 100/70). A sheet sample of thermal recording paper was evaluated for resistance to wet discoloration of a white portion. Whiteness of the dispersion composition was also measured in the same manner as in Example 60 except for using the above described dispersion (co-heat-treated) prepared in Dispersion Preparation Example 10-1 as UU solid content/magnesium silicate solid content = 100/70. The printing sensitivity was rated as x, and the resistance to wet discoloration of a white portion was decreased to be rated as Δ because of the excess addition of the inorganic salt. Whiteness of the dispersion composition, however, was rated as ○. The results were summarized in Table 4.

**[Table 4-1]**

| | Dispersion of component (a) | | Dispersion of component (b) | | Dispersion of component (c) | |
|---|---|---|---|---|---|---|
| | Component | Dispersant | Component | Dispersant | Component | Dispersant |
| Example 60 | UU | L3266 | Magnesium silicate | L3266 | D-8 | L3266 |
| Example 61 | UU | L3266 | Magnesium silicate | L3266 | BPA | L3266 |
| Example 62 | UU | L3266 | Magnesium silicate | L3266 | BPS | L3266 |
| Example 63 | UU | L3266 | Magnesium silicate | L3266 | 2,4'-BPS | L3266 |
| Example 64 | UU | L3266 | Magnesium silicate | L3266 | TGSA | L3266 |
| Example 65 | UU | L3266 | Magnesium silicate | L3266 | D-8 | L3266 |
| Example 66 | UU | 60SH/T | Magnesium silicate | L3266 | D-8 | L3266 |
| Example 67 | UU | 60SH/EP | Magnesium silicate | L3266 | D-8 | L3266 |
| Example 68 | UU | L3266 | Magnesium silicate | L3266 | D-8 | L3266 |
| Example 69 | UU | L3266 | Magnesium silicate | L3266 | D-8 | L3266 |
| Example 70 | UU | L3266 | Magnesium silicate | L3266 | BPA | L3266 |
| Example 71 | UU | L3266 | Magnesium silicate | L3266 | POB | L3266 |
| Example 72 | UU | L3266 | F-85 | L3266 | D-8 | L3266 |
| Example 73 | UU | L3266 | DH48 | L3266 | D-8 | L3266 |
| Example 74 | UU | L3266 | TiO₂ | L3266 | D-8 | L3266 |
| Example 75 | UU | L3266 | CaCO₃ | L3266 | D-8 | L3266 |
| Example 76 | UU | L3266 | CaSO₄ | L3266 | D-8 | L3266 |
| Example 77 | UU | L3266 | MgO | L3266 | D-8 | L3266 |
| Example 78 | UU | L3266 | MgCO₃ | L3266 | D-8 | L3266 |
| Example 79 | UU | L3266 | Mg₃(PO₄)₂ | L3266 | D-8 | L3266 |
| Example 80 | UU | L3266 | Mg(OH)₂ | L3266 | D-8 | L3266 |
| Example 81 | UU | L3266 | Al₂O₃ | L3266 | D-8 | L3266 |
| Example 82 | UU | L3266 | Calcium silicate | L3266 | D-8 | L3266 |
| Example 83 | UU | L3266 | talc P-4 | L3266 | D-8 | L3266 |
| Example 84 | UU co-ground with magnesium silicate using L3266 as dispersant | | | | D-8 | L3266 |
| Example 85 | UU | L3266 | 5% Magnesium silicate to UU | L3266 | D-8 | L3266 |
| Example 86 | UU | L3266 | 45% Magnesium silicate to UU | L3266 | D-8 | L3266 |
| Example 87 | UU | L3266 | Magnesium silicate | L3266 | D-8 | L3266 |

| | | | | | | |
|---|---|---|---|---|---|---|
| Example 88 | UU | L3266 | Magnesium silicate | L3266 | D-8 | L3266 |
| Example 89 | UU | L3266 | Magnesium silicate | L3266 | BPA | L3266 |
| Example 90 | UU | L3266 | Magnesium silicate | L3266 | BPS | L3266 |
| Example 91 | UU | L3266 | Magnesium silicate | L3266 | 2,4'-BPS | L3266 |
| Example 92 | UU | L3266 | Magnesium silicate | L3266 | TGSA | L3266 |
| Example 93 | UU | 60SH/T | Magnesium silicate | L3266 | D-8 | L3266 |
| Example 94 | UU | 60SH/EP | Magnesium silicate | L3266 | D-8 | L3266 |
| Example 95 | UU | L3266 | Magnesium silicate | L3266 | POB | L3266 |
| Example 96 | UU | L3266 | TiO₂ | L3266 | D-8 | L3266 |
| Example 97 | UU | L3266 | CaCO₃ | L3266 | D-8 | L3266 |
| Example 98 | UU | L3266 | CaSO₄ | L3266 | D-8 | L3266 |
| Example 99 | UU | L3266 | MgO | L3266 | D-8 | L3266 |
| Example 100 | UU | L3266 | MgCO₃ | L3266 | D-8 | L3266 |
| Example 101 | UU | L3266 | Mg₃(PO₃)₂ | L3266 | D-8 | L3266 |
| Example 102 | UU | L3266 | Mg(OH)₂ | L3266 | D-8 | L3266 |
| Example 103 | UU | L3266 | Al₂O₃ | L3266 | D-8 | L3266 |
| Example 104 | UU | L3266 | Calcium silicate | L3266 | D-8 | L3266 |
| Example 105 | UU | L3266 | talc P-4 | L3266 | D-8 | L3266 |
| Example 106 | UU co-ground with magnesium silicate using L3266 as dispersant | | | | D-8 | L3266 |
| Comparative Example 3 | UU | L3266 | None | - | D-8 | L3266 |
| Comparative Example 4 | UU | L3266 | None | - | BPA | L3266 |
| Comparative Example 5 | UU | L3266 | None | - | BPS | L3266 |
| Comparative Example 6 | UU | L3266 | None | - | 2,4'-BPS | L3266 |
| Comparative Example 7 | UU | L3266 | None | - | TGSA | L3266 |
| Comparative Example 8 | UU | 60SH/T | None | - | D-8 | L3266 |

| | | | | | | |
|---|---|---|---|---|---|---|
| Comparative Example 9 | UU | 60SH/EP | None | - | D-8 | L3266 |
| Comparative Example 10 | UU | L3266 | None | - | POB | L3266 |
| Comparative Example 11 | UU | L3266 | 70% magnesium silicate to UU | L3266 | D-8 | L3266 |

**[Table 4-2]**

| | Blending ratio of developers | Heat treatment of each dispersion | | | Printing²⁾ | Resistance to wet discoloration of a white portion | Whiteness of dispersion composition⁴⁾ |
|---|---|---|---|---|---|---|---|
| | Component (a)/ component (c) (solid content ratio) | Dispersion component heat-treated¹⁾ | Heat treatment temperature [°C] | Heat treatment time [h] | Rating | Rating | Rating |
| Example 60 | 5/5 | (a) + (b) | 60°C | 48h | ○ | ○ | ○ |
| Example 61 | 5/5 | (a) + (b) | 60°C | 48h | ○ | ○ | Δ |
| Example 62 | 5/5 | (a) + (b) | 60°C | 48h | ○ | ○ | ○ |
| Example 63 | 5/5 | (a) + (b) | 60°C | 48h | ○ | ○ | ○ |
| Example 64 | 5/5 | (a) + (b) | 60°C | 48h | ○ | ○ | ○ |
| Example 65 | 5/5 | (a) + (b) | 70°C | 6h | ○ | ○ | ○ |
| Example 66 | 5/5 | (a) + (b) | 60°C | 48h | ○ | ○ | ○ |
| Example 67 | 5/5 | (a) + (b) | 60°C | 48h | ○ | ○ | ○ |
| Example 68 | 3/7 | (a) + (b) | 60°C | 48h | ○ | ○ | ○ |
| Example 69 | 7/3 | (a) + (b) | 60°C | 48h | ○ | ○ | ○ |
| Example 70 | 3/7 | (a) + (b) | 60°C | 48h | ○ | ○ | ○ |
| Example 71 | 5/5 | (a) + (b) | 60°C | 48h | ○ | ○ | ○ |
| Example 72 | 5/5 | (a) + (b) | 60°C | 48h | ○ | ○ | ○ |
| Example 73 | 5/5 | (a) + (b) | 60°C | 48h | ○ | ○ | ○ |
| Example 74 | 5/5 | (a) + (b) | 70°C | 6h | ○ | Δ | × |
| Example 75 | 5/5 | (a) + (b) | 70°C | 6h | ○ | ○ | ○ |
| Example 76 | 5/5 | (a) + (b) | 70°C | 6h | ○ | Δ | Δ |
| Example 77 | 5/5 | (a) + (b) | 70°C | 6h | ○ | ○ | ○ |
| Example 78 | 5/5 | (a) + (b) | 70°C | 6h | ○ | ○ | ○ |
| Example 79 | 5/5 | (a) + (b) | 70°C | 6h | ○ | ○ | ○ |
| Example 80 | 5/5 | (a) + (b) | 70°C | 6h | ○ | ○ | ○ |

| | | | | | | | |
|---|---|---|---|---|---|---|---|
| Example 81 | 5/5 | (a) + (b) | 70°C | 6h | ○ | Δ | Δ |
| Example 82 | 5/5 | (a) + (b) | 70°C | 6h | ○ | ○ | ○ |
| Example 83 | 5/5 | (a) + (b) | 70°C | 6h | ○ | ○ | ○ |
| Example 84 | 5/5 | (a) + (b), co-ground | 60°C | 48h | ○ | ○ | ○ |
| Example 85 | 5/5 | (a) + (b) | 60°C | 48h | ○ | Δ | Δ |
| Example 86 | 5/5 | (a) + (b) | 60°C | 48h | Δ | Δ | ○ |
| Example 87 | 5/5 | (a) | 60°C | 48h | ○ | Δ | Δ |
| Example 88 | 5/5 | None | - | - | ○ | × | × |
| Example 89 | 5/5 | None | - | - | ○ | × | × |
| Example 90 | 5/5 | None | - | - | Δ | × | × |
| Example 91 | 5/5 | None | - | - | ○ | × | × |
| Example 92 | 5/5 | None | - | - | ○ | × | × |
| Example 93 | 5/5 | None | - | - | ○ | × | × |
| Example 94 | 5/5 | None | - | - | ○ | × | × |
| Example 95 | 5/5 | None | - | - | ○ | × | × |
| Example 96 | 5/5 | None | - | - | ○ | × | × |
| Example 97 | 5/5 | None | - | - | ○ | × | × |
| Example 98 | 5/5 | None | - | - | Δ | × | × |
| Example 99 | 5/5 | None | - | - | ○ | × | × |
| Example 100 | 5/5 | None | - | - | ○ | × | × |
| Example 101 | 5/5 | None | - | - | ○ | × | × |
| Example 102 | 5/5 | None | - | - | ○ | × | × |
| Example 103 | 5/5 | None | - | - | ○ | × | × |
| Example 104 | 5/5 | None | - | - | ○ | × | × |
| Example 105 | 5/5 | None | - | - | ○ | × | × |
| Example 106 | 5/5 | None | - | - | ○ | × | × |

| | | | | | | | |
|---|---|---|---|---|---|---|---|
| Comparative Example 3 | 5/5 | None | - | - | ○ | ×× | ×× |
| Comparative Example 4 | 5/5 | None | - | - | ○ | ×× | ×× |
| Comparative Example 5 | 5/5 | None | - | - | Δ | ×× | ×× |
| Comparative Example 6 | 5/5 | None | - | - | ○ | ×× | ×× |
| Comparative Example 7 | 5/5 | None | - | - | ○ | ×× | ×× |
| Comparative Example 8 | 5/5 | None | - | - | ○ | ×× | ×× |
| Comparative Example 9 | 5/5 | None | - | - | ○ | ×× | ×× |
| Comparative Example 10 | 5/5 | None | - | - | ○ | ×× | ×× |
| Comparative Example 11 | 5/5 | (a) + (b) | 60°C | 48h | × | Δ | ○ |

### Evaluation method and standards

1) When a dispersion of each component was heat-treated separately, each component was comma-delimited in notation as (a), (b).
   When a dispersion of each component was mixed and heat-treated, each component was joined with plus (+) in notation as (a) + (b).
2) Printing sensitivity: The color optical density of image when generated by 0.51 mj/dot of printing energy.
   ○: color optical density not less than 1.0
   Δ: color optical density not less than 0.9 and below 1.0
   ×: color optical density below 0.9
3) The effect of improving resistance to wet discoloration of a white portion was evaluated from the variation of whiteness (ΔW), obtained by measuring whiteness (W) of an unprinted portion (a white portion) of a sheet of thermal recording paper before and after the humidity test (in which the sheet was allowed to stand at 40°C for 24 hours in an atmosphere at a relative humidity of 90%).
   ○: excellent effect for improving resistance to wet discoloration of a white portion (ΔW is 5 or less 5)
   Δ: fair effect for improving resistance to wet discoloration of a white portion (ΔW is greater than 5 and 10 or less)
   ×: poor effect for improving resistance to wet discoloration of a white portion (ΔW is greater than 10 and 20 or less)
   ××: no effect for improving resistance to wet discoloration of a white portion (ΔW is greater than 20)
4) Performance of a coloring inhibitor was evaluated from the variation of whiteness (ΔW) obtained by measuring whiteness (W) of the dispersion before and after the acceleration test.
   ○: excellent effect of inhibiting reduction of whiteness (ΔW is 7 or less)
   Δ: fair effect of inhibiting reduction of whiteness (ΔW is greater than 7 and 15 or less)
   ×: poor effect of inhibiting reduction of whiteness (ΔW is greater than 15 and 25 or less)
   ××: no effect of inhibiting reduction of whiteness (ΔW is greater than 25)
5) 60SH/T: Metolose 60SH03 and Demol T were used in combination in a solid content ratio of 1/1
6) 60SH/EP: Metolose 60SH03 and Demol EP were used in combination in a solid content of ratio 1/1

### [Example 107]

An application fluid was prepared in the same manner as in Example 60 except for preparing a co-heat-treated dispersion at a temperature of 40°C for a time of 168 hours in Dispersion Preparation Example 10-1 used in Example 60. A sheet sample of thermal recording paper was evaluated for resistance to wet discoloration of a white portion. Whiteness of the dispersion composition was also measured for a dispersion composition prepared as an evaluation sample in the same manner as in Example 60. The results of evaluation for resistance of the thermal recording paper and measurement for whiteness of the dispersion are summarized in Table 5 (Tables 5-1 and 5-2).

### [Example 108]

An application fluid was prepared in the same manner as in Example 60 except for preparing a co-heat-treated dispersion at a temperature of 90°C for a time of 3 hours in Dispersion Preparation Example 10-1 used in Example 60. A sheet sample of thermal recording paper was evaluated for resistance to wet discoloration of a white portion. Whiteness of the dispersion composition was also measured for the dispersion composition prepared as an evaluation sample in the same manner as in Example 60. The results of evaluation of the sheet of thermal recording paper and measurement for whiteness are summarized in Table 5. The printing sensitivity was decreased a little, but the resistance to wet discoloration of a white portion and whiteness of the dispersion composition were both rated as ○.

### [Comparative Example 12]

An application fluid was prepared in the same manner as in Example 60 except for preparing a dispersion at a temperature of 30°C for a time of 168 hours in Dispersion Preparation Example 10-1 used in Example 60. A sheet sample of thermal recording paper was evaluated for resistance to wet discoloration of a white portion. Whiteness of the dispersion composition was also measured for the dispersion composition prepared as an evaluation sample in the same manner as in Example 60. The results of evaluation of the sheet of thermal recording paper and measurement for whiteness are summarized in Table 5. Even the heat treatment at 30°C for the prolonged treatment time resulted in a rating of x, both for resistance to wet discoloration of a white portion and whiteness of the dispersion composition.

### [Comparative Example 13]

An application fluid was prepared in the same manner as in Example 60 except for preparing a dispersion (co-heat-treated) at a temperature of 95°C for a time of 3 hours in Dispersion Preparation Example 10-1 used in Example 60. A sheet sample of thermal recording paper was evaluated for resistance to wet discoloration of a white portion. Whiteness of the dispersion composition was also measured for the dispersion composition prepared as an evaluation sample in the same manner as in Example 60. The results of evaluation of the sheet of thermal recording paper and measurement for whiteness are summarized in Table 5. The heat treatment at 95°C undesirably caused a noticeable decrease in printing sensitivity, although whiteness of the dispersion composition was good.

**[Table 5-1]**

| | Dispersion of component (a) | | Dispersion of component (b) | | Dispersion of component (c) | |
|---|---|---|---|---|---|---|
| | Component | Dispersant | Component | Dispersant | Component | Dispersant |
| Example 60 | UU | L3266 | magnesium silicate | L3266 | D-8 | L3266 |
| Example 65 | UU | L3266 | magnesium silicate | L3266 | D-8 | L3266 |
| Example 107 | UU | L3266 | magnesium silicate | L3266 | D-8 | L3266 |
| Example 108 | UU | L3266 | magnesium silicate | L3266 | D-8 | L3266 |
| Comparative Example 12 | UU | L3266 | magnesium silicate | L3266 | D-8 | L3266 |
| Comparative Example 13 | UU | L3266 | magnesium silicate | L3266 | D-8 | L3266 |

**[Table 5-2]**

| | Blending ratio of developers | Heat treatment of each dispersion | | | Printing²⁾ | Resistance to background fogging by moisture³⁾ | Whiteness of dispersion composition⁴⁾ |
|---|---|---|---|---|---|---|---|
| | Component (a)/ component (c) (solid content ratio) | Dispersion Heat treatment component temperature heat-treated¹⁾ [°C] | | Heat treatment time [h] | Rating | Rating | Rating |
| Example 60 | 5/5 | (a) + (b) | 60°c | 48h | ○ | ○ | ○ |
| Example 65 | 5/5 | (a) + (b) | 70°C | 6h | ○ | ○ | ○ |
| Example 107 | 5/5 | (a) + (b) | 40°C | 168h | ○ | ○ | ○ |
| Example 108 | 5/5 | (a) + (b) | 90°C | 3h | ○~Δ | ○ | ○ |
| Comparative Example 12 | 5/5 | (a) + (b) | 30°C | 168h | ○ | × | × |
| Comparative Example 13 | 5/5 | (a) + (b) | 95°C | 3h | × | ○ | ○ |

### Evaluation method and standards

1) When a dispersion of each component was heat-treated separately, each component was comma-delimited in notation as (a), (b).
   When a dispersion of each component was mixed and heat-treated, each component was joined with plus (+) in notation as (a) + (b).
2) Printing sensitivity: The color optical density of image when generated by 0.51 mj/dot of printing energy.
   ○: color optical density not less than 1.0
   Δ: color optical density not less than 0.9 and below 1.0
   ×: color optical density below 0.9
3) The effect of improving resistance to wet discoloration of a white portion was evaluated from the variation of whiteness (ΔW), obtained by measuring whiteness (W) of an unprinted portion (a white portion) of a sheet of thermal recording paper before and after the humidity test (in which the sheet was allowed to stand at 40°C for 24 hours in an atmosphere at a relative humidity of 90%).
   ○: excellent effect of improving resistance to wet discoloration of a white portion (ΔW is 5 or less)
   Δ: fair effect of improving resistance to wet discoloration of a white portion (ΔW is greater than 5 and 10 or less)
   ×: poor effect of improving resistance to wet discoloration of a white portion (ΔW is greater than 10 and 20 or less)
   ××: no effect of improving resistance to wet discoloration of a white portion (ΔW is greater than 20)
4) Performance of a coloring inhibitor was evaluated from the variation of whiteness (ΔW) obtained by measuring whiteness (W) of the dispersion before and after the acceleration test.
   ○: excellent effect of inhibiting reduction of whiteness (ΔW is 7 or less)
   Δ: fair effect of inhibiting reduction of whiteness (ΔW is greater than 7 and 15 or less)
   ×: poor effect of inhibiting reduction of whiteness (ΔW is greater than 15 and 25 or less)
   ××: no effect of inhibiting reduction of whiteness (ΔW is greater than 25)

### [Example 109]

An application fluid was prepared in the same manner as in Example 60 except for preparing a co-heat-treated dispersion prepared in Example 60. A sheet sample of thermal recording paper was evaluated for resistance to wet discoloration of a white portion. A dispersion composition prepared as an evaluation sample in the same manner as in Example 60 was subjected to a coloring acceleration test at 50°C for 3 hours to measure whiteness of the dispersion composition. Heat treatment conditions of temperature and time for the UU containing dispersion, and the evaluation results are summarized in Table 6 (Table 6-1 and 6-2). In spite of the increase in temperature by 10°C in the coloring acceleration condition, whiteness of the dispersion composition was rated as ○, showing a sufficient coloring inhibition effect.

### [Example 110]

An application fluid was prepared in the same manner as in Example 60 except for preparing only a UU dispersion heat-treated at 60°C for 48 hours without adding magnesium silicate in Example 67. A sheet sample of thermal recording paper was evaluated for resistance to wet discoloration of a white portion. A dispersion composition prepared as an evaluation sample in the same manner as in Example 60 was subjected to coloring acceleration test conditions at 40°C for 3 hours and then whiteness of the dispersion composition was measured. The results of evaluation are summarized in Table 6. The printing sensitivity, resistance to wet discoloration of a white portion and whiteness of the dispersion composition were all rated as ○, showing a sufficient coloring inhibition effect.

### [Example 111]

An application fluid was prepared in the same manner as in Example 60 except for preparing only a UU dispersion heat-treated at 60°C for 48 hours without adding magnesium silicate in Example 67. A sheet sample of thermal recording paper was evaluated for resistance to wet discoloration of a white portion. A dispersion composition prepared as an evaluation sample in the same manner as in Example 60 was subjected to coloring acceleration test conditions at 50°C for 3 hours and then whiteness of the dispersion composition was measured. The results of evaluation are summarized in Table 6. The printing sensitivity and resistance to wet discoloration of a white portion were both rated as ○. Whiteness of the dispersion composition was rated as Δ, showing a little decrease of whiteness of the dispersion composition because of an increase in temperature by 10°C in the coloring acceleration conditions.

### [Example 112]

An application fluid was prepared in the same manner as in Example 60 except for preparing only a UU dispersion heat-treated at 60°C for 48 hours without adding magnesium silicate in Example 66. A sheet sample of thermal recording paper was evaluated for resistance to wet discoloration of a white portion. A dispersion composition prepared as an evaluation sample in the same manner as in Example 60 was subjected to a coloring acceleration test conditions at 40°C for 3 hours and then whiteness of the dispersion composition was measured. The results of evaluation are summarized in Table 6. The printing sensitivity was rated as ○, resistance to wet discoloration of a white portion as Δ and whiteness of the dispersion composition as Δ.

**[Table 6-1]**

| | Dispersion of component (a) | | Dispersion of component (b) | | Dispersion of component (c) | |
|---|---|---|---|---|---|---|
| | Component | Dispersant | Component | Dispersant | Component | Dispersant |
| Example 60 | UU | L3266 | magnesium silicate | L3266 | D-8 | L3266 |
| Example 109 | UU | L3266 | magnesium silicate | L3266 | D-8 | L3266 |
| Example 67 | UU | 60SH/EP | magnesium silicate | L3266 | D-8 | L3266 |
| Example 110 | UU | 60SH/EP | None | - | D-8 | L3266 |
| Example 111 | UU | 60SH/EP | None | - | D-8 | L3266 |
| Example 112 | UU | 60SH/T | None | - | D-8 | L3266 |
| Comparative Example 9 | UU | 60SH/EP | None | - | D-8 | L3266 |

**[Table 6-2]**

| | Blending ratio of developers | Heat treatment of each dispersion | | | Printing sensitivity²⁾ | Resistance to wet discoloration of a white portion | Evaluation of changing over time of whiteness of dispersion composition | |
|---|---|---|---|---|---|---|---|---|
| | Component (a)/ component (c) (solid content ratio) | Dispersion component heat-treated¹⁾ | Heat treatment temperature [°C] | Heat treatment time [h] | | | Standing temperature and time | Rating of whiteness |
| Example 60 | 5/5 | (a) + (b) | 60°C | 48h | ○ | ○ | 40°C, 3h | ○ |
| Example 109 | 5/5 | (a) + (b) | 60°C | 48h | ○ | ○ | 50°C, 3h | ○ |
| Example 67 | 5/5 | (a) + (b) | 60°C | 48h | ○ | ○ | 40°C, 3h | ○ |
| Example 110 | 5/5 | (a) | 60°C | 48h | ○ | ○ | 40°C, 3h | ○ |
| Example 111 | 5/5 | (a) | 60°C | 48h | ○ | ○ | 50°C, 3h | Δ |
| Example 112 | 5/5 | (a) | 60°C | 48h | ○ | × | 40°C, 3h | Δ |
| Comparative Example 9 | 5/5 | None | - | - | ○ | ×× | 40°C, 3h | × × |

### Evaluation method and standards

1) When a dispersion of each component was heat-treated separately, each component was comma-delimited in notation as (a), (b).
   When a dispersion of each component was mixed and heat-treated, each component was joined with plus (+) in notation as (a) + (b).
2) Printing sensitivity: The color optical density of image when generated by 0.51 mj/dot of printing energy.
   ○: color optical density not less than 1.0
   Δ: color optical density not less than 0.9 and below 1.0
   ×: color optical density below 0.9
3) The effect of improving resistance to wet discoloration of a white portion was evaluated from the variation of whiteness (ΔW), obtained by measuring whiteness (W) of an unprinted portion (a white portion) of a sheet of thermal recording paper before and after the humidity test (in which the sheet was allowed to stand at 40°C for 24 hours in an atmosphere at a relative humidity of 90%).
   ○: excellent effect for improving resistance to wet discoloration of a white portion (ΔW is 5 or less 5)
   Δ: fair effect for improving resistance to wet discoloration of a white portion (ΔW is greater than 5 and 10 or less)
   ×: poor effect for improving resistance to wet discoloration of a white portion (ΔW is greater than 10 and 20 or less)
   ××: no effect for improving resistance to wet discoloration of a white portion (ΔW is greater than 20)
4) Performance of a coloring inhibitor was evaluated from the variation of whiteness (ΔW) obtained by measuring whiteness (W) of the dispersion before and after the acceleration test.
   ○: excellent effect of inhibiting reduction of whiteness (ΔW is 7 or less)
   Δ: fair effect of inhibiting reduction of whiteness (ΔW is greater than 7 and 15 or less)
   ×: poor effect of inhibiting reduction of whiteness (ΔW is greater than 15 and 25 or less)
   ××: no effect of inhibiting reduction of whiteness (ΔW is greater than 25)
5) 60SH/T: Metolose 60SH03 and Demol T were used in combination in a solid content ratio of 1/1
6) 60SH/EP: Metolose 60SH03 and Demol EP were used in combination in a solid content of ratio 1/1

### [Example 113]

140 g of a 38.5% (solid basis) dispersion of UU was obtained by grinding and dispersing at a rotation speed of 2000 rpm for 3 hours in a 400 ml vessel by means of a sand grinder (manufactured by AIMEX Co., Ltd.) a mixture of 52.5 g of a developer UU, 48.75 g of a 5.38% (solid basis) Metolose 60SH03 (hydroxypropylmethylcellose manufactured by Shin-Etsu Chemical Co., Ltd.), 48.75 g of a 5.38% (solid basis) Demol T (sodium β-naphthalenesulfonate formalin condensate manufactured by Kao Corporation) and 150 ml (measured by graduated cylinder) of glass beads (φ 0.6 mm). Heat treatment of this UU dispersion was carried out by placing the dispersion in a 200 ml flask, maintaining the flask at an internal temperature of 60°C using a water bath and stirring at 250 rpm for 12 hours by a three-one motor. Average particle size of the UU dispersion after heat treatment was 0.46 µm.

A 38.5 solid% dispersion of a dye 3-butylamino-6-methyl-7-anilinofluoran (hereinafter referred to as ODB2) was obtained by grinding and dispersing at a rotation speed of 2000 rpm for 3 hours in a 400 ml vessel by means of a sand grinder (manufactured by AIMEX Co., Ltd.) a mixture of 52.5 g of ODB2, 97.5 g of a 5.38% (solid basis) aqueous solution of Gohseran L3266 (sulfonic acid-modified PVA manufactured by Nippon Synthetic Chemical Industry Co., Ltd.) and 150 ml (measured by graduated cylinder) of glass beads (φ 0.6 mm). Heat treatment of this ODB2 dispersion was carried out by placing the dispersion in a 200 ml flask, maintaining the flask at an internal temperature of 40°C using a water bath and stirring at 250 rpm for 24 hours by a three-one motor. Average particle size of the ODB2 dispersion after heat treatment was 0.49 µm.

A 38.5% (solid basis) dispersion of a sensitizer diphenylsulfone (hereinafter referred to as DP) was obtained by grinding and dispersing at a rotation speed of 2000 rpm for 3 hours in a 400 ml vessel by means of a sand grinder (manufactured by AIMEX Co., Ltd.) a mixture of 52.5 g of DP, 97.5 g of a 5.38 solid% aqueous solution of Gohseran L3266 (sulfonic acid-modified PVA manufactured by Nippon Synthetic Chemical Industry Co., Ltd.) and 150 ml (measured by graduated cylinder) of glass beads (φ 0.6 mm). Average particle size of the DP dispersion thus obtained was 0.60 µm.

A dispersion of calcium carbonate was obtained by stirring and dispersing 10 g of calcium carbonate with 30 g of water by a stirrer.

Evaluation of resistance to wet discoloration of a white portion of thermal recording paper was carried out by the following procedure.

An application fluid was obtained by stirring and mixing 30 parts by weight on a dry solid basis of the UU dispersion, 15 parts by weight on a dry solid basis of the ODB2 dispersion, 30 parts by weight on a dry solid basis of the DP dispersion, 20 parts by weight on a dry solid basis of the calcium carbonate dispersion, 10 parts by weight on a dry solid basis of a 16 wt% dispersion of zinc stearate, and 10 parts by weight on a dry solid basis of 15 wt% polyvinyl alcohol.

A sheet of thermal recording paper was obtained by applying the application fluid to a sheet of base paper having a basis weight of 50 g/m² and treating with a super calender after drying. The amount of application fluid applied was 0.40 g/m² based on ODB2.

Resistance to wet discoloration of a white portion for the sheet of thermal recording paper thus prepared was evaluated by printing the sheet at an applied voltage of 24 V at a pulse width of 1.5 msec and measuring whiteness of the white portion after standing at 40°C for 24 hours in an atmosphere at a relative humidity of 90%. The variation of whiteness (ΔW) was rated as ○.

Whiteness of a dispersion composition was evaluated by the following procedure.

A evaluation sample was prepared by diluting the ODB2 dispersion to 10% based on wt% of ODB2 and the UU dispersion to 20% based on wt% of UU, and mixing the two dispersion to make a mixed dispersion in which the weight ratio of ODB2/UU was 1/2. Whiteness of this dispersion composition thus prepared was measured, then the composition was allowed to stand at 40°C for 3 hours, and whiteness was measured again. The variation of whiteness before and after the heat treatment (Δ whiteness) was calculated. The evaluation result of whiteness for the dispersion composition was rated as ○. The results are summarized in Table 7 (Tables 7-1 and 7-2).

### [Example 114]

A dispersion of UU was prepared in the same manner as in Example 113 except for using 48.75 g of an aqueous solution of Demol SSL (special sodium aromatic sulfonate formalin condensate manufactured by Kao Corporation) as a dispersant in place of Metolose 60SH03. Performance of the sheet of thermal recording paper and whiteness of the dispersion composition were evaluated. The average particle size of the UU dispersion obtained was 0.49 µm. Resistance to wet discoloration of a white portion for the sheet was rated as ○, and whiteness of the dispersion composition also as ○. The results are summarized in Table 7.

### [Example 115]

A dispersion of UU was prepared in the same manner as in Example 113 except for using 97.5 g of a 5.38 solid% aqueous solution of Metolose 60SH03 alone as a dispersant. Performance of the sheet of thermal recording paper and whiteness of the dispersion composition were evaluated. The average particle size of the UU dispersion obtained was 0.47 µm. Resistance to wet discoloration of a white portion for the sheet was rated as ○, and whiteness of the dispersion composition also as ○. The results are summarized in Table 7.

### [Example 116]

A dispersion of UU was prepared in the same manner as in Example 115 except for using 97.5 g of a 5.38% (solid basis) aqueous solution of Demol T alone as a dispersant. Performance of the sheet of thermal recording paper and whiteness of the dispersion composition were evaluated. The average particle size of the UU dispersion obtained was 0.47 µm. Resistance to wet discoloration of a white portion for the sheet was rated as ○, and whiteness of the dispersion composition also as ○. The results are summarized in Table 7.

### [Example 117]

A dispersion of UU was prepared in the same manner as in Example 115 except for using 97.5 g of a 5.38% (solid basis) aqueous solution of Demol EP (special polycarboxylic acid type polymer surfactant manufactured by Kao Corporation) alone as a dispersant. Performance of the sheet of thermal recording paper and whiteness of the dispersion composition were evaluated. The average particle size of the UU dispersion obtained was 0.47 µm. Resistance to wet discoloration of a white portion for the sheet was rated as ○, and whiteness of the dispersion composition also as ○. The results are summarized in Table 7.

### [Example 118]

A dispersion of UU was prepared in the same manner as in Example 115 except for using 97.5 g of a 5.38% (solid basis) aqueous solution of HPC-L (hydroxypropylcellulose manufactured by Nippon Soda Co., Ltd.) alone as a dispersant. Performance of the sheet of thermal recording paper and whiteness of the dispersion composition was evaluated. The average particle size of the UU dispersion obtained was 0.46 µm. Resistance to wet discoloration of a white portion for the sheet was rated as ○, and whiteness of the dispersion composition as Δ. The results are summarized in Table 7.

### [Example 119]

A dispersion of UU was prepared in the same manner as in Example 115 except for using 97.5 g of a 5.38% (solid basis) aqueous solution of Cellogen 6A (sodium carboxy methylcellulose manufactured by Dai-ichi Kogyo Seiyaku Co., Ltd.) alone as a dispersant and heat-treating the UU dispersion at 50°C for 24 hours. Performance of the sheet of thermal recording paper and whiteness of the dispersion composition were evaluated. The average particle size of the UU dispersion obtained was 0.48 µm. Resistance to wet discoloration of a white portion for the sheet was rated as ○, and whiteness of the dispersion composition also as ○. The results are summarized in Table 7.

### [Example 120]

A dispersion of UU was prepared in the same manner as in Example 115 except for using 97.5 g of a 5.38 solid% aqueous solution of Kuraray Poval PVA-103 (fully saponified type with the degree of polymerization of 300 manufactured by Kuraray Co., Ltd.) alone as a dispersant. Performance of the sheet of thermal recording paper and whiteness of the dispersion composition were evaluated. The average particle size of the UU dispersion obtained was 0.46 µm. Resistance to wet discoloration of a white portion for the sheet was rated as ○, and whiteness of the dispersion composition as Δ. The results are summarized in Table 7.

### [Example 121]

A dispersion of UU was prepared in the same manner as in Example 115 except for using 97.5 g of a 5.38 solid% aqueous solution of surfactant DKS Discoat N-14 (special ammonium polycarboxylate manufactured by Dai-ichi Kogyo Seiyaku Co., Ltd.) alone as a dispersant. Performance of the sheet of thermal recording paper and whiteness of the dispersion composition were evaluated. The average particle size of the UU dispersion obtained was 0.47 µm. Resistance to wet discoloration of a white portion for the sheet was rated as ○, and whiteness of the dispersion composition as Δ. The results are summarized in Table 7.

### [Example 122]

A dispersion was prepared in the same manner as in Example 113 except for using BON in place of DP as a sensitizer. Performance of the sheet of thermal recording paper and whiteness of the dispersion composition were evaluated. The average particle size of the BON dispersion obtained was 0.50 µm. Resistance to wet discoloration of a white portion for the sheet was rated as ○, and whiteness of the dispersion composition also as ○. The results are summarized in Table 7.

### [Example 123]

A dispersion was prepared in the same manner as in Example 113 except for using HS3520 in place of DP as a sensitizer. Performance of the sheet of thermal recording paper and whiteness of the dispersion composition were evaluated. The average particle size of the HS3520 dispersion obtained was 0.53 µm. Resistance to wet discoloration of a white portion for the sheet was rated as ○, and whiteness of the dispersion composition also as ○. The results are summarized in Table 7.

### [Example 124]

A dispersion was prepared in the same manner as in Example 113 except for using p-benzylbiphenyl (hereinafter referred to as PBBP) in place of DP as a sensitizer. Performance of the sheet of thermal recording paper and whiteness of the dispersion composition were evaluated. The average particle size of the PBBP dispersion obtained was 0.51 µm. Resistance to wet discoloration of a white portion for the sheet was rated as ○, and whiteness of the dispersion composition also as ○. The results are summarized in Table 7.

### [Example 125]

A dispersion was prepared in the same manner as in Example 113 except for using 3-diethylamino-6-methyl-7-anilinofluoran (hereinafter referred to as ODB) in place of ODB2 as a dye. Performance of the sheet of thermal recording paper and whiteness of the dispersion composition were evaluated. The average particle size of the ODB dispersion obtained was 0.47 µm. Resistance to wet discoloration of a white portion for the sheet was rated as ○, and whiteness of the dispersion composition as Δ. The results are summarized in Table 7.

### [Example 126]

A dispersion was prepared in the same manner as in Example 113 except for using 3-isoamylethylamino-6-methyl-7-anilinofluoran (hereinafter referred to as S205) in place of ODB2 as a dye. Performance of the sheet of thermal recording paper and whiteness of the dispersion composition were evaluated. The average particle size of the S205 dispersion obtained was 0.47 µm. Resistance to wet discoloration of a white portion for the sheet was rated as Δ, and whiteness of the dispersion composition as Δ. The results are summarized in Table 7.

### [Example 127]

A dispersion was prepared in the same manner as in Example 113 except for using 3-ethyl-p-tolylamino-6-methyl-7-anilinofluoran (hereinafter referred to as ETAC) in place of ODB2 as a dye. Performance of the sheet of thermal recording paper and whiteness of the dispersion composition were evaluated. The average particle size of the ETAC dispersion obtained was 0.47 µm. Resistance to wet discoloration of a white portion for the sheet was rated as Δ, and whiteness of the dispersion composition as Δ. The results are summarized in Table 7.

### [Example 128]

A dispersion was prepared in the same manner as in Example 113 except for using 3-dibutylamino-7-(o-fluoro)-anilinofluoran (hereinafter referred to as TG21) in place of ODB2 as a dye. Performance of the sheet of thermal recording paper and whiteness of the dispersion composition were evaluated. The average particle size of the TG21 dispersion obtained was 0.48 µm. Resistance to wet discoloration of a white portion for the sheet was rated as ○, and whiteness of the dispersion composition as Δ. The results are summarized in Table 7.

### [Example 129]

A dispersion of UU was prepared in the same manner as in Example 113 except for using 48.75 g of an aqueous solution of Gohseran L3266 (sulfonic acid-modified PVA manufactured by Nippon Synthetic Chemical Industry Co., Ltd.) as a dispersant in place of Metolose 60SH03. Performance of the sheet of thermal recording paper and whiteness of the dispersion composition were evaluated. The average particle size of the UU dispersion obtained was 0.49 µm. Resistance to wet discoloration of a white portion for the sheet was rated as ○, and whiteness of the dispersion composition as Δ. The results are summarized in Table 7.

### [Example 130]

A dispersion of UU was prepared in the same manner as in Example 113 except for using 48.75 g of an aqueous solution of DKS Discoat N-14 (special ammonium polycarboxylate manufactured by Dai-ichi Kogyo Seiyaku Co., Ltd.) as a dispersant in place of Demol T. Performance of the sheet of thermal recording paper and whiteness of the dispersion composition were evaluated. The average particle size of the UU dispersion obtained was 0.49 µm. Resistance to wet discoloration of a white portion for the sheet was rated as ○, and whiteness of the dispersion composition also as ○. The results are summarized in Table 7.

### [Example 131]

A dispersion of UU was prepared in the same manner as in Example 115 except for using 97.5 g of a 5.38% (solid basis) aqueous solution of Metolose SM15 (methylcellulose manufactured by Shin-Etsu Chemical Co., Ltd.) alone as a dispersant, and heat-treating the UU dispersion at 50°C for 24 hours. Performance of the sheet of thermal recording paper and whiteness of the dispersion composition were evaluated. The average particle size of the UU dispersion obtained was 0.47 µm. Resistance to wet discoloration of a white portion for the sheet was rated as ○, and whiteness of the dispersion composition also as ○. The results are summarized in Table 7.

### [Example 132]

A dispersion was prepared in the same manner as in Example 113 except for using 3-dipentylamino-6-methyl-7-anilinofluoran (hereinafter referred to as BLACK305) in place of ODB2 as a dye. Performance of the sheet of thermal recording paper and whiteness of the dispersion composition were evaluated. The average particle size of the BLACK305 dispersion obtained was 0.49 µm. Resistance to wet discoloration of a white portion for the sheet was rated as ○, and whiteness of the dispersion composition also as ○. The results are summarized in Table 7.

### [Comparative Example 14]

A dispersion of UU was prepared in the same manner as in Example 113 except for not carrying out heat treatment of the dispersion. Performance of the sheet of thermal recording paper and whiteness of the dispersion composition were evaluated. The average particle size of the UU dispersion obtained was 0.46 µm. Resistance to wet discoloration of a white portion for the sheet was rated as ○, and whiteness of the dispersion composition as Δ. The results are summarized in Table 7.

### [Comparative Example 15]

A dispersion of UU was prepared in the same manner as in Example 114 except for not carrying out heat treatment of the dispersion. Performance of the sheet of thermal recording paper and whiteness of the dispersion composition were evaluated. The average particle size of the UU dispersion obtained was 0.49 µm. Resistance to wet discoloration of a white portion for the sheet was rated as Δ, and whiteness of the dispersion composition as Δ. The results are summarized in Table 7.

### [Comparative Example 16]

A dispersion of UU was prepared in the same manner as in Example 117 except for not carrying out heat treatment of the dispersion. Performance of the sheet of thermal recording paper and whiteness of the dispersion composition were evaluated. The average particle size of the UU dispersion obtained was 0.48 µm. Resistance to wet discoloration of a white portion for the sheet was rated as ○, and whiteness of the dispersion composition as Δ. The results are summarized in Table 7.

**[Table 7-1]**

| | Dispersion of component (a) | | Dispersion of component (c) | | | |
|---|---|---|---|---|---|---|
| | Component | Dispersant | Heat treatment temperature [°C] | Heat treatment time [h] | Component | Dispersant |
| Example 113 | UU | 60SH/T | 60°C | 12h | None | - |
| Example 114 | UU | SSL/T | 60°C | 12h | None | - |
| Example 115 | UU | 60SH | 60°C | 12h | None | - |
| Example 116 | UU | Demol T | 60°C | 12h | None | - |
| Example 117 | UU | Demol EP | 60°C | 12h | None | - |
| Example 118 | UU | HPC-L | 60°C | 12h | None | - |
| Example 119 | UU | Cellogen 6A | 50°C | 24h | None | - |
| Example 120 | UU | PVA103 | 60°C | 12h | None | - |
| Example 121 | UU | N14 | 60°C | 12h | None | - |
| Example 122 | UU | 60SH/T | 60°C | 12h | None | - |
| Example 123 | UU | 60SH/T | 60°C | 12h | None | - |
| Example 124 | UU | 60SH/T | 60°C | 12h | None | - |
| Example 125 | UU | 60SH/T | 60°C | 12h | None | - |
| Example 126 | UU | 60SH/T | 60°C | 12h | None | - |
| Example 127 | UU | 60SH/T | 60°C | 12H | None | - |
| Example 128 | UU | 60SH/T | 60°C | 12h | None | - |
| Example 129 | UU | L3266/SSL | 60°C | 12h | None | - |
| Example 130 | UU | 60SH/N14 | 60°C | 12h | None | - |
| Example 131 | UU | SM15 | 50°C | 24h | None | - |
| Example 132 | UU | 60SH/T | 60°C | 12h | None | - |
| Comparative Example 14 | UU | 60SH/T | - | - | None | - |
| Comparative Example 15 | UU | SSL/T | - | - | None | - |
| Comparative Example 16 | UU | Demol EP | - | - | None | - |

**[Table 7-2]**

| | Blending ratio of developers | Dye dispersion | | | Sensitizer | Resistance to wet discoloration of a white portion | Whiteness of dispersion composition⁴⁾ |
|---|---|---|---|---|---|---|---|
| | Component (a)/ component (c) (solid content ratio) | Component | Dispersant | Heat treatment of dispersion | | Rating | Rating |
| Example 113 | None | ODB2 | L3266 | 40°C × 24h | DP | ○ | ○ |
| Example 114 | None | ODB2 | L3266 | 40°C × 24h | DP | ○ | ○ |
| Example 115 | None | ODB2 | L3266 | 40°C × 24h | DP | ○ | ○ |
| Example 116 | None | ODB2 | L3266 | 40°C × 24h | DP | ○ | ○ |
| Example 117 | None | ODB2 | L3266 | 40°C × 24h | DP | ○ | ○ |
| Example 118 | None | ODB2 | L3266 | 40°C × 24h | DP | ○ | Δ |
| Example 119 | None | ODB2 | L3266 | 40°C × 24h | DP | ○ | ○ |
| Example 120 | None | ODB2 | L3266 | 40°C × 24h | DP | ○ | Δ |
| Example 121 | None | ODB2 | L3266 | 40°C × 24h | DP | ○ | × |
| Example 122 | None | ODB2 | L3266 | 40°C × 24h | BON | ○ | ○ |
| Example 123 | None | ODB2 | L3266 | 40°C × 24h | HS3520 | ○ | ○ |
| Example 124 | None | ODB2 | L3266 | 40°C × 24h | PBBP | ○ | ○ |
| Example 125 | None | ODB | L3266 | 40°C × 24h | DP | ○ | × |
| Example 126 | None | S205 | L3266 | 40°C × 24h | DP | Δ | Δ |
| Example 127 | None | ETAC | L3266 | 40°C × 24h | DP | Δ | Δ |
| Example 128 | None | TG21 | L3266 | 40°C × 24h | DP | ○ | Δ |
| Example 129 | None | ODB2 | L3266 | 40°C × 24h | DP | ○ | Δ |
| Example 130 | None | ODB2 | L3266 | 40°C × 24h | DP | ○ | ○ |
| Example 131 | None | ODB2 | L3266 | 40°C × 24h | DP | ○ | ○ |
| Example 132 | None | BLACK305 | L3266 | 40°C × 24h | DP | ○ | ○ |
| Comparative Example 14 | None | ODB2 | L3266 | 40°C × 24h | DP | ○ | Δ |
| Comparative Example 15 | None | ODB2 | L3266 | 40°C × 24h | DP | Δ | Δ |
| Comparative Example 16 | None | ODB2 | L3266 | 40°C × 24h | DP | ○ | Δ |

### Evaluation method and standards

1) When a dispersion of each component was heat-treated separately, each component was comma-delimited in notation as (a), (b).
   When a dispersion of each component was mixed and heat-treated, each component was joined with plus (+) in notation as (a) + (b).
2) Printing sensitivity: The color optical density of image when generated by 0.51 mj/dot of printing energy.
   ○: color optical density not less than 1.0
   Δ: color optical density not less than 0.9 and below 1.0
   ×: color optical density below 0.9
3) The effect of improving resistance to wet discoloration of a white portion was evaluated from the variation of whiteness (ΔW), obtained by measuring whiteness (W) of an unprinted portion (a white portion) of a sheet of thermal recording paper before and after the humidity test (in which the sheet was allowed to stand at 40°C for 24 hours in an atmosphere at a relative humidity of 90%).
   ○: excellent effect for improving resistance to wet discoloration of a white portion (ΔW is 5 or less 5)
   Δ: fair effect for improving resistance to wet discoloration of a white portion (ΔW is greater than 5 and 10 or less)
   ×: poor effect for improving resistance to wet discoloration of a white portion (ΔW is greater than 10 and 20 or less)
   ××: no effect for improving resistance to wet discoloration of a white portion (ΔW is greater than 20)
4) Performance of a coloring inhibitor was evaluated from the variation of whiteness (ΔW) obtained by measuring whiteness (W) of the dispersion before and after the acceleration test.
   ○: excellent effect of inhibiting reduction of whiteness (ΔW is 7 or less)
   Δ: fair effect of inhibiting reduction of whiteness (ΔW is greater than 7 and 15 or less)
   ×: poor effect of inhibiting reduction of whiteness (ΔW is greater than 15 and 25 or less)
   ××: no effect of inhibiting reduction of whiteness (ΔW is greater than 25)
5) 60SH/T: Metolose 60SH03 and Demol T were used in combination in a solid content ratio of 1/1
6) 60SH/EP: Metolose 60SH03 and Demol EP were used in combination in a solid content of ratio 1/1
7) SSL/T: Demol SSL and Demol T were used in combination at a solid content ratio of 1/1
8) L3266/SSL: L3266 and Demol SSL were used in combination at a solid content ratio of 1/1
9) 60SH/N14: Metolose 60SH03 and DKS Discoat N14 were used in combination at a solid content ratio of 1/1

### [Comparative Example 17]

Preparation of a UU dispersion was attempted in the same manner as in Example 113 except for using 97.5 g of a 5.38 solid% aqueous solution of Quartamin 24P (lauryltrimethylammonium chloride manufactured by Kao Corporation) alone as a dispersant, but coagulation arose in mixing with ODB2 dispersion, and so a good dispersion composition was not obtained.

### [Comparative Example 18]

Preparation of a UU dispersion was attempted in the same manner as in Example 113 except for using 97.5 g of a 5.38 solid% aqueous solution of Sanizol C (alkylbenzylmethylammonium chloride manufactured by Kao Corporation) alone as a dispersant, but coagulation arose in mixing with ODB2 dispersion, and so a good dispersion composition was not obtained.

### INDUSTRIAL APPLICABILITY

The present invention is preferable as a recording material, especially as a thermal recording material, comprising a urea-urethane compound, which can improve the lowering with time of the whiteness of an application fluid comprising a colorless or pale dye precursor and a urea-urethane compound, and improve the discoloration of a white portion of a thermal recording material manufactured using the above described application fluid, in particular discoloration of a white portion under a high-humidity condition (resistance to wet discoloration of a white portion).

## Claims

1. A composition used for preparation of a color development system, comprising a component (a) comprising at least one urea-urethane compound having one or more urea groups and one or more urethane groups in the same molecule, the component (a) being dispersed in a liquid medium and subjected to heat treatment.

2. The composition according to Claim 1, wherein the component (a) urea-urethane compound is at least one compound represented by any of the following formulas (I) to (VI): 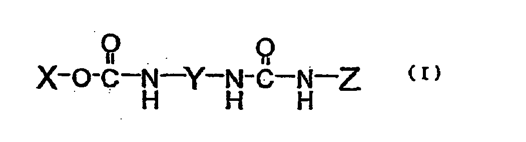 wherein each of X, Y, and Z represents an aromatic compound residue, a heterocyclic compound residue, or an aliphatic compound residue; and each residue may have a substituent; 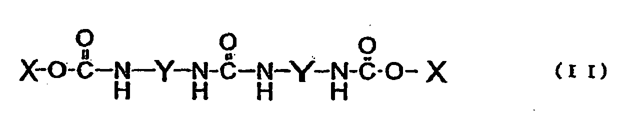 wherein each of X and Y represents an aromatic compound residue, a heterocyclic compound residue, or an aliphatic compound residue; and each residue may have a substituent; 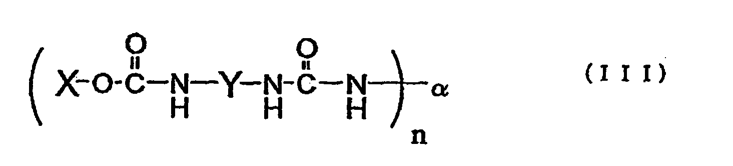 wherein each of X and Y represents an aromatic compound residue, a heterocyclic compound residue, or an aliphatic compound residue, α represents a residue having a valence of 2 or greater, n represents an integer of 2 or greater, and each residue may have a substituent; 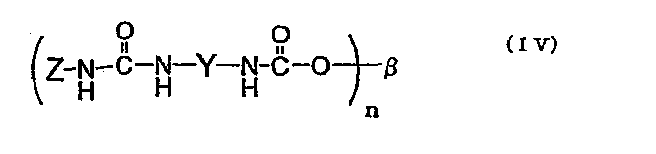 wherein each of Z and Y represents an aromatic compound residue, a heterocyclic compound residue, or an aliphatic compound residue, β represents a residue having a valence of 2 or greater, n represents an integer of 2 or greater, and each residue may have a substituent; 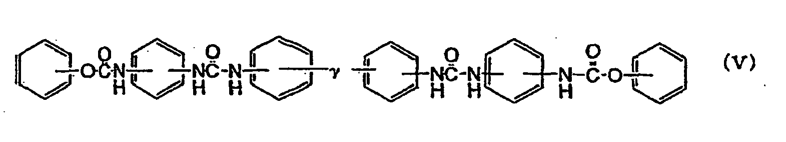 wherein a hydrogen atom on a benzene ring may be substituted with an aromatic compound residue, a heterocyclic compound residue, or an aliphatic compound residue, each residue may have a substituent, γ represents -SO₂-, -O-, -(S)ₙ-, -(CH₂)ₙ-, -CO-, -CONH-, any of the following formula (a), or a direct bond, and n is 1 or 2; and 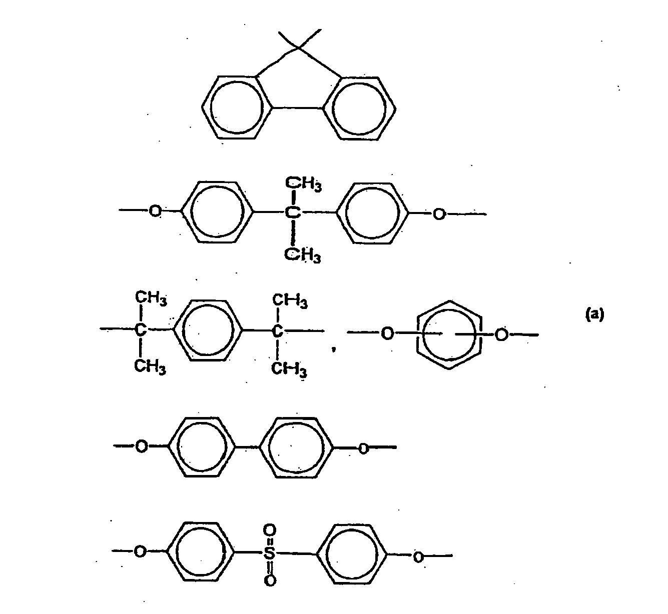 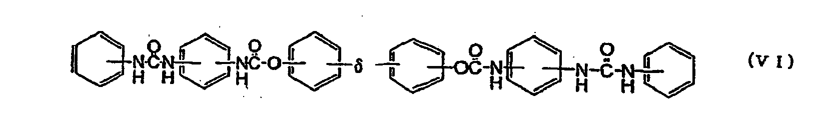 wherein a hydrogen atom on a benzene ring may be substituted with an aromatic compound residue, a heterocyclic compound residue, or an aliphatic compound residue, each residue may have a substituent, δ represents any of -SO₂-, -O-, -(S)ₙ-, -(CH₂)ₙ-, -CO-, -CONH-, -NH-, -CH(COOR₁)-, -C(CF₃)₂-, -CR₂R₃- or a direct bond; R₁, R₂, and R₃ represent an alkyl group having 1 to 20 carbon atoms, and n is 1 or 2).

3. The composition according to Claim 1 or 2, comprising a dispersion obtained by dispersing the component (a) urea-urethane compound in a liquid medium and heating the mixture at 40°C or more.

4. A composition used for preparation of a color development system comprising a dispersion in which a component (a) comprising at least one urea-urethane compound having one or more urea groups and one or more urethane groups in the same molecule, and a coloring inhibitor component (b), which is at least one compound selected from a silicate, a carbonate, a sulfate, a phosphate, a metal oxide, a metal hydroxide, a hindered phenol compound, a hindered amine compound, and an acetoacetic acid derivative are dispersed in a liquid medium.

5. The composition according to Claim 4, which is obtained by subjecting at least one of the component (a) and the component (b) to heat treatment.

6. The composition according to Claim 4, wherein the component (a) urea-urethane compound is at least one compound represented by the following formulas (I) to (VI): 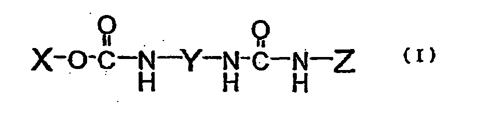 wherein each of X, Y, and Z represents an aromatic compound residue, a heterocyclic compound residue, or an aliphatic compound residue, and each residue may have a substituent; 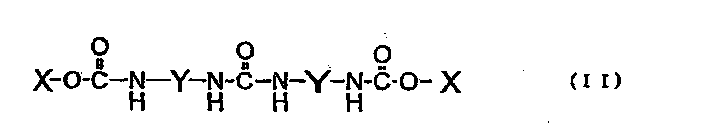 wherein each of X and Y represents an aromatic compound residue, a heterocyclic compound residue, or an aliphatic compound residue, and each residue may have a substituent; 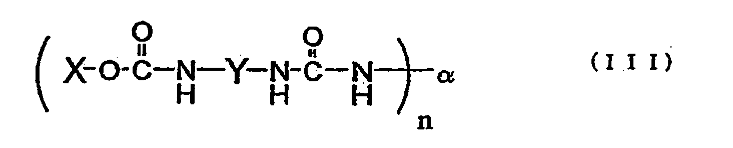 wherein each of X and Y represents an aromatic compound residue, a heterocyclic compound residue, or an aliphatic compound residue, α represents a residue having a valence of 2 or greater, n represents an integer of 2 or greater, and each residue may have a substituent; 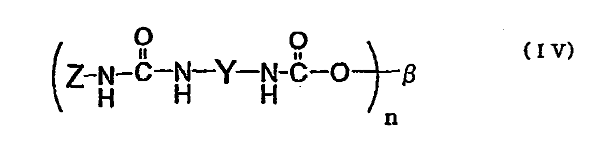 wherein Z and Y represent an aromatic compound residue, a heterocyclic compound residue, or an aliphatic compound residue, β represents a residue having a valence of 2 or greater, n represents an integer of 2 or greater, and each residue may have a substituent; 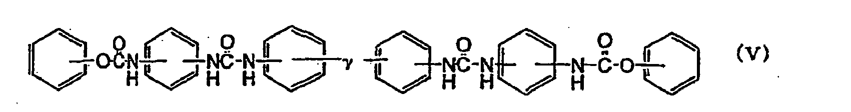 wherein a hydrogen atom on a benzene ring may be substituted with an aromatic compound residue, a heterocyclic compound residue, or an aliphatic compound residue, each residue may have a substituent, γ represents any of -SO₂-, -O-, -(S)ₙ-, -(CH₂)ₙ-, -CO-, -CONH-, a compound of any of the following formulas (a), or a direct bond, and n is 1 or 2; and 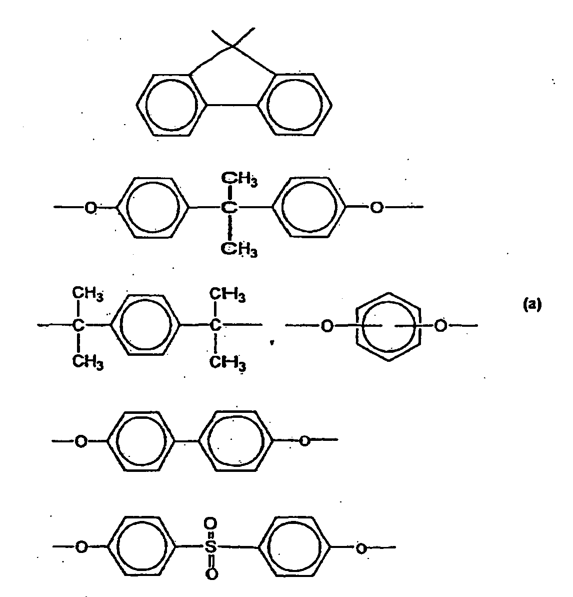 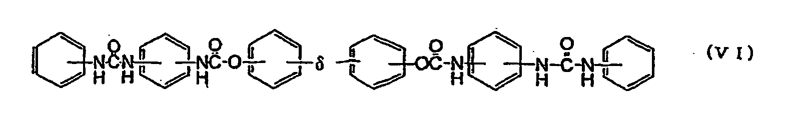 wherein a hydrogen atom on a benzene ring may be substituted with an aromatic compound residue, a heterocyclic compound residue, or an aliphatic compound residue, each residue may have a substituent; δ represents any of -SO₂-, -O-, -(S)ₙ-, -(CH₂)ₙ-, -CO-, -CONH-, -NH-, -CH(COOR₁)-, -C(CF₃)₂-, -CR₂R₃- or a direct bond, R₁, R₂, and R₃ represent an alkyl group having 1 to 20 carbon atoms, and n is 1 or 2.

7. The composition according to any one of Claims 4 to 6, wherein the component (b) coloring inhibitor is at least one member selected from magnesium silicate, calcium silicate, magnesium carbonate, calcium carbonate, calcium sulfate, magnesium phosphate, 2,2'-methylenebis(4,6-di-t-butylphenyl)sodium phosphate, magnesium oxide, aluminum oxide, titanium oxide, magnesium hydroxide, 1,1,3-tris(2-methyl-4-hydroxy-5-cycloheylphenyl)butane, 1,1,3-tris(2-methyl-4-hydroxy-5-t-butylphenyl)butane, tris(2,6-dimethyl-4-t-butyl-3-hydroxybenzyl)isocyanurate, acetoacetic acid anilide, and acetoacetic acid m-xylidide.

8. The composition according to any one of Claims 1 to 7, further comprising an acidic developer component (c) which is at least one compound selected from a phenol derivative, an aromatic carboxylic acid derivative or a metal salt compound thereof, a salicylic acid derivative or a metal salt compound thereof, an N,N-diarylthiourea derivative, and a sulfonylurea derivative.

9. The composition according to Claim 8, wherein the phenol derivative of the acidic developer component (c) is at least one member selected from 2,2-bis(4-hydroxyphenyl)propane, bis(4-hydroxyphenyl) sulfone, 4-isopropyloxyphenyl-4'-hydroxyphenylsulfone, 2,4'-dihydroxydiphenylsulfone, bis(3-allyl-4-hydroxyphenyl) sulfone, and benzyl 4-hydroxybenzoate.

10. The composition according to any one of Claims 4 to 9, comprising a dispersion obtained by dispersing the component (a) urea-urethane compound in a liquid medium and heating the mixture at 40°C or more.

11. The composition according to any one of Claims 4 to 10, comprising a dispersion be obtained by dispersing the coloring inhibitor component (b) in a liquid medium and heating the mixture at 40°C or more.

12. The composition according to any one of Claims 4 to 11, comprising a dispersion obtained by dispersing the component (a) urea-urethane compound in a liquid medium and heating the mixture at 40°C or more, and a dispersion obtained by dispersing the coloring inhibitor component (b) in a liquid medium and heating the mixture at 40°C or more.

13. The composition according to any one of Claims 4 to 12, wherein the content of the coloring inhibitor component (b) is 1 part by mass or more and less than 50 parts by mass per 100 parts by mass of the urea-urethane compound component (a).

14. The composition according to any one of Claims 1 to 13, wherein the urea-urethane compound component (a) and/or the coloring inhibitor component (b) are dispersed using at least one dispersant selected from the group consisting of a nonionic water-soluble polymer compound, an anionic water-soluble polymer compound, an anionic surfactant, a nonionic surfactant and an amphoteric surfactant.

15. The composition according to Claim 14, wherein the urea-urethane compound component (a) and/or the coloring inhibitor component (b) are dispersed using at least one dispersant selected from the group consisting of a nonionic or anionic water-soluble polymer compound selected from a polyvinyl alcohol derivative and a cellulose derivative, and an anionic surfactant.

16. The composition according to Claim 15, wherein the polyvinyl alcohol derivative is sulfonic acid-modified polyvinyl alcohol, the cellulose derivative is hydroxypropylmethyl cellulose and the anionic surfactant is at least one member selected from a metal salt of β naphthalenesulfonic acid formalin condensate and a polycarboxylic acid derivative surfactant.

17. A recording material comprising a color development layer containing a composition according to any one of Claims 1 to 16 arranged on a substrate.

18. The recording material according to Claim 17, wherein the recording material is a thermal recording material.
